(19) Europäisches Patentamt
European Patent Office
Office européen des brevets

(11) **EP 3 816 896 B1**

(12) **FASCICULE DE BREVET EUROPEEN**

(45) Date de publication et mention
de la délivrance du brevet:
**06.09.2023 Bulletin 2023/36**

(21) Numéro de dépôt: **20202699.3**

(22) Date de dépôt: **20.10.2020**

(51) Classification Internationale des Brevets (IPC):
**G06Q 10/08** (2023.01)   **B65G 43/10** (2006.01)
**G06Q 10/063** (2023.01)

(52) Classification Coopérative des Brevets (CPC):
**G06Q 10/08; G06Q 10/063;** B65G 43/10

(54) **PROCÉDÉ DE FUSION, AU SEIN D'UN ENTREPÔT LOGISTIQUE, DE K FLUX ENTRANTS DE CHARGES UTILES EN UN FLUX SORTANT**

VERFAHREN ZUM ZUSAMMENFÜHREN VON K NUTZLASTZUFLÜSSEN IN EINEN AUSSTRÖMENDEN ABFLUSS INNERHALB EINES LOGISTIKLAGERS

METHOD FOR MERGING, IN A LOGISTICS WAREHOUSE, K INCOMING FLOWS OF PAYLOADS IN ONE OUTGOING FLOW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2019 FR 1912231**
**15.11.2019 FR 1912777**

(43) Date de publication de la demande:
**05.05.2021 Bulletin 2021/18**

(73) Titulaires:
• **Savoye**
**21000 Dijon (FR)**
• **Université de Technologie de Compiègne**
**60203 Compiègne Cedex (FR)**

(72) Inventeurs:
• **VACHER, Blandine**
**03340 NEUILLY-LE-RE AL (FR)**
• **PIETROWICZ, Stephane**
**21220 Fixin (FR)**
• **JOUGLET, Antoine**
**60200 COMPIEGNE (FR)**
• **NACE, Dritan**
**60200 COMPIEGNE (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2013/150080**

**Description**

## 1. DOMAINE TECHNIQUE

Depuis quelques années, l'activité intra-logistique est très fortement impactée par un changement drastique du comportement de la société de consommation et par le développement de nouvelles technologies. L'augmentation constante de la demande oblige les acteurs de la logistique à se montrer de plus en plus réactifs et compétitifs. L'amélioration et l'optimisation des solutions d'acheminements, de stockage et de préparation de commandes sont devenues essentielles. L'entreprise SAVOYE, constructeur d'équipements pour la préparation de commandes, spécialisée dans l'automatisation et l'informatisation des entrepôts logistiques, est en processus continu d'amélioration et d'évaluation de ses solutions.

La gestion d'un entrepôt logistique inclut l'approvisionnement, la réception et la gestion des flux et des stocks. Améliorer la durée de trajet d'une commande revient souvent à minimiser sa durée de convoyage. 50% de la durée de préparation d'une commande est consacré à cette opération de convoyage, d'après l'article suivant : De Koster, R., Le-Duc, T., and Roodbergen, K.J., "Design and control of warehouse order picking: a literature review" (2007), European Journal of Operational Research 182(2), 481-501. Il faut donc en premier lieu s'intéresser au problème principal des entrepôts : celui de l'optimisation des flux convoyés afin d'assurer un taux de production le plus élevé possible. Nous allons nous intéresser, plus particulièrement, aux intersections de flux de charges (colis, bacs, containers, etc.). L'objectif est de maximiser le débit du flux final (aussi appelé flux sortant), regroupant divers flux entrants provenant d'endroits différents.

## 2. PROBLEMATIQUE

### 2.1 OBJET

Dans un entrepôt logistique, il arrive en effet que plusieurs flux entrants de charges (aussi appelés flux d'injection) se regroupent pour former un seul flux sortant (aussi appelé flux de sortie). Un flux de charges correspond à une liste de charges séquencées défilant les unes derrière les autres. Ces flux peuvent être transportés par un convoyeur, similaire à un tapis roulant qui déplace dans un sens donné toutes les charges qui se trouvent sur lui en file indienne. Dans la suite de la description, les convoyeurs transportant les flux entrants sont appelés allées et le convoyeur transportant le flux de sortie est appelé collecteur.

Les flux d'injection sont répartis tout au long du collecteur. La position des charges composant ces flux d'injection sont connus et identifiables. Pour chaque flux d'injection, nous pouvons choisir l'instant où sa première charge est injectée sur le collecteur. Une répartition séquentielle des flux d'injection permet à une allée située en amont du flux du collecteur de bénéficier d'un nombre de possibilités d'injection plus important qu'une allée située en aval. En effet, cette dernière ne peut déverser ses charges que lorsqu'il y a de la place, laissée libre par les allées plus en amont.

Afin d'éviter un déséquilibre d'injection de charges entre les flux entrants, nous souhaitons définir en avance l'ordre des charges une fois toutes placées sur le collecteur (appelé séquence finale ou encore séquence de sortie).

L'idée directrice est de pousser le flux du collecteur à la capacité mécanique maximale du collecteur. Pour y arriver, il convient de limiter le nombre d'espace vide de ce dernier. Nous proposons une démarche fondée sur les bonnes dates d'injection des charges, pour constituer un flux final ne comportant pas (ou bien le moins possible) d'espaces vides. Ces dates d'injection sont définies afin de respecter toute séquence finale réalisable, c'est-à-dire respectant les ordres FIFO (First In First Out, « premier entré premier sorti ») des flux d'injection.

La solution proposée et décrite par la suite, pour répondre à cette problématique, est nouvelle et inventive au vu des modèles de problèmes d'ordonnancement connus, notamment :

- Runwey Cheng, Mitsuo Gen and Yasuhiro Tsujimura, A tutorial survey of Job Shop scheduling problems using genetic algorithls --- Partie I. Représentation , Ashikaga Institute of Technology, Ashikaga 326, Japan; et
- Imran Ali Chaudhry and Abid Ali Khan, A research survey: review of flexible job shop scheduling techniques, International transactions in opération research, 2015

### 2.2 EXEMPLE D'APPLICATION

Pour résumer, le système étudié est composé de flux d'injection (flux entrants) transportés par des allées (ensemble de convoyeurs) et d'un collecteur (autre convoyeur) regroupant ces flux d'injection en un seul flux final (flux sortant). Le pilotage proposé et décrit par la suite s'applique notamment, mais non exclusivement, à un collecteur de type « convoyeur continu sans accumulation » ou à un collecteur de type « trieurs » (« belt tray », « tilt tray », etc.). Ce pilotage permet de respecter n'importe quelle séquence finale réalisable. Nous donnons donc la solution correspondant au débit optimal par rapport à une séquence finale donnée. Si aucune séquence finale n'est souhaitée, nous savons obtenir le débit maximal sur un collecteur complètement libre pour regrouper ces flux d'injection.

Cependant, dans certains cas, des obstructions peuvent déjà occuper des places sur le collecteur. Par obstruction d'un pas temporel du collecteur, on entend notamment, mais non exclusivement, une charge perturbatrice provenant d'un flux perturbateur, différent des flux d'injection. Une obstruction n'est pas obligatoirement une charge perturbatrice mais peut également être un endroit du collecteur qui est abimé, réservé, etc. Dans ces cas, la gestion des flux d'injection doit prendre en compte de telles obstructions.

Dans le cas particulier où les charges perturbatrices proviennent d'un ou plusieurs flux perturbateurs, on distingue deux types de flux perturbateurs. Un flux perturbateur est dit « subi » si l'injection sur le collecteur des charges perturbatrices le composant ne peut pas être contrôlée par le système de pilotage (ces charges perturbatrices arrivent sans tenir compte de l'environnement). Par opposition, un flux perturbateur est dit « contrôlé » si l'injection sur le collecteur des charges perturbatrices le composant peut être contrôlée par le système de pilotage. Notre proposition de pilotage supporte ces différents types de flux perturbateurs (subis ou contrôlés) et donne une solution optimale incluant la gestion des flux perturbateurs à contrôler.

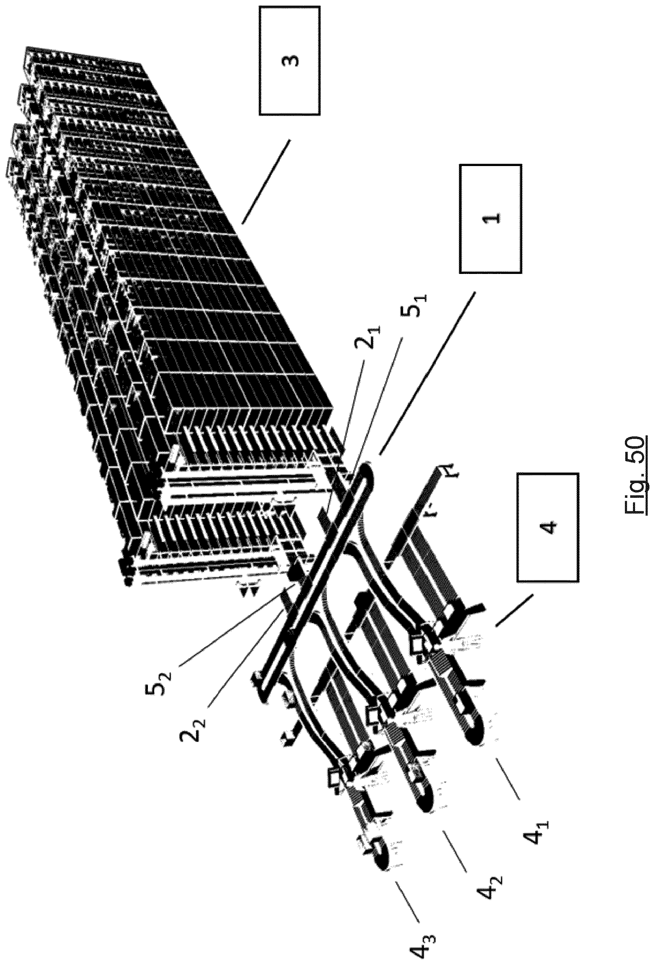

Un exemple (illustratif et non limitatif) d'application concret se trouve dans la solution GTP Intelis PTS (Goods To Person Intelis Picking Tray System) proposée par l'entreprise SAVOYE. C'est une solution globale de préparation de commande automatisée dans laquelle un système automatisé de stockage et déstockage à navettes (appelé Intelis PTS) 3 permet d'alimenter à très haute cadence des postes de préparation (appelés postes GTP) 4. Le rôle du système automatisé (Intelis PTS) est donc de stocker, faire entrer et sortir des charges comprenant des articles nécessaires au bon remplissage des commandes au niveau des postes GTP. Le système automatisé est composé de plusieurs rangées de stockage (aussi appelées « allées PTS », ou « PTS aisles » en anglais, mais à ne pas confondre avec les allées (au sens de convoyeurs) transportant les flux entrants dans le contexte de la présente invention, voir explications ci-après), chacune composées de navettes et d'ascenseur permettant le va-et-vient de ces charges sur des convoyeurs respectivement d'entrée $5_1$, $5_2$ et de sortie $2_1$, $2_2$. Ces différents convoyeurs d'entrée et de sortie sont tous reliés par un collecteur 1 qui permet d'alimenter les postes de préparation 4 comme le montre la **figure 50** (exemple avec trois postes de préparation $4_1$, $4_2$ et $4_3$).

Pour faire le lien avec la définition de contexte qui précède, les convoyeurs de sortie $2_1$, $2_2$ du système automatisé 3 forment les convoyeurs (aussi appelés « allées ») transportant les flux entrants de charges utiles, ces flux entrants étant fusionnés sur le collecteur 1 en un flux sortant de charges utiles.

En d'autres termes, le va-et-vient des charges qui entrent et sortent du système automatisé 3 est géré par le biais du collecteur. Nous sommes donc en présence de plusieurs flux d'injection de charges (aussi appelés flux entrants dans notre problématique) sur les convoyeurs de sortie $2_1$, $2_2$ du système automatisé 3, tous injectés sur le collecteur.

De plus, lorsque les flux de charges qui retournent dans le système automatisé 3 (via les convoyeurs d'entrée $5_1$, $5_2$) passent par le biais du même collecteur 1, nous avons un exemple de flux perturbateurs, appelés flux retour dans ce cas particulier. Ces flux perturbateurs sont très intéressants car ils disparaissent après le passage de toutes les zones d'injection, créant ainsi des espaces vides pour certains flux d'injection mais pas d'autres. Comme détaillé par la suite, un mode de réalisation de la solution proposée vise à contrôler, autant que faire se peut, ces flux perturbateurs pour remplir ces espaces vides plutôt que de les subir.

Les solutions proposées dans cet exemple d'application sont décrites dans la suite du document.

2.3 SOLUTIONS ACTUELLES

2.3.1 Solutions existantes

- Solution connue A, avec un séquencement final souhaité : dans ce cas, l'injection des charges sur le collecteur suit un ordre bien défini correspondant à la séquence finale attendue après fusion des charges. Si cette séquence finale souhaitée en sortie du collecteur est par exemple formée par les charges ayant pour numéros de séquence 1, 2, 3, etc. (appelées ci-après « charge 1 », « charge 2 », etc.) ; la charge 1 sera injectée en priorité, suivie de la charge 2 seulement si la charge 1 est en aval de la charge 2 sur le collecteur, suivie de la charge 3 seulement si la charge 2 est en aval de la charge 3 sur le collecteur, et ainsi de suite.
- Solution connue B, sans séquencement final souhaité : chaque première charge de chaque flux d'injection est injectée sur le collecteur dès lors qu'il y a de la place dans sa zone d'injection.

Le document WO 2013/150080 décrit des techniques pour la mise en oeuvre des solutions A et B susmentionnées.

2.3.2 Inconvénients liés à ces solutions

- Solution connue A : un inconvénient de la solution connue A est qu'elle laisse des espaces (vides) entre les charges, ce qui ralentit le flux sortant par rapport à la capacité mécanique du collecteur. Un espace vide apparaît entre deux charges successives dans la séquence finale dès lors que la charge précédente dans la séquence finale appartient à un flux d'injection plus en aval que la charge suivante. De plus, la longueur de ces espaces vides est proportionnelle à la distance des allées (convoyeurs) d'injection de ces deux charges successives.

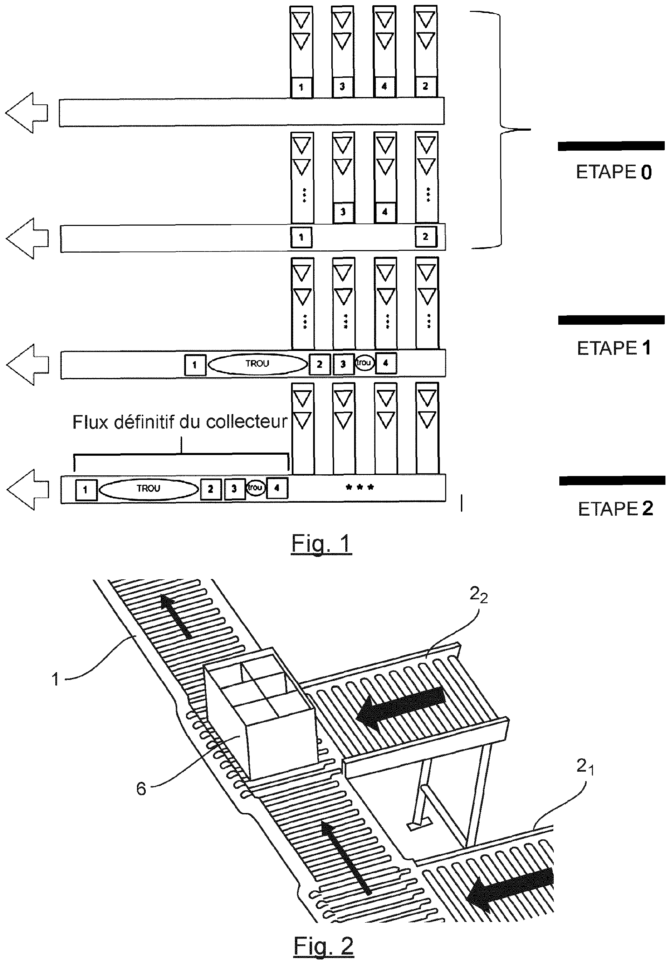

Plusieurs étapes de cette solution connue A sont montrées par la **figure 1**. Dans cet exemple, nous considérons la séquence finale souhaitée 1, 2, 3, 4. Afin de respecter cette séquence, il n'est pas possible d'injecter directement les charges 1, 2, 3 et 4 en même temps sur le collecteur. A l'étape 0, l'installation est déclenchée. Instantanément les charges 1 et 2 sont injectées sur le collecteur. Cette opération est rendue possible car le flux d'injection de la charge 1 est en aval du flux d'injection de la charge 2. Les charges 1 et 2 sont sur le collecteur, séparées par la distance qu'il y a entre les allées (convoyeurs) d'où elles proviennent. Le collecteur avance sans changement jusqu'à l'étape 1, où la charge 2 passe devant la zone d'injection du flux contenant la charge 3. A partir de ce moment, la charge 3 est injectée sur le collecteur directement derrière la charge 2. Notons que l'espace vide laissé entre les charges 1 et 2 est resté le même et ne sera jamais comblé. A cette même étape 1, la charge 4 est également injectée sur le collecteur avec un espace entre elle et la charge 3. L'étape 2 montre les espaces vides laissés par cette méthode connue d'injection.

- Solution connue B : un inconvénient de la solution connue B est que l'allée (le convoyeur) le plus en aval injectera ses charges en continu alors que les autres devront se contenter de remplir les espaces libres restants ; un autre inconvénient de la solution connue B est qu'elle propose un pilotage qui ne fonctionne, dans la réalité, que lorsque le collecteur (transportant le flux sortant) a une vitesse bien plus grande que celle des allées (convoyeurs) transportant les flux entrants (autant de fois plus grande qu'il y a de flux entrants à injecter). Dans la solution connue B, les vitesses des allées (convoyeurs) doivent donc être plafonnées. Or dans le contexte actuel, le nombre de flux d'injection augmente plus vite que les capacités mécaniques du collecteur. Cette solution connue B ne suffit plus, et ne contrôle pas l'optimisation du débit du flux de sortie.

## 3. RESUME

Dans un premier mode de réalisation particulier de l'invention, il est proposé un procédé de fusion, au sein d'un entrepôt logistique, de k flux entrants de charges utiles, transportés respectivement par k convoyeurs appelés allées $a_i$ avec $i \in \{1, ..., k\}$, en un flux sortant de charges utiles, transporté par un autre convoyeur appelé collecteur, l'entrepôt logistique étant tel que :

- les k allées sont de type « premier entré premier sorti », réparties le long du collecteur et numérotées de $a_1$ à $a_k$ dans un sens de déplacement du collecteur, et
- $\Delta_i$ est une distance temporelle entre les allées $a_i$ et $a_k$ exprimée en unités temporelles correspondant chacune à un pas temporel du collecteur,

le procédé étant exécuté au moins une fois par un système de pilotage, une exécution donnée étant effectuée à un instant Tb et comprenant :

- obtention d'un ensemble L comprenant n charges utiles réparties à l'instant Tb sur les k allées et devant être injectées sur le collecteur pour former une séquence de sortie $\sigma$, chacune des n charges utiles étant identifiée par un unique numéro de séquence au sein de la séquence de sortie $\sigma$, chacune des k allées contenant un ensemble ordonné, selon un sens croissant du numéro de séquence, de $h_i$ charges utiles devant être injectées une à une sur le collecteur ;
- calcul d'une date $t_0$ à laquelle la première charge utile $\sigma 1$ de la séquence de sortie $\sigma$ passe devant l'allée $a_k$ ;
- calcul d'une date d'injection sur le collecteur pour chacune des n charges utiles de l'ensemble L, selon la formule suivante : $T(u) = t_0 + \sigma(u) - 1 - \Delta_i$, avec :

  - $u = a_i(j) \in L$, une charge utile de l'ensemble L et provenant de la j$^{ème}$ position dans l'allée $a_i$, $i \in \{1, ..., k\}$, $j \in \{1, ..., h_i\}$,
  - $\sigma(u)$ le numéro de séquence de la charge utile $u$ dans la séquence de sortie $\sigma$ ;

- commande du collecteur et des k allées, pour une injection des n charges utiles sur le collecteur conformément aux n dates d'injection $T(u)$, $\forall\ u \in L$.

Selon une caractéristique particulière du premier mode de réalisation, $\Delta_{i,\ i'}$ est une distance temporelle entre les allées $a_i$ et $a_{i'}$ exprimée en unités temporelles correspondant chacune à un pas temporel du collecteur, et le procédé comprend en outre les étapes suivantes :

- pour chaque charge utile $u = a_i(j) \in L$ provenant d'une allée $a_i$, calcul des dates de passage de la charge utile devant les allées $a_i$ à $a_k$, connaissant la date d'injection $T(u)$ de la charge utile sur le collecteur ;
- pour chaque allée $a_i$, $i \in \{1, ..., k\}$, obtention d'un ensemble $V_i$ contenant chaque date de passage d'une des charges utiles devant l'allée $a_i$ ;
- pour chaque charge perturbatrice contrôlée $p$ d'un flux perturbateur contrôlé grâce à un moyen de contrôle situé le long du collecteur et avant une allée $a_{g(p)}$ dans le sens de déplacement du collecteur, avec $g(p) \in \{1, ..., k\}$, $a_{g(p)}$ étant également la première allée, dans le sens de déplacement du collecteur, devant laquelle passe la charge perturbatrice contrôlée :

  a) initialisation de t avec la date $\delta_1 - \Delta_1$, avec $\delta_1$ représentant la date d'arrivée possible, en cas de non mise en attente, de la première charge perturbatrice contrôlée devant l'allée $a_k$ ;
  b) calcul des dates $t + \Delta_{1,\ g(p)}$, $t + \Delta_{1,\ g(p)+1}$,..., $t + \Delta_{1,\ l(p)}$ de passage de la charge perturbatrice contrôlée devant les allées $a_{g(p)}$ à $a_{l(p)}$, avec $a_{l(p)}$ la dernière allée, dans le sens de déplacement du collecteur, devant laquelle passe la charge perturbatrice contrôlée ;
  c) si aucune des dates $t + \Delta_{1,\ g(p)}$, $t + \Delta_{1,\ g(p)+1}$,..., $t + \Delta_{1,\ l(p)}$ n'appartient respectivement aux ensembles $V_{g(p)}$, $V_{g(p)+1}$,..., $V_{l(p)}$, calcul d'une date fictive de passage $start_p$ de la charge perturbatrice contrôlée $p$ devant l'allée $a_1$, avec la formule suivante : $start_p = t$ ;
  d) si une des dates $t + \Delta_{1,\ g(p)}$, $t + \Delta_{1,\ g(p)+1}$,..., $t + \Delta_{1,\ l(p)}$ appartient respectivement à un des ensembles $V_{g(p)}$, $V_{g(p)+1}$, ..., $V_{l(p)}$, incrémentation de t d'une unité et réitération des étapes b), c) et d) avec la nouvelle valeur de t ;

- commande du moyen de contrôle, pour une injection à la date $start_p + \Delta_{1,\ g(p)}$ de chaque charge perturbatrice contrôlée $p$ devant l'allée $a_{g(p)}$.

Dans un deuxième mode de réalisation particulier de l'invention, il est proposé un procédé de fusion, au sein d'un entrepôt logistique, de k flux entrants de charges utiles, transportés respectivement par k convoyeurs appelés allées $a_i$ avec $i \in \{1, ..., k\}$, en un flux sortant de charges utiles, transporté par un autre convoyeur appelé collecteur, l'entrepôt logistique étant tel que :

- les k allées sont de type « premier entré premier sorti », réparties le long du collecteur et numérotées de $a_1$ à $a_k$ dans un sens de déplacement du collecteur, et
- $\Delta_i$ est une distance temporelle entre les allées $a_i$ et $a_k$ exprimée en unités temporelles correspondant chacune à un pas temporel du collecteur,

le procédé étant exécuté au moins une fois par un système de pilotage, une exécution donnée étant effectuée à un instant Tb et comprenant :

- obtention d'un ensemble L comprenant n charges utiles réparties à l'instant Tb sur les k allées et devant être injectées sur le collecteur pour former une séquence de sortie $\sigma$, chacune des n charges utiles étant identifiée par un unique numéro de séquence au sein de la séquence de sortie $\sigma$, chacune des k allées contenant un ensemble ordonné, selon un sens croissant du numéro de séquence, de $h_i$ charges utiles devant être injectées une à une sur le collecteur ;
- pour chaque allée $a_i$, $i \in \{1, ..., k\}$, obtention d'un ensemble $U_i$ de dates non valides pour une injection d'une des charges utiles de l'allée $a_i$ sur le collecteur à cause d'une charge perturbatrice non contrôlée ou d'une autre obstruction d'un pas temporel du collecteur ;
- en ne prenant pas en compte les ensembles $U_i$, $1 \in \{1, ..., k\}$, calcul d'une date $t_0$ à laquelle la première charge utile $\sigma_1$ de la séquence de sortie $\sigma$ passe devant l'allée $a_k$ ;
- pour la première charge utile $\sigma_1$ de la séquence de sortie $\sigma$, en supposant que la première charge utile $\sigma_1$ provienne de l'allée $a_i$ :

  a) initialisation de t avec $t_0$ ;
  b) si aucune des dates $t$, $t - \Delta_{k-1}$, $t - \Delta_{k-2}$,..., $t - \Delta_i$ n'appartient respectivement aux ensembles $U_k$, $U_{k-1}$, $U_{k-2}$,..., $U_i$, calcul d'une date d'injection de la première charge utile $\sigma1$ sur le collecteur avec la formule suivante :

$$T(u) = t - \Delta_i \ ,$$

avec $u = \sigma_1 = a_i(j)$;

c) si une des dates t, $t - \Delta_{k-1}$, $t - \Delta_{k-2}$,..., $t - \Delta_i$ appartient respectivement à un des ensembles $U_k$, $U_{k-1}$, $U_{k-2}$,..., $U_i$, incrémentation de t d'une unité et réitération des étapes b) et c) avec la nouvelle valeur de t ;

- pour chaque charge utile suivante $\sigma_c$ de la séquence de sortie $\sigma$, $C \in \{2, ..., n\}$, en supposant que la charge utile suivante $\sigma_c$ provienne de l'allée $a_i$ :

a') incrémentation de t d'une unité, avec t utilisé pour calculer la date d'injection de la charge utile précédente $\sigma_c - 1$ ;

b') si aucune des dates $t$, $t - \Delta_{k-1}$, $t < \Delta_{k-2}$,..., $t - \Delta_i$ n'appartient respectivement aux ensembles $U_k$, $U_{k-1}$, $U_{k-2}$,..., $U_i$, calcul d'une date d'injection de la charge utile suivante $\sigma_c$ sur le collecteur avec la formule suivante :

$$T(u) = t - \Delta_i \ ,$$

avec $u = \sigma_c = a_i(j)$ ;

c') si une des dates $t$, $t - \Delta_{k-1}$, $t - \Delta_{k-2}$,..., $t - \Delta_i$ appartient respectivement à un des ensembles $U_k$, $U_{k-1}$, $U_{k-2}$,..., $U_i$, incrémentation de t d'une unité et réitération des étapes b') et c') avec la nouvelle valeur de t ;

- commande du collecteur et des k allées, pour une injection des n charges utiles sur le collecteur conformément aux n dates d'injection $T(u)$, $\forall u \in L$.

Selon une caractéristique particulière du deuxième mode de réalisation, l'étape de commande du collecteur et des k allées, pour une injection des n charges utiles sur le collecteur conformément aux n dates d'injection $T(u)$, $\forall u \in L$, est précédée des étapes suivantes :

- calcul de $t_{min}$ selon la formule suivante :

$$t_{min} = min\{ \ T(u), \ \forall \ u \in L \ \};$$

- si $t_{min} > 0$, modification des n dates d'injection selon la formule suivante :

$$T(u) = T(u) \ - t_{min}, \ \forall \ u \in L.$$

Selon une caractéristique particulière du deuxième mode de réalisation, $\Delta_{i,i'}$ est une distance temporelle entre les allées $a_i$ et $a_{i'}$, exprimée en unités temporelles correspondant chacune à un pas temporel du collecteur, et le procédé comprend en outre les étapes suivantes :

- pour chaque charge utile $u = a_i(j) \in L$ provenant d'une allée $a_i$, calcul des dates de passage de la charge utile devant les allées $a_i$ à $a_k$, connaissant la date d'injection $T(u)$ de la charge utile sur le collecteur ;
- pour chaque allée $a_i$, $i \in \{1, ..., k\}$, obtention d'un ensemble $V_i$ contenant d'une part chaque date de passage d'une des charges utiles devant l'allée $a_i$ et d'autre part l'ensemble $U_i$ de dates non valides pour une injection d'une des charges utiles de l'allée $a_i$ sur le collecteur ;
- pour chaque charge perturbatrice contrôlée $p$ d'un flux perturbateur contrôlé grâce à un moyen de contrôle situé le long du collecteur et avant une allée $a_{g(p)}$ dans le sens de déplacement du collecteur, avec $g(p) \in \{1, ..., k\}$, $a_{g(p)}$ étant également la première allée, dans le sens de déplacement du collecteur, devant laquelle passe la charge perturbatrice contrôlée :

a) initialisation de t avec la date $\delta_1 - \Delta_1$, avec $\delta_1$ représentant la date d'arrivée possible, en cas de non mise en attente, de la première charge perturbatrice contrôlée devant l'allée $a_k$ ;

b) calcul des dates $t + \Delta_{1, g(p)}$, $t + \Delta_{1, g(p) + 1}$,..., $t + \Delta_{1, l(p)}$ de passage de la charge perturbatrice contrôlée devant les allées $a_{g(p)}$ à $a_{l(p)}$, avec $a_{l(p)}$ la dernière allée, dans le sens de déplacement du collecteur, devant laquelle passe la charge perturbatrice contrôlée ;

c) si aucune des dates $t + \Delta_{1, g(p)}$, $t + \Delta_{1, g(p)+1}$,..., $t + \Delta_{1, l(p)}$ n'appartient respectivement aux ensembles $V_{g(p)}$, $V_{g(p)+1}$,..., $V_{l(p)}$, calcul d'une date fictive de passage $start_p$ de la charge perturbatrice contrôlée $p$ devant l'allée $a_1$, avec la formule suivante : $start_p = t$ ;

d) si une des dates $t + \Delta_{1, g(p)}$, $t + \Delta_{1, g(p)+1}$,..., $t + \Delta_{1, l(p)}$ appartient respectivement à un des ensembles $V_{g(p)}$, $V_{g(p)+1}$, ... , $V_{l(p)}$, incrémentation de t d'une unité et réitération des étapes b), c) et d) avec la nouvelle valeur de t ;

- commande du moyen de contrôle, pour une injection à la date $start_p + \Delta_{1, g(p)}$ de chaque charge perturbatrice contrôlée $p$ devant l'allée $a_{g(p)}$.

Selon une caractéristique particulière du premier ou deuxième mode de réalisation, la date $t_0$ est calculée avec la formule suivante :

$$t_0 = \max_{u = a_i(j) \in L'} \{ \Delta_i + 1 - \sigma(u) \} ,$$

avec :

- $u = a_i(j) \in L'$, une charge utile d'un ensemble L' comprenant des charges utiles placées en première position des allées situées, en suivant le sens de déplacement du collecteur, depuis l'allée $a_1$ jusqu'à l'allée $a_{i1}$ contenant la première charge utile $\sigma 1$ de la séquence de sortie $\sigma$.

Selon une caractéristique particulière du premier ou deuxième mode de réalisation, le procédé est exécuté de manière itérative, chaque nouvelle exécution étant effectuée à un nouvel instant Tb calculé avec la formule suivante : $Tb = T(u_{last}) - \Delta_1 + \Delta_i^{last}$, avec $u_{last} = a_i^{last}(j^{last})$ une dernière charge utile, provenant de la $(j^{last})^{ème}$ position dans l'allée $a_i^{last}$, de la séquence de sortie $\sigma$ d'une exécution précédente à un instant Tb précédent.

Selon une caractéristique particulière du premier ou deuxième mode de réalisation, le procédé est exécuté de manière itérative, chaque nouvelle exécution étant effectuée à un nouvel instant Tb défini comme un instant auquel aucune charge de la séquence de sortie $\sigma$ d'une exécution précédente à un instant Tb précédent ne se trouve dans une portion du collecteur allant de la première allée $a_1$ à l'allée $a_{i1}$ contenant la première charge de la séquence de sortie $\sigma$ de la nouvelle exécution au nouvel instant Tb.

Selon une caractéristique particulière du premier ou deuxième mode de réalisation, le procédé est exécuté de manière itérative, chaque nouvelle exécution étant effectuée à un nouvel instant Tb calculé avec la formule suivante :

$$Tb = Max(Tb + 1, T(u_{last}) - \Delta_1 + \Delta_i^{last}),$$

avec :

- $u_{last} = a_i^{last}(j^{last})$ une dernière charge utile, provenant de la $(j^{last})^{ème}$ position dans l'allée $a_i^{last}$, de la séquence de sortie $\sigma$ d'une exécution précédente à un instant Tb précédent, et
- $(Tb + 1)$ obtenu par une incrémentation d'une unité de l'instant Tb précédent.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

Dans un autre mode de réalisation de l'invention, il est proposé un système de pilotage (dispositif) comprend des moyens de mise en oeuvre des étapes qu'il effectue dans le procédé tel que décrit précédemment, dans l'un quelconque de ses différents modes de réalisation.

## 4. LISTE DES FIGURES

Dans la description ci-dessous, donnée à titre d'exemple indicatif et non limitatif, il est fait référence aux dessins annexés, dans lesquels :

[fig.1] Méthode existante pour insérer des charges dans un ordre donné

[fig.2] Image de deux allées (convoyeurs), un collecteur et une charge (carton)

[fig.3] Schéma de deux allées (convoyeurs), un collecteur et une charge (carton)

[fig.4] Schéma du système étudié en allées

[fig.5] Schéma du système avec indentification des charges par leur numéro de séquence

[fig.6] Points confondus sans perte de généralité

[fig.7] Point de départ et point d'injection

[fig.8] Découpage en pas (positions ou créneaux) du collecteur

[fig.9] Séquence de sortie souhaitée attendue dans le découpage du collecteur

[fig.10] Unité de temps associée au pas du collecteur par rapport à la durée d'injection d'une charge

[fig.11] Distances entières entre les flux d'injection

[fig.12] Distances non obligatoirement entières entre les flux d'injection

[fig.13] Schéma du collecteur avec des points d'injection consécutifs à chaque pas

[fig.14] Exemple d'un collecteur de 4 allées consécutivement placées par pas du collecteu

[fig.15] Diagramme de Gantt lié au job shop et retrouvant les données à calculer par formul

[fig.16] Exemple d'un collecteur de 4 allées placées de façon quelconque

[fig.17] Diagramme de Gantt lié au job shop avec distances quelconques entre les allées

[fig.18] Exemple d'un collecteur et de 2 allées avec les identifiants des charges

[fig.19] Exemple d'un collecteur et de 2 allées avec les identifiants des numéros d'ordre

[fig.20] Exemple d'un collecteur et de 2 allées avec les identifiants numéros de séquence

[fig.21] Image du collecteur à l'instant 0

[fig.22] Image du collecteur à l'instant 1

[fig.23] Image du collecteur à l'instant 2

[fig.24] Image du collecteur à l'instant 3

[fig.25] Exemple de liste FIFO associée à trois allées

[fig.26] Séquence réalisable attendue sur le collecteur

[fig.27] Première charge du flux collée au point d'injection faisant partie de la liste FIF

[fig.28] Première charge du flux non collée au point d'injection ne faisant pas partie de la liste FIFO

[fig.29] Charges en attente continue derrière une première charge faisant partie de la liste FIFO

[fig.30] Charges en attente continue derrière une première charge ne faisant pas partie de la liste FIFO

[fig.31] Exemple de batch (lot) de travail

[fig.32] Calcul des dates d'injection et traitement du batch 1

[fig.33] Traitement d'un batch en cours

[fig.34] Fin de traitement du batch 1 et formation du batch 2

[fig.35] Fin de traitement du batch 2 et son application

[fig.36] Diagramme de l'algorithme dans le cas général avec flux perturbateur subi

[fig.37] Exemple de flux perturbateur : charges grises qui retournent dans la PT

[fig.38] Exemple d'un collecteur de 4 allées quelconques avec flux perturbateur subi

[fig.39] Diagramme de Gantt avec flux perturbateur subi formant des espaces

[fig.40] Diagramme de l'algorithme 4

[fig.41] Exemple d'un collecteur de 4 allées placées de façon quelconque avec flux perturbateur contrôlé

[fig.42] Diagramme de Gantt des injections montant les espaces à utiliser pour les charges perturbatrices

[fig.43] Diagramme de Gantt en choisissant le placement des charges perturbatrices

[fig.44] Structure d'un système de pilotage selon un mode de réalisation particulier de l'inventio

[fig.45] Diagramme de l'algorithme 5

[fig.46] Organigramme d'un procédé de fusion de k flux entrants en un flux sortant, selon un premier mode de réalisation particulier basé sur l'algorithme 2

[fig.47] Organigramme d'un procédé de fusion de k flux entrants en un flux sortant, selon un deuxième mode de réalisation particulier basé sur l'algorithme 3 (illustré sur la figure 36)

[fig.48] Organigramme d'un procédé de fusion de k flux entrants en un flux sortant, selon un troisième mode de réalisation particulier basé sur l'algorithme 4 (illustré sur la figure 40)

[fig.49] Organigramme d'un procédé de fusion de k flux entrants en un flux sortant, selon un quatrième mode de réalisation particulier basé sur l'algorithme 5 (illustré sur la figure 45)

[fig.50] Exemple d'application

## 5. PARAMETRES DU PILOTAGE

Comme déjà mentionné plus haut, le système étudié est composé d'un système de drainage (convoyeur appelé collecteur), de plusieurs autres convoyeurs (appelés allées) et de charges. Ce système est dynamique, les charges sont transportées par les allées, injectées sur le collecteur puis transportées par celui-ci. Dans un premier temps, considérons l'état de ce système en figeant la position de chaque charge présente dans celui-ci à un instant donné. Définissons les sous-systèmes figés de ce système afin de pouvoir calculer les futures dates d'injection de certaines charges. Cela correspond à la résolution du problème statique, nous étudierons dans la Section 7 comment piloter ce système de façon dynamique.

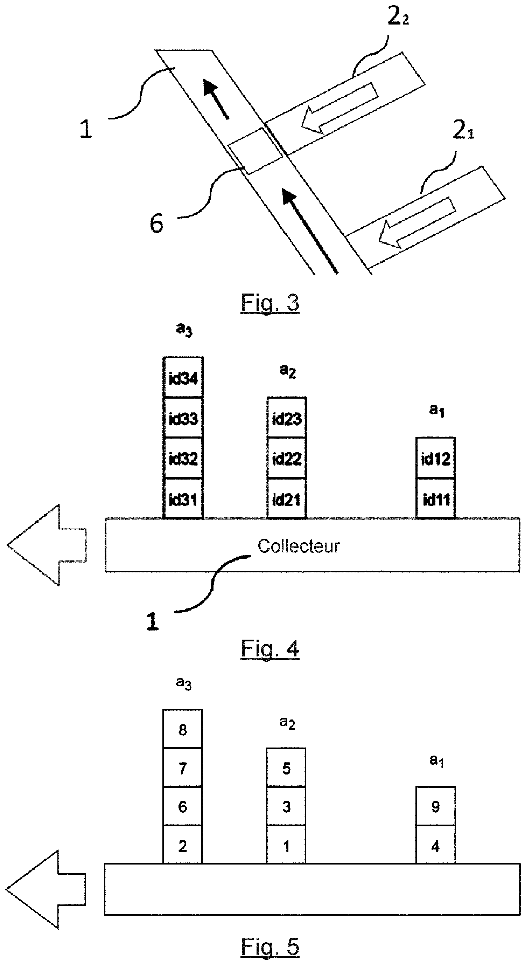

La **figure 2** est une image illustrant deux allées (convoyeurs) $2_1$, $2_2$, un collecteur 1 et une charge (carton) 6. La **figure 3** est une vue modélisée des éléments apparaissant sur l'image de la figure 2 (mêmes références numériques).

## 5.1 NOTATIONS

Le tableau ci-dessous est un récapitulatif des notations.

[Tableaux 1]

| | |
|---|---|
| $k$ | Nombre de flux d'injection (flux entrants) du système |
| $a_i, i \in \{1, \dots, k\}$ | k allées (convoyeurs) transportant chacune un ensemble ordonné de charges à un instant donné |
| $h_i, i \in \{1, \dots, k\}$ | Nombre de charges présentes sur l'allée (convoyeur) $a_i$ |
| $n = \sum_{i=1\dots k} h_i$ | Nombre total de charges à injecter sur le collecteur |
| $L$ | Ensemble des charges à injecter sur le collecteur |
| $u = a_i(j), i \in \{1, \dots, k\}, j \in \{1, \dots, h_i\}$ | Charge $u \in L$, provenant de la $j^e$ position dans l'allée $a_i$ |
| $\sigma$ | Séquence de sortie souhaitée, ordonnant toutes les charges de $L$ |
| $\sigma(u), u \in L$ | Position de la charge $u$ dans la séquence de sortie |
| $\sigma_c$ | $c^{ème}$ charge de la séquence $\sigma$, appartenant à $L$ *set $u = a_i(j)$ to* $\sigma_c$ signifie le calcul de $u, i, j$ pour la charge $\sigma_c$ |
| $L'$ | Ensemble des charges placées en première position des allées situées entre l'allée $a_1$ et l'allée contenant la première charge de la séquence $\sigma$ (soit $\sigma_1$) |
| $T_D(u), u \in L$ | Date de départ de la charge $u$, coïncidant avec le point de départ, c'est-à-dire l'instant où la charge doit quitter son allée (convoyeur) |
| $T(u), u \in L$ | Date d'injection de la charge $u$ sur le collecteur, coïncidant avec le point d'injection, où la charge arrive physiquement sur le collecteur |
| $Pt_i, i \in \{1, \dots, k\}$ | Durée nécessaire pour parcourir la distance entre le point de départ et le point d'injection pour une charge de l'allée $a_i$ |
| Le « pas » | Unité de temps correspondant au découpage du collecteur en pas temporels (appelés aussi positions temporelles ou créneaux temporels) |
| La date 0 | Date à laquelle nous pouvons commencer à injecter les charges sur le collecteur (date matérialisée par le premier emplacement libre sur celui-ci) |
| La date $t_0$ | Date à laquelle la première charge de la séquence de sortie souhaitée passe devant l'allée $a_k$ |
| $\Delta_i, i \in \{1, \dots, k\}$ | Distance en « pas » séparant l'allée $a_i$ et l'allée $a_k$ |
| $\Delta_{i,j}, i \in \{1, \dots, k\text{-}2\}, j \in \{1, \dots, k-1\}$ | Distance en « pas » séparant l'allée $a_i$ et l'allée $a_j$ |

### 5.1.1 Notations par allées du système de convoyage

Pour une configuration du système à un instant donné, chaque allée comprend un ensemble ordonné de charges. Soit $k$ le nombre d'allées dans notre système, chaque allée est numérotée de $a_1$ à $a_k$ dans le sens de déplacement du collecteur. Ces allées possèdent respectivement un nombre $h_i$ de charges, représenté par une liste First In First Out (FIFO) devant être injectée une à une sur le collecteur.

Un exemple est donné sur la **figure 4.** Le sens de déplacement du collecteur 1 est de droite à gauche, direction indiquée par la flèche. Chaque allée est numérotée et comprend des charges ordonnées, qui devront être injectées une par une, de bas en haut, sur le collecteur. Dans cet exemple, nous avons donc $k = 3$ avec $h_1 = 2$, *contenu de* $a_1 = \{id11, id12\}$, $h_2 = 3$, *contenu de* $a_2 = \{id21, id22, id23\}$ et $h_3 = 4$, *contenu de* $a_3 = \{id31, id32, id33, id34\}$.

5.1.2 Notations des charges à injecter

Il y a $n$ charges (cartons, bacs, containers, etc.) au total à injecter sur le collecteur, provenant des différents flux d'injection. Notons $L$ l'ensemble de ces charges et $u = a_i(j)$ une charge $u$ appartenant à $L$, provenant de la $j^e$ position dans l'allée $a_i$.

De plus appelons $\sigma$ la séquence de sortie dans laquelle ces charges doivent être ordonnées une fois toutes injectées sur le collecteur. La fonction $\sigma(u)$ donne la position de la charge $u$ dans cette séquence. Chaque charge peut ainsi être identifiée par un numéro «de séquence» unique, entre 1 et $n$, correspondant à sa position dans la séquence de sortie souhaitée ($\sigma$). C'est de cette façon que nous identifierons les charges par la suite. Remarquons que dans ce cas, il est facile de vérifier si la séquence est réalisable : il suffit que chaque allée ait une liste ordonnée de charges identifiées par des numéros de séquence croissants, pas forcément consécutifs.

Spécifions maintenant l'ensemble $L'$, regroupant spécialement les premières charges attendues dans la séquence de sortie finale, placées en première position des allées $a_1$, $a_2$, ... , $a_{i_1}$ avec $i_1$ le numéro de l'allée contenant la première charge de cette séquence $\sigma$. Cet ensemble regroupe toutes les charges pouvant être la première charge de la séquence à être injectée sur le collecteur. En effet, une charge en première position dans une allée placée en amont de l'allée comportant la première charge de la séquence est susceptible d'être injectée en premier, tout en se retrouvant derrière la première charge dans le flux final du collecteur. Cependant, une charge en première position dans les allées en aval de l'allée comportant la première charge ne sera jamais injectée avant cette première charge sur le collecteur.

La **figure 5** montre le schéma équivalent à celui de la figure 4 en prenant la séquence réalisable

$$\sigma = \{id21, id31, id22, id11, id23, id32, id33, id34, id12\}.$$

Dans cette exemple, $n = 9$, donc chaque charge a un numéro de séquence unique permettant de l'identifier tout en connaissant rapidement sa position souhaitée dans la séquence $\sigma$. La figure 5 permet immédiatement de voir que la séquence choisie est réalisable, en effet
*contenu de* $a_1 = \{4,9\}$, *contenu de* $a_2 = \{1,3, 5\}$ et *contenu de* $a_3 = \{2,6, 7,8\}$. De plus, nous avons l'ensemble particulier $L_{i_1} = \{id11, id21\} = \{4,1\}$.

5.1.3 Dates de départ et dates d'injection

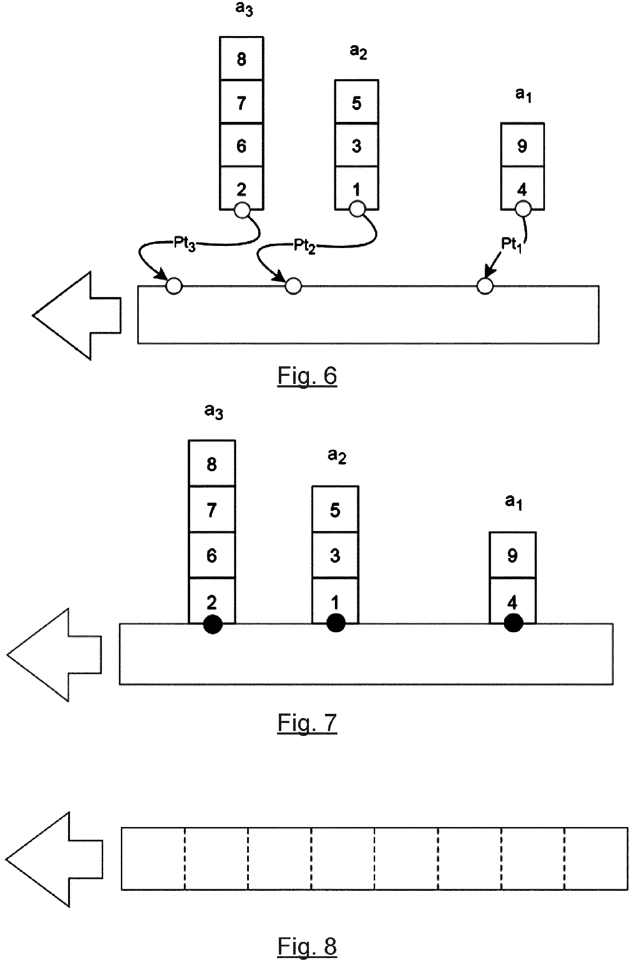

Pour rappel, chaque allée correspond à un flux d'injection à un instant donné, représenté comme une colonne FIFO collée au collecteur. Cependant, dans l'entrepôt, il se peut que la charge en attente d'injection soit éloignée du collecteur. Appelons *point de départ* l'endroit où cette charge attend l'ordre de départ de son allée (convoyeur), illustré par un point accolé à la colonne FIFO, et *point d'injection* l'espace du collecteur touché en premier par la charge en cours d'injection réelle sur celui-ci, illustré par un point accolé au collecteur sur la **figure 6** .

Dans les schémas du système en allées, ces deux points sont confondus et représentés en noir sur la **figure 7** . En réalité, ces points sont souvent différents et on associe la durée nécessaire à une charge du flux $i$ pour passer d'un point à l'autre par $Pt_i$ (voir figure 6). La date de départ $T_D$ de la charge lorsque celle-ci doit quitter son allée (convoyeur) est relié à sa date $T$ d'injection sur le collecteur (coïncidant avec le point d'injection) par la simple formule suivante : $T_D = T - Pt_i$. De ce fait, sans perdre de généralité par la suite, nous allons présenter uniquement le calcul des dates d'injection.

5.2 STRUCTURE DE DONNEE

5.2.1 Découpage du système de drainage (collecteur) : unité de temps (pas temporel)

Le système de drainage (ou collecteur) sera considéré comme un système avec des *pas* temporels (comme un trieur), appelé aussi *créneaux* ou *positions.*

La **figure 8** illustre le découpage en pas (positions ou créneaux) temporels du collecteur.

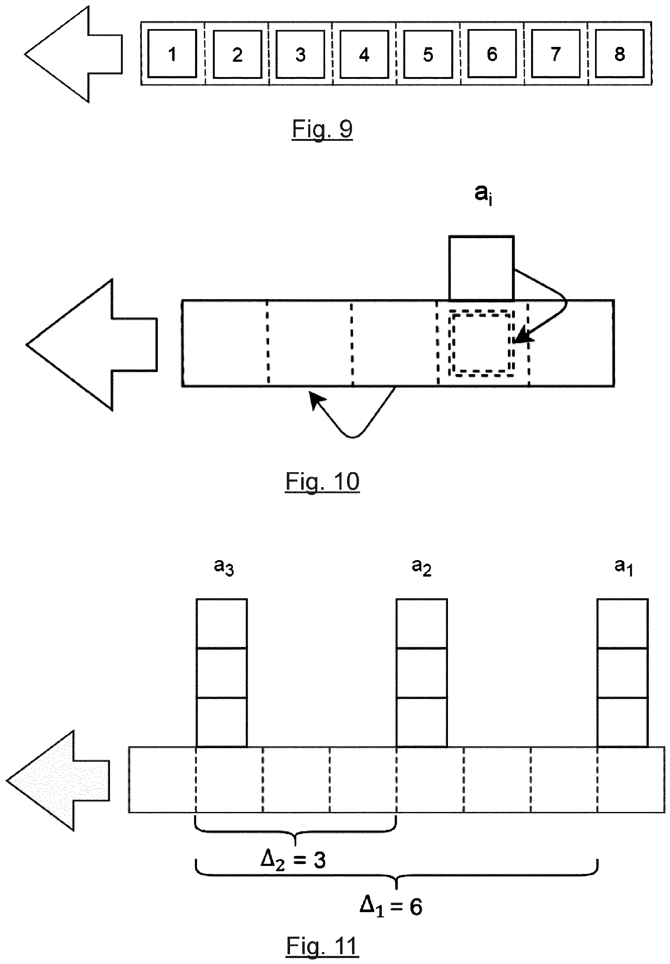

Ainsi, notre objectif d'obtenir un débit maximal avec un flux sortant ordonné revient à remplir les pas du collecteur comme le montre la **figure 9** .

Nous allons considérer une *unité de temps* correspondant à ce pas temporel qui subdivise le collecteur, suivant sa vitesse de déplacement. Une unité de temps, appelée « un pas temporel », correspond à la durée nécessaire pour qu'un point du collecteur se déplace exactement de la distance physique d'une position. La distance définie pour cette position correspond à la taille d'une charge, ajoutée d'une distance de sécurité. Cette distance de sécurité est à ajuster suivant les besoins métier et afin de respecter la condition suivante (illustrée sur la **figure 10** ) :

L'unité de temps doit obligatoirement être supérieure à la durée que met une charge pour être injectée sur le collecteur depuis le moment où une partie de la charge touche le collecteur jusqu'au moment où toute la charge est placée correctement sur le collecteur (c'est-à-dire dans le flux de celui-ci).

### 5.2.2 Distance du système d'injection

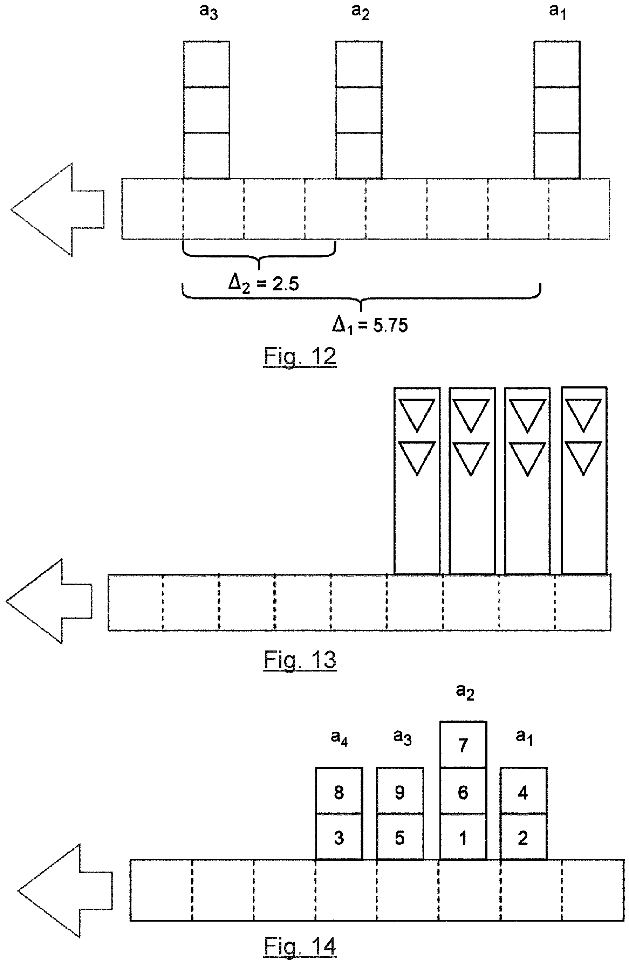

Comme illustré sur la **figure 11** , nous définissons $\Delta_i$ correspondant au nombre de pas temporels du collecteur (système de drainage) entre l'allée $a_i$ et la dernière allée $a_k$, comme le montre les figures suivantes, avec $k = 3$. Comme illustré sur la **figure 12** , ce nombre peut ne pas être un entier. $\Delta_k = 0$.

La distance temporelle entre deux allées $a_i$ et $a_j$ est notée $\Delta_{i,j}$, le deuxième indice étant l'allée par rapport à laquelle on se situe.

### 5.2.3 Modèle Job Shop associé

Le tableau ci-dessous est un récapitulatif de notations du modèle Job Shop.

[Tableaux2]

| | |
|---|---|
| $\{J_u, u \in \{1, \dots, n\}\}$ | Ensemble de $n$ jobs (tâches)associés à un modèle en Job Shop. La $u^e$ charge de la séquence $\sigma$ est notée $\sigma_u = a_i(j)$, *occupe* la $j^e$ place de l'allée $a_i$ et est associée au job $J_u$ |
| $\{M_1, \dots, M_k\}$ | Ensemble des $k$ machines du modèle en Job Shop. L'allée $a_i$ est associée à la machine $M_i$. |
| $\{o_{u,i}, o_{u,\{i+1\}}, \dots, o_{u,k}\}\, u \in \{1, \dots, n\}$, $\sigma_u = a_i(j)$ | Liste des $k$ - $i$ opérations consécutives associées au job $J_u$, sachant que l'opération $o_{u,i}$ doit s'effectuer sur la machine $M_i$. |

Pour chaque séquence de sortie $\sigma$, nous modélisons le système en un modèle Job Shop à tâches unitaires, à $n$ jobs et $k$ machines. Chaque charge de la séquence $\sigma_u$ ($u^e$ charge de cette séquence) est associée à un job $J_u$ et chaque allée $a_i$ est associée à une machine $M_i$. Chaque job $J_u$ associé à une charge contenue dans l'allée $a_i$ doit suivre une liste ordonnée de $k$ - $i$ + 1 opérations unitaires $\{o_{u,i}, o_{u,\{i+1\}}, \dots, o_{u,k}\}$. Une opération notée $o_{u,i}$ est une tâche unitaire du job $J_u$ à effectuer spécifiquement sur la machine $M_i$. Un job peut être affecté à une seule machine à la fois et une machine peut effectuer une seule opération à la fois.

Nous cherchons à planifier ces jobs sur les machines en respectant l'ordre donné par leur liste respective d'opérations. L'objectif est de les planifier afin de minimiser la durée totale d'exécution de tous ces jobs.

## 6. DETERMINATION DE LA DATE D'INJECTION DE CHAQUE CHARGE, POUR UN COLLECTEUR TRAITANT UNIQUEMENT LES FLUX D'INJECTION

Nous considérons dans cette partie un collecteur traitant uniquement les flux d'injection. Le collecteur est entièrement vide et prêt à récupérer les flux d'injection. Seule la fusion de ces flux d'injection est à contrôler pour injecter correctement leurs charges afin d'avoir un flux final fluide, continu et correspondant à la séquence de sortie souhaitée.

### 6.1 SOLUTION POUR DES ALLEES CONSECUTIVEMENT BIEN REPARTIES

Afin de simplifier les choses, nous supposons que les flux d'injection sont répartis de manière consécutive sur le collecteur, de sorte qu'il faille un intervalle de temps pour qu'une charge sur le collecteur passe d'une zone d'injection à la suivante comme le montre la **figure 13** . Ce cas simplifié correspond à $\Delta_{i,i+1} = 1$, pour tout

$$i \in \{1, \dots, k-1\}.$$

6.1.1 Modélisation du système en ordonnancement d'ateliers job shop

Nous allons expliquer la modélisation du système en problème d'ordonnancement d'atelier Job Shop dans ce cas particulier.

Chacune des $n$ charges est associée à un job $J_u$, $u \in \{ 1, ... , n \}$, numérotation en concordance avec le numéro de séquence de la charge. Ainsi, si $\sigma_u$ correspond à la $u^e$ charge dans la séquence $\sigma$, alors son job associé est $J_u$. Les opérations de ces jobs doivent être traitées par un ensemble de $k$ machines $\{M_1, ..., M_k\}$. Une opération peut être affectée à une seule machine à la fois. Chaque machine est associée à une allée (c'est-à-dire à un flux d'injection), ne pouvant effectuer qu'une seule opération à la fois. Rappelons que ces allées sont numérotées $\{a_1, ..., a_k\}$, de l'amont vers l'aval (c'est-à-dire en suivant le sens de convoyage du collecteur).

Ainsi, une charge $\sigma_u$ étant injectée sur le collecteur depuis l'allée $a_i$ passera devant chaque allée $a_j$ avec $j$ dans $\{i, i + 1, ..., k\}$. Ce mécanisme est représenté par le fait que chaque job associé à une charge de l'allée $a_i$ se compose de $k - i + 1$ opérations unitaires $\{o_{u,i}, o_{u, \{i + 1\}},..., o_{u, k}\}$ à traiter consécutivement sans attendre. Chaque opération est à planifier sur une machine spécifique. Ainsi, si l'opération $o_{u, i}$ (traitée par la machine $M_i$) commence à l'instant $t$, l'opération $o_{u, \{i + 1\}}$ (traitée par la machine $M_{\{i + 1\}}$) commence à l'instant $t + 1$, etc., et enfin l'opération $o_{u, k}$ (traitée par la machine $M_k$) commence à l'instant $t + k - i$.

Si l'instant de début de la première opération $o_{u, i}$ de ce job correspond à la date d'injection dans le collecteur, les instants de début des opérations suivantes (c.-à-d. $\{o_{u, \{i + 1\}}, .., o_{u, k}\}$) représentent les instants auxquels la charge est devant les allées suivantes.

Notez que chaque tâche est composée d'au moins une opération sur la dernière machine $M_k$ (puisque chaque charge passe devant au moins la dernière allée $a_k$). La séquence des opérations planifiées sur la machine $M_k$ correspond exactement à l'ordre dans lequel les charges passeront devant la dernière allée et leur date de départ correspond à l'instant où ces charges passeront devant cette dernière allée d'injection. C'est pourquoi, si la charge $u$ est devant la charge $v$ dans la séquence de sortie donnée, la dernière opération de $u$ doit commencer avant la dernière opération de $v$ sur $M_k$.

L'objectif de ne pas avoir d'espace sur le collecteur revient à ne pas avoir de temps mort entre les traitements des opérations de la machine $M_k$.

6.1.2 Principe de l'algorithme permettant d'atteindre les dates d'injection

Le problème de planification proposé ci-dessus peut être résolu par l'algorithme suivant.

*Pour commencer, en supposant que la première charge de la séquence provienne de l'allée $a_i$, les opérations $\{o_{1, i}, o_{1, \{i + 1\}},..., o_{1, k}\}$ associées à ce job commencent aux instants $t$, $t + 1,... t + k - i$.*

*Ensuite, les opérations du job correspondant à la prochaine charge de la séquence seront planifiées d'abord en exécutant l'opération à traiter sur la machine $M_k$. Cette opération $o_{u, k}$ sera planifiée juste après (sans temps mort) l'opération précédente programmée sur $M_k$. En supposant que cette opération commence à l'instant $t$, l'opération sur la machine $M_{\{k - 1\}}$ (si elle existe) est planifiée à l'instant $t - 1$, et ainsi de suite, jusqu'à ce que toutes les opérations soient programmées.*

*Cette procédure est appliquée de manière itérative sur chacun des jobs suivants de la séquence donnée.*

Les dates d'injection réelles sur le collecteur sont déduites directement à partir du début de la première opération de chaque job. L'unité de temps utilisée est celle défini ci-dessus (« le pas temporel » du collecteur).

6.1.3 Calcul des dates d'injection par formule

Maintenant que nous avons décrit comment fonctionnait l'algorithme de résolution du problème d'ordonnancement, nous pouvons déduire la formule permettant de calculer les dates d'injection.

Les notations utilisées dans la formule ci-après sont celles du tableau récapitulatif discuté plus haut.

Fixons l'origine du temps à la date d'injection, au plus tôt, de la (ou les) toute(s) première(s) charge(s) injectée sur le collecteur. Dans notre système, l'emplacement libre qui va recevoir cette charge est donc placé juste devant l'allée de celle-ci à l'instant 0. Ainsi, nous calculerons la date

$$t_0 = \max \{k + 1 - i - \sigma(u)\}$$

cor $u = a_i(j) \in L$, $1 \le i \le k$, $1 \le j \le h_i$ respondant à la date au plus tôt à laquelle la première charge de la séquence passe devant l'allée $a_k$.

Preuve : Soit 0 la date à laquelle l'injection des charges commence. Soit $t_0$ la date à laquelle la première charge de la séquence (c'est-à-dire $\sigma_1$) passe devant l'allée $a_k$. Nous remarquons que la première charge injectée sur le collecteur est forcément une charge en tête d'allée, dans une allée située entre l'allée $a_1$ et celle de $\sigma_1$, comprise. Soit $L' \subset L$ ce sous-ensemble de charge.

Donc, pour toute charge $u = a_i(j) \in L'$, nous savons que si elle était injectée à la date $x$, elle passerait devant l'allée $a_k$ à la date $x + k - i$. Nous avons $x \geq 0$ puisque nous ne pouvons pas injecter de charge avant la date 0. Or par définition de $t_0$, la charge $u$ passera devant l'allée $a_k$ à la date

$$t_0 + \sigma(u) - 1 = x + k - i. \text{ Soit } t_0 + \sigma(u) - 1 - k + i = x \geq 0.$$

Nous en déduisons que pour tout
$u = a_i(j) \in L'$, $t_0 \geq k + 1 - i - \sigma(u)$. Nous cherchons la date au plus tôt permettant de vérifier toutes ces contraintes, donc :

$$t_0 = \max_{u = a_i(j) \in L'} \{k + 1 - i - \sigma(u)\}$$

L'algorithme 1 ci-après donne les dates d'injection $T(u)$, c'est-à-dire les dates d'entrée de chaque charge $u$ sur le collecteur. L'unité de temps utilisé est le « pas temporel » défini plus haut. L'algorithme 1 donne la formule pour calculer ces dates d'injection dans le cas où les flux s'injectent à chaque emplacement consécutif sur le collecteur (voir **figure 14** ).

*Algorithme 1 : Calcul des dates d'injection sans flux perturbateur dans un cas particulier*

$$\boldsymbol{Require:} \sigma, k,\ L',\ a_i(j), h_i,\ \forall\, i \in \{1, ..., k\}, \forall\, j \in \{1, ..., h_i\}$$

$$t_0 = \max_{u = a_i(j) \in L'} \{k + 1 - i - \sigma(u)\}$$

$$\boldsymbol{for\ all}\ i \in \{1, ..., k\}\ \boldsymbol{do}$$

$$\boldsymbol{for\ all}\ j \in \{1, ..., h_i\}\ \boldsymbol{do}$$

$$set\ u = a_i(j)$$

$$T(u) = t_0 + \sigma(u) - 1 - (k - i)$$

$$\boldsymbol{end\ for}$$

$$\boldsymbol{end\ for}$$

$$\boldsymbol{return}\ T(u),\ \forall\, u \in L$$

6.1.4 Exemple

En ordonnancement, le diagramme de Gantt est un outil très utile pour visualiser dans le temps les opérations composant un job. Cet outil va nous permettre de représenter graphiquement l'avancement du travail de chaque machine et nous montrer visuellement la solution apportée à notre problème. De plus, nous pourrons voir le lien entre les résultats obtenus par l'algorithme permettant d'atteindre les dates d'injection et la formule associée.

Soit la configuration du système comme suit (voir la figure 14) : $k$ = 4 allées comprenant deux ou trois charges. Chaque charge est identifiée par un numéro de séquence unique grâce à la séquence de sortie $\sigma$ = (1,2, 3,4, 5,6, 7,8, 9) . C'est une séquence réalisable.

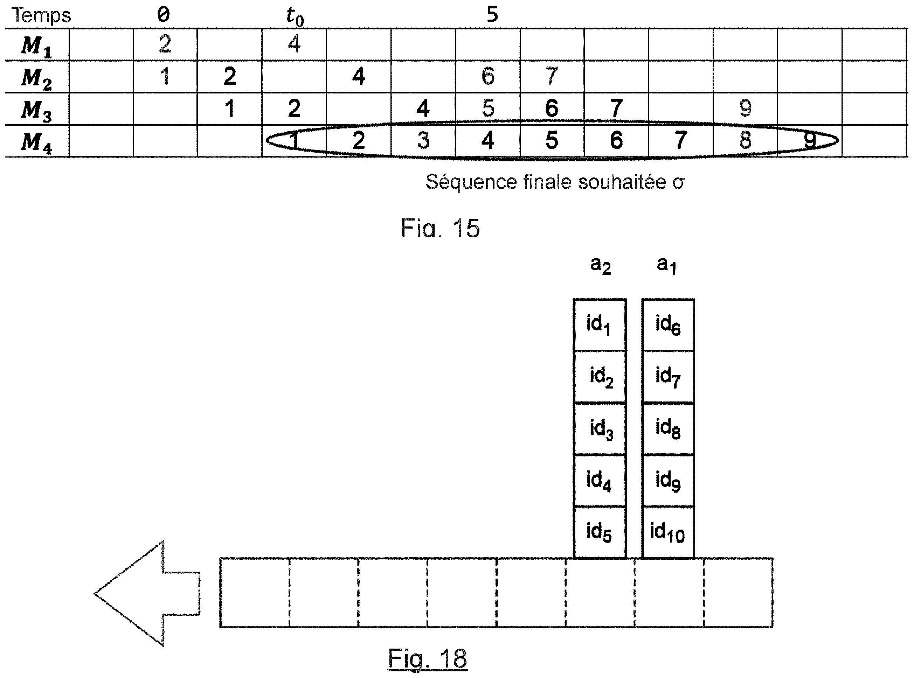

Dans ce cas simplifié, nous pouvons représenter la solution du Job Shop dans un diagramme de Gantt tel que chaque ligne correspond à une machine. Le fait que chaque charge passe par les machines consécutivement est représenté par le fait que chaque numéro de séquence de charge apparaît sur des cases consécutives de gauche à droite dans le tableau (voir **figure 15** ). De plus, la première apparition de chaque charge indique sa date d'injection donnée par la formule en callant l'échelle de temps à l'instant 0 défini plus haut. Pour rappel, la date 0 correspond à l'instant de la première injection de charge possible. Nous pouvons même placer la date $t_0$ selon sa définition et la retrouver par calcul. Pour rappel, $t_0$ est la date à laquelle la première charge de la séquence ($\sigma_1$) passe devant l'allée $k$ = 4, soit le chiffre 1 lorsque l'opération du job 1 est opéré par la machine $M_4$.

Nous retrouvons la séquence souhaitée, sans espace vide, sur la machine $M_4$ et la date d'injection de chaque charge est donnée par la lecture de la case de première apparition (de la gauche vers la droite) du numéro de séquence donnant l'identification de cette charge.

## 6.2 SOLUTION POUR DES ALLEES AVEC UNE REPARTITION QUELCONQUE

Maintenant que le cas simplifié a été vu, considérons le cas général du collecteur ne traitant que les flux d'injection. Les flux ne s'injectent donc plus consécutivement à chaque pas temporel du collecteur mais sont répartis de façon quelconque. Les distances entre allées sont connues. C'est la durée de parcours qu'il y a entre le point d'injection de l'allée $a_i$ et la dernière allée $a_k$ qui nous intéresse particulièrement, elle sera notée $\Delta_i = \Delta_{i,k}$ (comme déjà défini plus haut).

### 6.2.1 Calcul des dates d'injection par formule

L'algorithme 2 ci-après prend en compte cette notion de distance temporelle quelconque entre allées et répond ainsi au cas général du collecteur dédié aux flux d'injection.

Considérons de nouveau la date 0 comme étant la date de la première injection possible. Cette fois, une charge $u$ de l'allée $i$ injectée à la date $x$ arrive devant l'allée $a_k$ à la date $x + \Delta_i$. Ainsi, nous obtenons la date au plus tôt à laquelle la première charge de la séquence passe devant l'allée $a_k$ par la formule

$$t_0 = \max_{u = a_i(j) \in L'} \{\Delta_i + 1 - \sigma(u)\} \ .$$

*Algorithme 2 : Calcul des dates d'injection sans flux perturbateur dans un cas général*

$$\textbf{\textit{Require}} : \sigma, k, \ L', \ a_i(j), \ \Delta_i, h_i, \ \forall i \in \{1, \ldots, k\}, \forall j \in \{1, \ldots, h_i\}$$

$$t_0 = \max_{u = a_i(j) \in L'} \{\Delta_i + 1 - \sigma(u)\}$$

$$\textbf{\textit{for all}} \ i \in \{1, \ldots, k\} \ \textbf{\textit{do}}$$

$$\qquad \textbf{\textit{for all}} \ j \in \{1, \ldots, h_i\} \ \textbf{\textit{do}}$$

$$\qquad\qquad set \ u = a_i(j)$$

$$\qquad\qquad T(u) = t_0 + \sigma(u) - 1 - \Delta_i$$

$$\qquad \textbf{\textit{end for}}$$

$$\textbf{\textit{end for}}$$

$$\textbf{\textit{return}} \ T(u), \ \forall u \in L$$

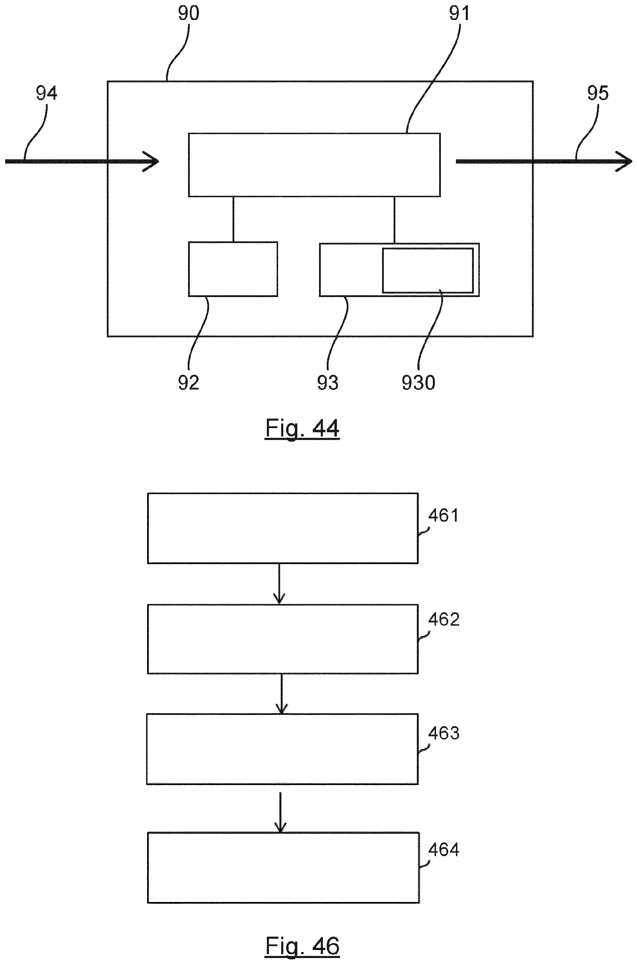

La **figure 46** présente un organigramme d'un procédé de fusion de k flux entrants en un flux sortant, selon un premier mode de réalisation particulier basé sur l'algorithme 2. Le procédé est exécuté au moins une fois par le système de pilotage. Une exécution donnée est effectuée à un instant Tb et comprend les étapes suivantes :

- obtention (étape 461) d'un ensemble L comprenant n charges utiles réparties à l'instant Tb sur les k allées et devant être injectées sur le collecteur pour former une séquence de sortie σ, chacune des n charges utiles étant identifiée par un unique numéro de séquence au sein de la séquence de sortie σ, chacune des k allées contenant un ensemble ordonné, selon un sens croissant du numéro de séquence, de $h_i$ charges utiles devant être injectées une à une sur le collecteur ;
- calcul (étape 462) d'une date $t_0$ à laquelle la première charge utile σ1 de la séquence de sortie σ passe devant l'allée $a_k$ ;
- calcul (étape 463) d'une date d'injection sur le collecteur pour chacune des n charges utiles de l'ensemble L, selon la formule suivante :

$$T(u) = t_0 + \sigma(u) - 1 - \Delta_i,$$

avec :

- $u = a_i(j) \in L,$ une charge utile de l'ensemble L et provenant de la j [ème] position dans l'allée $a_i$, $i \in \{ 1, \dots , k \}, j \in \{1, \dots , h_i\}$,
- $\sigma(u)$ le numéro de séquence de la charge utile $u$ dans la séquence de sortie $\sigma$ ;

- commande (étape 464) du collecteur et des k allées, pour une injection des n charges utiles sur le collecteur conformément aux n dates d'injection $T(u), V u G L.$

6.2.2 Exemple

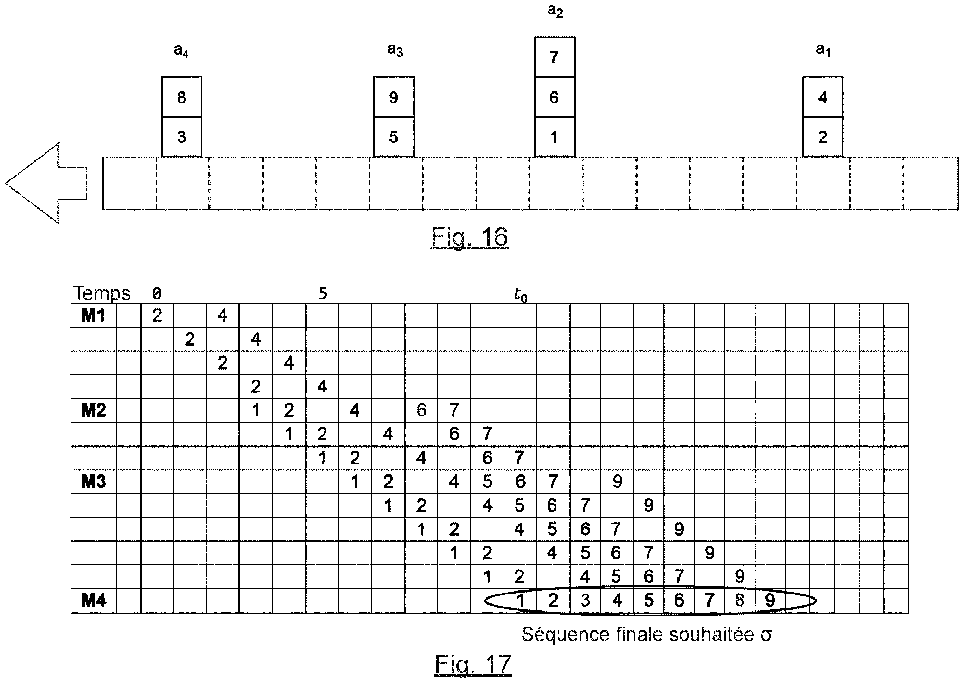

Prenons un exemple similaire à celui du paragraphe 6.1.4 en écartant cette fois les allées.
Soit la configuration du système comme suit (voir la **figure 16**) : $k = 4$ allées comprenant deux ou trois charges. Chaque charge est identifiée par un numéro de séquence unique en fonction de la séquence de sortie $\sigma = (1,2, 3,4, 5,6, 7,8, 9)$. C'est une séquence réalisable. Nous connaissons la distance de chaque allée par rapport à la dernière :

$$\Delta_1 = 12, \ \Delta_2 = 7, \ \Delta_3 = 4 \ et \ \Delta_4 = 0.$$

Nous donnons sur la **figure 17 la** représentation de la solution sous forme de diagramme de Gantt. Cette fois, il faut espacer deux machines consécutives d'autant de lignes qu'il y a de « pas temporels » entre les deux allées consécutives correspondantes. C'est pourquoi la solution est donnée dans un tableau à 13 ( = $\Delta_1$ + 1) lignes. Par calcul, nous avons $$t_0 = \max_{u \in \{1,2\}} \{\Delta_i + 1 - \sigma(u)\} = \max(7,11) = 11$$ , que nous retrouvons bien par définition à l'instant 11 sur le graphique.

Nous donnons ici un exemple avec des distances entières entre allées pour faciliter la compréhension, mais il serait possible de prendre des valeurs non entières en nombre de « pas temporels ».

6.3 DESCRIPTION D'UN MODE DE REALISATION PARTICULIER

6.3.1 Liste d'éléments à regrouper

Chaque flux d'injection (flux entrant) est représenté par une allée contenant une liste de charges dans un ordre FIFO. Le nombre d'allées peut varier de 2 à $k$, et la liste de l'allée $i$ contient $h_i$ charges ($h_i$ pouvant être nul). Il y a, en tout, $n$ charges à fusionner sur le collecteur. Prenons par exemple (voir **figure 18** ) :

$$k = 2, \quad h_1 = h_2 = 5 \ et \ n = 10.$$

De plus, pour rester dans le cas général, nous prendrons les résolutions du cas général avec $\Delta_1 = 1$ et $\Delta_2 = 0$.

6.3.2 Construction d'une séquence par défaut

Lorsque la séquence finale des charges sur le collecteur n'a pas d'importance, il suffit de définir de manière quelconque une séquence réalisable ordonnant les charges.
Nous pouvons concevoir différentes façons de définir une séquence de sortie « par défaut » :

- Sortir alternativement une charge de chaque allée,

$$\sigma = (id_5, id_{10}, id_4, id_9, id_3, \ id_8, \dots , id_6)$$

- Sortir les charges en fonction de leur arrivée dans les flux d'injection,
- Prendre la première charge de chaque allée tirée aléatoirement,
- Etc.

6.3.3 Une séquence donnée par un calcul de minimisation de désordre

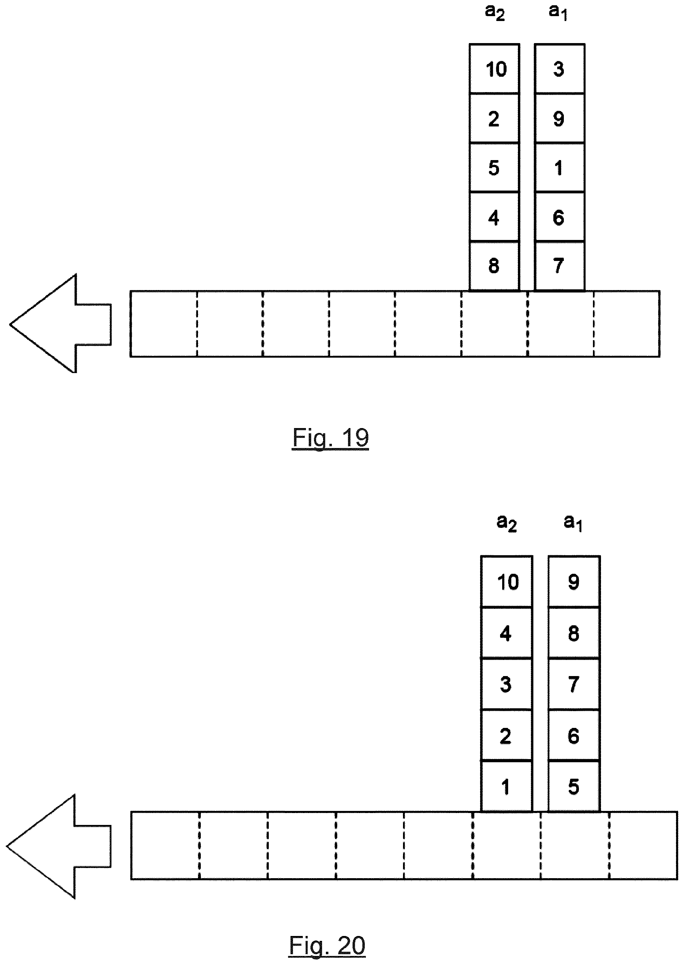

La **figure 19** illustre un exemple de séquence ( ' = (8,4, 5,2, 7,6, 1,9, 3,10)) résultant d'un calcul de minimisation de désordre. Les numéros indiqués ne sont pas des numéros de séquence au sein de la séquence finale, mais des numéros d'ordre par rapport à des commandes à préparer.

Il est possible de prendre cette séquence $\sigma'$ comme séquence de sortie donnée pour l'algorithme qui calcule les dates d'injection. Cette séquence est obligatoirement réalisable et minimise le désordre. Nous obtenons un débit maximal avec un désordre minimum pour le flux sortant du collecteur.

Comme il est toujours possible d'attribuer un numéro de séquence unique de 1 à n à toutes les charges, correspondant à leur position dans la séquence finale $\sigma$, nous afficherons les charges avec ces numéros de séquence pour les identifier et les caractériser entièrement (cf. **figure 20**). Les figures 19 et 20 sont équivalentes. La séquence de sortie $\sigma$ = (1,2, 3,4, 5,6, 7,8, 9,10) permet de bien voir l'ordre croissant des charges sur chaque flux d'injection (preuve de la faisabilité de la séquence).

Gardons cette configuration pour poursuivre l'exemple.

6.3.4 Construction de $t_0$

Dans notre exemple, $L'$ rassemble les charges numérotées 1 et 5.

Nous recherchons le maximum entre { $\Delta_2 + 1 - \sigma(1)$, $\Delta_1 + 1 - \sigma(5)$ }, nous obtenons $t_0 = 0$.

6.3.5 Calcul des dates d'injection (par formule)

$$T(1) = t_0 + \sigma(1) - 1 - \Delta_2 = 0$$

$$T(2) = t_0 + \sigma(2) - 1 - \Delta_2 = 1$$

$$T(3) = t_0 + \sigma(3) - 1 - \Delta_2 = 2$$

$$T(4) = t_0 + \sigma(4) - 1 - \Delta_2 = 3$$

$$T(5) = t_0 + \sigma(5) - 1 - \Delta_1 = 3$$

$$T(6) = t_0 + \sigma(6) - 1 - \Delta_1 = 4$$

$$T(7) = t_0 + \sigma(7) - 1 - \Delta_1 = 5$$

$$T(8) = t_0 + \sigma(8) - 1 - \Delta_1 = 6$$

$$T(9) = t_0 + \sigma(9) - 1 - \Delta_1 = 7$$

$$T(10) = t_0 + \sigma(10) - 1 - \Delta_2 = 9$$

6.3.6 Explication du résultat en images

Les date s d'injection $T(u)$ étant données dans l'unité de temps (c'est-à-dire le pas temporel du collecteur), cela revient visuellement à voir le collecteur se déplacer d'un pas à chaque unité de temps. Si nous visualisons une image du système à chaque unité de temps, chaque charge $u$ apparaîtra pour la première fois sur le collecteur à la date $T(u)$ (sa date d'injection).

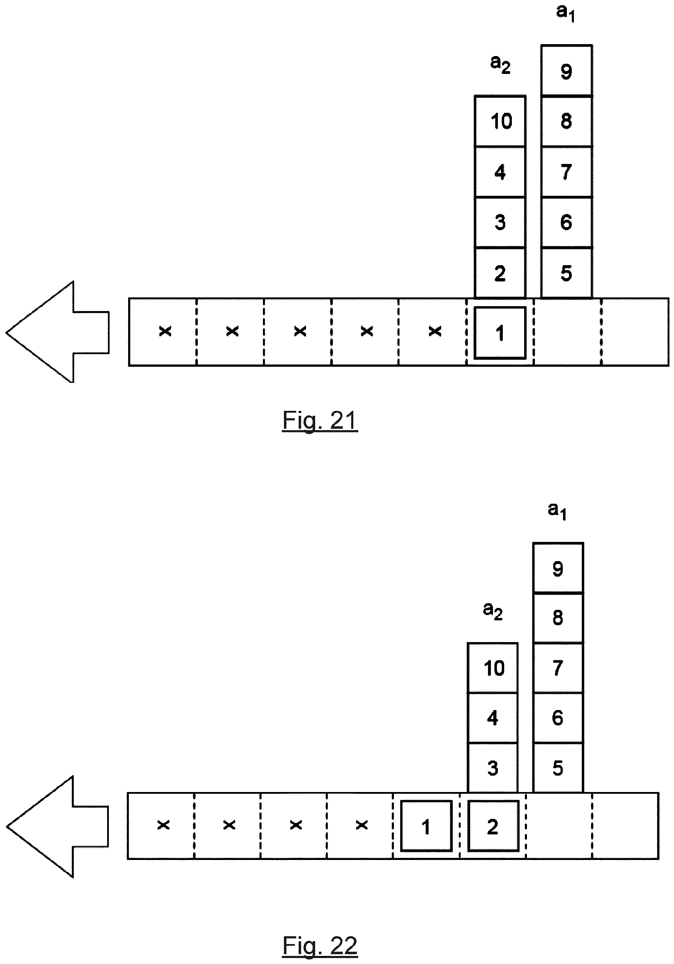

La configuration du collecteur à l'instant 0 (cf. **figure 21**) correspond à la première injection réelle d'une charge, ici la charge 1 (car $t_1$ = 0), même si ça ne sera pas toujours le cas. Attention, en effet, la première charge de la séquence n'est pas obligatoirement la première charge à être injectée sur le collecteur.

La charge 2 doit être injectée à l'instant 1, ce qui veut dire qu'elle est sur le collecteur après le déplacement d'un pas du collecteur, comme le montre la **figure 22** .

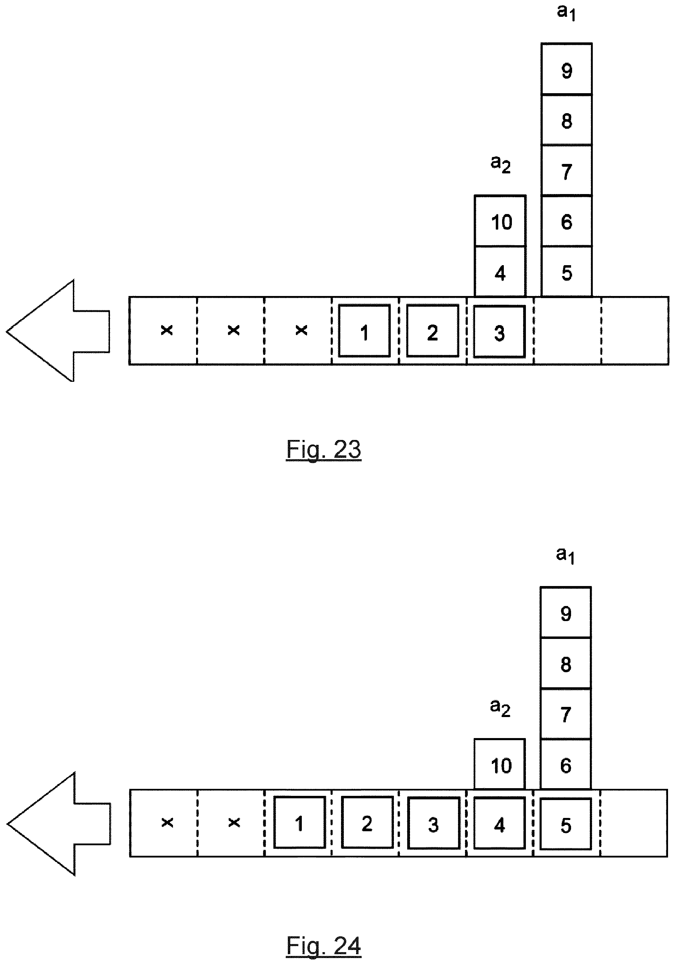

La charge 3 est injectée à l'instant 2, comme le montre la **figure 23** .

Les charges 4 et 5 sont injectées à la date 3, comme le montre la **figure 24.**

Et ainsi de suite.

## 7. DEROULEMENT DES BATCHS

Le calcul des dates d'injection se fait sur un état donné du système. Le système évoluant dans le temps, une première possibilité consiste à refaire ce calcul à chaque fois qu'une nouvelle charge arrive dans le système car elle n'a pas encore sa date d'injection définie. Toutefois, au lieu de lancer aussi régulièrement l'algorithme de calcul ce qui n'est pas avantageux pour diverses raisons (consommation de ressources de calcul notamment), il est préférable de procéder par batchs (lots). Un tel fonctionnement dynamique par batchs est expliqué dans cette section.

### 7.1 BATCH DE TRAVAIL

Nous voulons un flux (flux sortant) continu et optimal sur le collecteur tout au long d'une journée de travail. Nous venons de voir comment définir une date d'injection optimale (afin de parvenir à notre objectif) sur des charges présentes dans les allées à un instant donné, fixé. Il faut maintenant réaliser cet objectif pour toutes les charges arrivant par les flux d'injection, à tout instant. Nous proposons d'appeler l'algorithme de calcul des dates d'injection à l'instant nécessaire pour obtenir un remplissage fluide et continu du collecteur.

Pour ce faire, dans cette section, nous définissons comment remplir les listes FIFO de chaque allée pour la configuration du système à un instant fixé. Ensuite, nous définissons ce qu'est un batch pour finir par expliquer la succession du traitement de deux batchs sans laisser d'espace vide sur le collecteur.

#### 7.1.1 Remplissage des listes FIFO des allées

Dans chaque allée, il y a une liste de charges avec un numéro de séquence unique pour chaque charge. Ces numéros de séquence des charges sont obligatoirement croissants par allée, mais pas forcément consécutifs (dû à la définition de la séquence réalisable à donner).

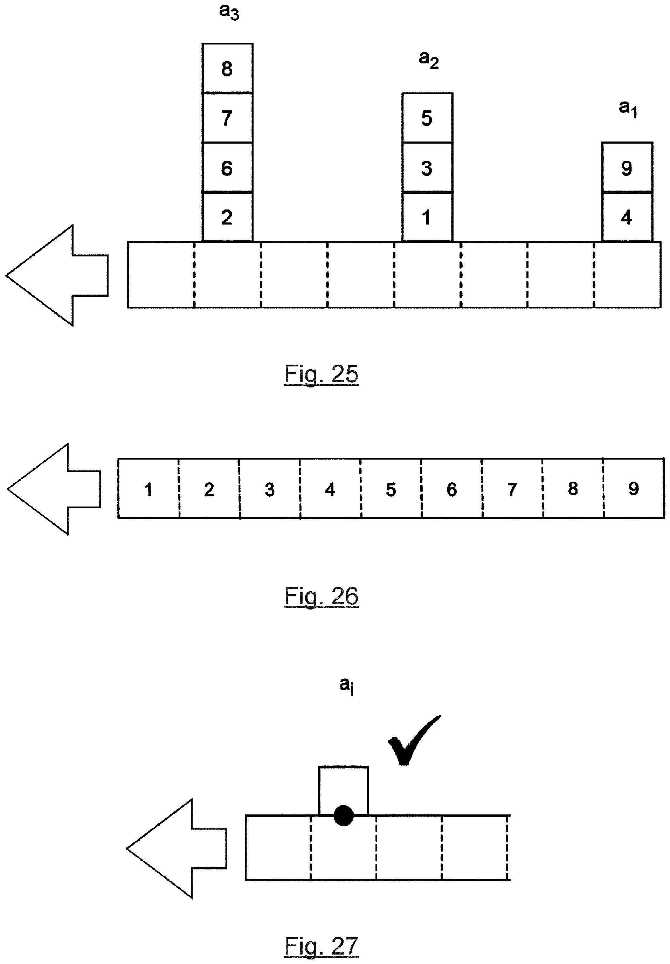

La **figure 25** illustre un exemple de listes FIFO associées à trois allées.

La **figure 26** illustre la séquence finale réalisable, attendue sur le collecteur.

Pour rappel, chaque allée correspond à un flux d'injection, représenté comme une colonne FIFO collée au collecteur, avec son point d'injection défini par un point noir sur les schémas.

La liste FIFO des charges prise en compte dans une allée pour une configuration fixée du système ordonne les charges en attente au point d'injection de cette allée respectant les conditions suivantes :

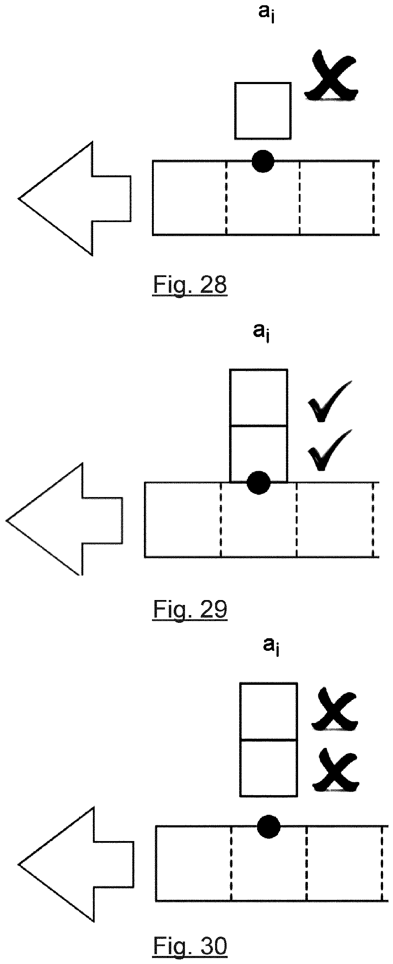

- Les charges prises en compte lors de l'analyse sont en attente au point d'injection (représenté par un point noir sur les figures suivantes) ( **figure 27** : première charge du flux collée au point d'injection et donc faisant partie de la liste FIFO ; **figure 28** : première charge du flux non collée au point d'injection et ne faisant donc pas partie de la liste FIFO) ;
- Les charges prises en compte lors de l'analyse sont en attente « continue » derrière une première charge faisant partie de la liste FIFO ( **figure 29** : deuxième charge en attente continue derrière une première charge faisant partie de la liste FIFO ; **figure 30** : charge en attente continue derrière une première charge ne faisant pas partie de la liste FIFO).

#### 7.1.2 Définition des batchs

Un batch (lot) de travail correspond à l'ensemble des charges des listes FIFO de toutes les allées (c'est l'ensemble $L$ de n charges) Toutes ces charges correspondent à la photo statique de notre système à un instant donné, respectant les règles du paragraphe précédent. Les charges présentes dans le système à cet instant, ne respectant pas les règles de remplissage des listes FIFO, seront affectées plus tard à un autre batch.

Une fois les charges du batch toutes affectées, le calcul des dates d'injection pour ce batch est effectué.

L'injection de ces charges se fait au fur et à mesure que le temps avance, en respectant les dates d'injection calculées au préalable. Le système évolue au cours du temps, sans appeler de nouveau l'algorithme de calcul des dates d'injection, bien que de nouvelles charges soient éligibles aux règles de remplissage des listes FIFO ou même que de nouvelles charges apparaissent dans le système.

Toutes ces dates d'injection sont calculées pour réussir à mettre chaque charge du batch à sa place réservée sur le convoyeur, respectant l'ordre de la séquence finale souhaitée tout en minimisant les espaces vides. Appelons $p$ la dernière place réservée pour la dernière charge de ce batch donné par l'ordre de la séquence. Après cette place $p$, le collecteur est libre. C'est au moment où cette dernière place (peut être encore vide) $p$ passe devant le premier flux d'injection (première allée) qu'un nouveau batch va être défini.

Le batch suivant se construira de la même manière, mais sur la nouvelle photo statique du système à cet instant fixé (avec comme premier emplacement libre le pas du collecteur accolé à cette dernière place $p$).

A noter, dans une implémentation particulière, que si un nouveau batch est défini avant que le batch précédent soit entièrement exécuté, les dernières charges de la séquence de sortie du batch précédent peuvent être considérées pour le nouveau batch (batch suivant). Dans ce cas, si une charge à la position $i$ dans la séquence de sortie est remise dans le batch suivant, alors toutes les charges de position supérieure à i aussi). Cependant, il y a un intérêt à reprendre des charges uniquement si la séquence finale souhaitée a changé. Dans ce cas, la dernière place $p$ considérée sera la place de la dernière charge non reprise dans le batch suivant. Pour les charges reprises, les dates d'injection déjà définies dans le batch précédent seront obsolètes et remplacées par les dates d'injection calculées pour le batch suivant.

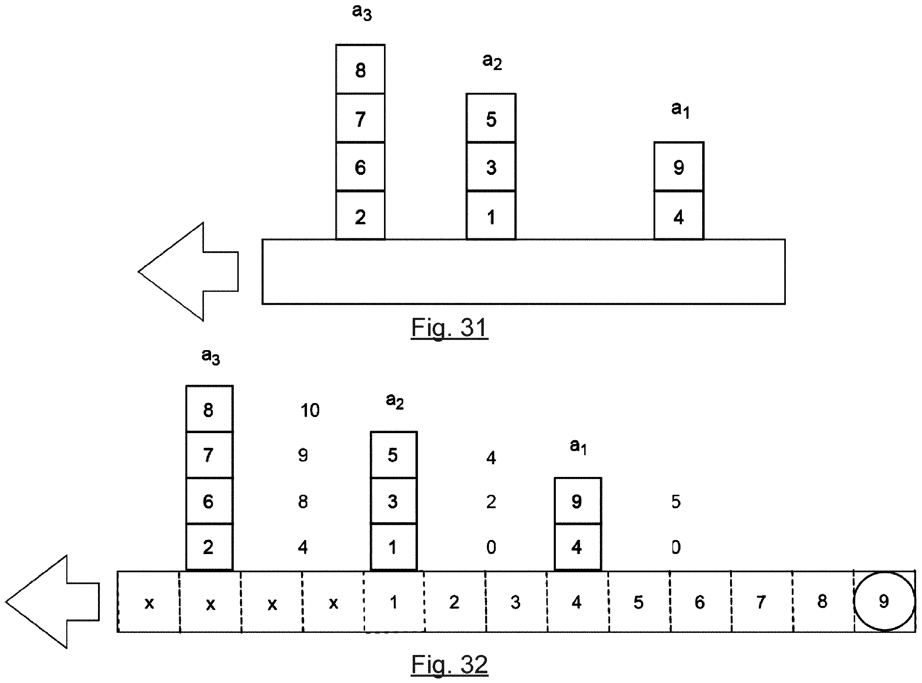

Dans l'exemple illustré sur la **figure 31** , le premier batch sera composé des charges : 1, 2, 3, 4, 5, 6, 7, 8, 9. Le batch suivant pourra être : xx, yy ou 9, xx, yy,..., ou encore 7, 8, 9, xx, yy,... (mais pas 8, xx, yy, ni 7, 9, xx, yy).

## 7.2 TRAITEMENT DYNAMIQUE DES BATCHS

Le traitement de chaque batch est réalisé de manière continue et en série (batch1, batch2 etc...). Le traitement d'un batch est un calcul statique de toutes les dates d'injection des charges composant ce batch. La liaison et la construction de ces batchs permet de donner une solution globale au problème de fusion de flux entrant en un flux sortant, dans les entrepôts, qui est un problème dynamique.

### 7.2.1 Calcul des dates d'injection d'un premier batch

La **figure 32** illustre un exemple de premier batch pour une séquence de sortie $\sigma$ = (1,2, 3,4, 5,6, 7,8, 9,10), avec les charges 2, 6, 7 et 8 (pour lesquelles les dates d'injection sont notées Temps 4, Temps 8, Temps 9 et Temps 10 respectivement) sur l'allée $a_3$, les charges 1, 3 et 5 (pour lesquelles les dates d'injection sont notées Temps 0, Temps 2 et Temps 4 respectivement) sur l'allée $a_2$ et les charges 4 et 9 (pour lesquelles les dates d'injection sont notées Temps 0 et Temps 5 respectivement) sur l'allée $a_1$.

### 7.2.2 Injection dans le temps du batch

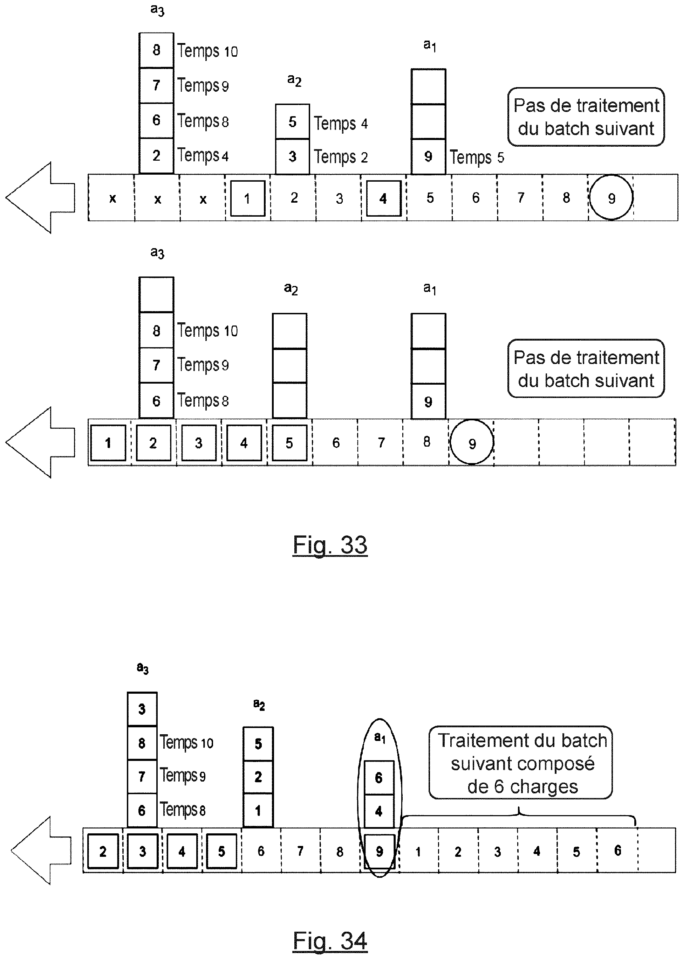

Tant que le pas temporel du collecteur attendant le numéro de séquence le plus élevé (ici n° 9, entouré par un cercle sur les figures 32 et 33) n'est pas arrivé devant l'allée d'injection la plus en amont (c'est-à-dire l'allée $a_1$), aucun traitement du batch suivant n'est réalisé. Le traitement des charges du premier batch continue au fur et à mesure que le temps passe, injectant ces charges à la date d'injection calculée au préalable comme le montre la partie haute et la partie basse de la **figure 33** .

### 7.2.3 Formation du prochain batch et calcul statique des futures dates d'injection de celui-ci

Lorsque le dernier pas marqué de la dernière charge de la séquence du premier batch arrive devant l'allée $a_1$, c'est le signal pour construire le prochain batch. Ce batch est constitué de toutes les charges valides de chaque liste FIFO de chaque allée suivant les règles expliquées plus haut.

La **figure 34** illustre la formation du batch suivant, composé de six nouvelles charges apparues sur les allées et numérotées de 1 à 6 (numéros de séquence de la nouvelle séquence de sortie souhaitée pour le nouveau batch).

L'algorithme de calcul des dates d'injection statique est appliqué à ce nouveau batch en considérant la partie libre du collecteur (à droite de la place réservée pour la charge numéroté 9 du batch précédent). Les dates d'injection sont calculées en fonction d'une échelle de temps dont l'origine correspond à la première injection d'une charge du nouveau batch.

La configuration du système statique, prise au « Temps 5 » comme le montre la figure 34, est fournie (comme données d'entrée) à l'algorithme. Cette configuration est définie comme suit : $k$ = 3 allées comprenant six nouvelles charges apparues (appartenant au nouveau batch). Chaque nouvelle charge est identifiée par un numéro de séquence unique en fonction de la nouvelle séquence de sortie de ce nouveau batch : σ = (1,2, 3,4, 5,6). C'est une séquence réalisable. Nous connaissons les distances temporelles par rapport à la dernière allée :

$$\Delta_1 = 6, \ \Delta_2 = 3 \ et \ \Delta_3 = 0.$$

La date 0 est fixée par l'injection simultanée des deux nouvelles charges numérotées 1 et 4 (sur les allées $a_2$ et $a_1$ respectivement). Depuis cette origine de temps, l'algorithme donne une date d'injection $T(u)$ pour chacune des six nouvelles charges $u$ de ce nouveau batch.

$$L^{'} = \{1,4\} \ et \ t_0 = \max \{\Delta_1 + 1 - \sigma(4), \ \Delta_2 + 1 - \sigma(1)\} = \max \{3,3\} = 3$$

$$T(1) \ = \ t_0 \ + \ \sigma(1) \ - 1 \ - \Delta_2 \ = 0$$

$$T(2) \ = \ t_0 \ + \ \sigma(2) \ - 1 \ - \Delta_2 \ = 1$$

$$T(3) \ = \ t_0 \ + \ \sigma(3) \ - 1 \ - \Delta_3 \ = 5$$

$$T(4) \ = \ t_0 \ + \ \sigma(4) \ - 1 \ - \Delta_1 \ = 0$$

$$T(5) \ = \ t_0 \ + \ \sigma(5) \ - 1 \ - \Delta_2 \ = 4$$

$$T(6) \ = \ t_0 \ + \ \sigma(6) \ - 1 \ - \Delta_1 \ = 2$$

7.2.4 Lien entre les dates d'injection d'un batch et le temps réel qui s'écoule

Chaque charge de chaque batch se voit donner une date d'injection en fonction d'une origine de temps bien précise relatif au système statique. Ces dates d'injection doivent être placées au bon moment dans la configuration dynamique pour être en cohérence avec la solution dynamique.

Une échelle de temps commune entre tous les batchs permet de lier les injections de toutes les charges dans le système dynamique. Son unité de temps est le «pas temporel » du collecteur, comme défini plus haut. Appelons « Temps » le temps qui s'écoule de cette échelle de temps commune, avec le Temps 0 représentant la date de début des opérations dans le système.

Les dates d'injection données par l'algorithme sont à replacer correctement dans cette échelle de temps commune. Il convient pour cela de trouver la correspondance temporelle, dans le système dynamique, de la situation décrite à la date 0 du batch. C'est-à-dire qu'il faut faire correspondre la date 0 du batch avec le Temps de l'échelle commune permettant réellement la première injection de la charge de ce batch. Il faudra ensuite décaler toutes les dates d'injection de ce batch d'exactement ce temps.

Pour cela, il faut connaitre le Temps (aussi noté « Tb ») auquel l'appel de l'algorithme a été lancé et la (ou au moins une des) première(s) charge(s) du batch à être injectée au plus tôt sur le collecteur, appelons-là $\sigma_*$. La date 0 du batch correspond à l'action d'injection de cette charge $\sigma_* = a_i(j)$, et elle est effectuée réellement par le système dynamique exactement $\sigma(\sigma_*) + \Delta_{1,*}$ pas temporels après l'appel.

En revenant à notre exemple, il faut ajouter à chaque date d'injection calculée par l'algorithme pour le nouveau batch (pour tout $u \in L$, $T(u)$), la date actuelle (date d'appel de l'algorithme, ici le Temps 5 (c'est-à-dire Tb=5) plus la position de la première charge injectée du nouveau batch dans la nouvelle séquence (ici c'est la charge 1 donc il faut ajouter $\sigma(1) = 1$) plus la distance entre l'allée $a_1$ et celle contenant cette première charge injectée (ici $\Delta_{1,2} = 3$). En remarquant que la charge 4 du nouveau batch est aussi injectée en première sur le collecteur (en même temps que la charge 1 du nouveau batch), nous aurions pu la choisir et ajouter σ(4) + $\Delta_{1,1}$ = 4 ; cela revient bien au même que d'ajouter

$$\sigma(1) + \Delta_{1,2} = 1 + 3 = 4 \ .$$

Pour l'application dynamique, nous faisons une transformation linéaire des temps d'injection comme suit :

$$T(1) + 5 + 4 = 0 + 5 + 4 = 9$$

$$T(2) + 5 + 4 = 1 + 5 + 4 = 10$$

$$T(3) + 5 + 4 = 5 + 5 + 4 = 14$$

$$T(4) + 5 + 4 = 0 + 5 + 4 = 9$$

$$T(5) + 5 + 4 = 4 + 5 + 4 = 13$$

$$T(6) + 5 + 4 = 2 + 5 + 4 = 11$$

Dans ce cas, la date au plus tôt de la première charge de la nouvelle séquence passant devant $a_k$ sera exactement $Tb + \sigma(u_*) + \Delta_1 - \Delta_{j^*} + t_0$, avec $u_* = a_{j^*}(1)$ la première charge de la nouvelle séquence à être injectée sur le collecteur (n'étant pas forcément la première charge de la nouvelle séquence). Or, nous savons que $t_0$ est un max atteint exactement par cette charge $u_*$, soit

$$t_0 = \max_{u = a_i(j) \in L'} \{\Delta_i + 1 - \sigma(u)\} = \Delta_{i_*} + 1 - \sigma(u_*)$$

. Ainsi nous savons que la première charge de la nouvelle séquence passera devant $a_k$ à $Tb + \sigma(u_*) + \Delta_1 - \Delta_{j^*} + t_0 = Tb + \sigma(u_*) + \Delta_1 - \Delta_{j^*} + \Delta_{j^*} + 1 - \sigma(u_*) = Tb + 1 + \Delta_1$ , dans l'échelle de temps commune.

Une façon équivalente de donner les temps d'injection dans l'échelle de temps commune est, par définition, de donner à l'algorithme $t_0 = Tb + 1 + \Delta_1$, dans le cas où nous prenons connaissance du système exactement à un instant $Tb = T(u_{last}) - \Delta_1 + \Delta_i^{last}$, avec $u_{last} = a_i^{last}(j^{last})$ dernière charge de la séquence de l'instant précédent.

Dans l'exemple précédent, l'instant $Tb = 5$ correspond exactement à la condition donc nous aurions pu appeler l'algorithme avec $t_0 = Tb + 1 + \Delta_1 = 5 + 1 + 6 = 12$ (plutôt que 3) et nous aurions directement eu les temps d'injection exprimés dans l'échelle de temps commune.

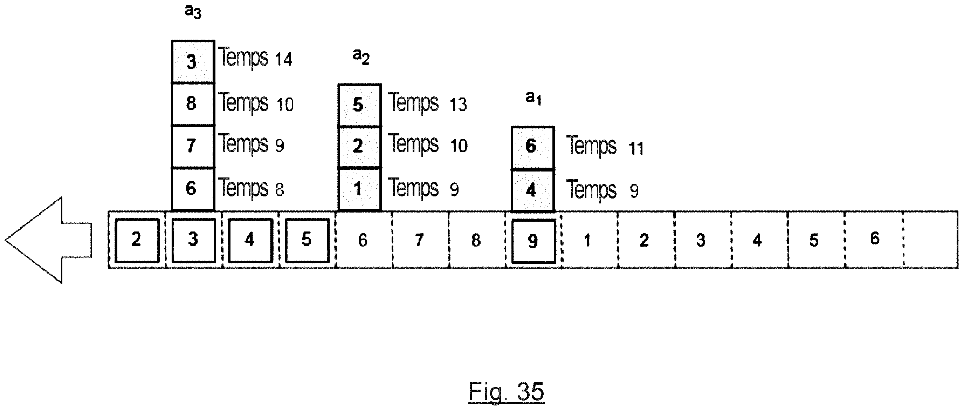

Au final, notre système peut être représenté comme le montre la **figure 35** . Dans l'échelle de temps commune :

- les dates d'injection des charges 6, 7 et 8 du batch précédent sont notées Temps 8, Temps 9 et Temps 10 respectivement ; et
- les dates d'injection des charges 1, 2, 3, 4, 5 et 6 du nouveau batch sont notées Temps 9, Temps 10, Temps 14, Temps 9, Temps 13 et Temps 11 respectivement.

## 8. DETERMINATION DES DATES D'INJECTION DES CHARGES, POUR UN COLLECTEUR TRAITANT UN OU PLUSIEURS FLUX PERTURBATEURS

Nous supposons qu'il existe maintenant au moins un flux perturbateur (de charges perturbatrices) déjà présent sur le collecteur. Ces charges perturbatrices ne font partie d'aucun des flux d'injection (flux entrants), par conséquent elles ne sont pas ordonnées dans la séquence de sortie souhaitée des flux d'injection. Ces charges perturbatrices perturbent l'introduction des charges utiles contenues dans les flux d'injection car elles occupent des places sur le collecteur. Il faut prendre en compte ces obstructions qui bloquent l'injection de charges utiles de temps en temps. De plus, si ces charges perturbatrices disparaissent du collecteur entre les allées d'injection, cela peut créer des espaces vides dans le flux de sortie du collecteur. Notre objectif est toujours de respecter une séquence de sortie en maximisant le débit du collecteur et ainsi minimiser ces espaces vides.

Pour parvenir à cet objectif, nous utilisons des listes de dates non valides à exploiter avec la modélisation du Job Shop vu précédemment.

Le tableau suivant donne de nouvelles notations nécessaires pour la suite (récapitulatif des notations pour les flux perturbateurs).

Le tableau suivant donne de nouvelles notations pour les flux perturbateurs.

[Tableaux3]

| $F$ | Flux perturbateur |
|---|---|
| $n'$ | Nombre total de charges perturbatrices |
| $l(p)$ ou $l_p$, $p \in F$ | Numéro de la dernière allée devant laquelle passe la charge perturbatrice $p$ |
| $g(p)$ ou $g_p$, $p \in$ F | Numéro de la première allée devant laquelle passe la charge perturbatrice $p$ |
| $U_i$, $i \in \{1, \dots, k\}$ | Liste des dates interdites pour une injection de charge utile par l'allée $a_i$ |
| $\sigma'$ | Liste ordonnée des charges perturbatrices |
| $\sigma'_p$ | La p$^{ième}$ charge perturbatrice du flux perturbateur |
| $\sigma'(u, v)$ | Durée qui sépare la charge perturbatrice u de la charge perturbatrice v dans le flux perturbateur, en nombre de « pas », à un instant donné. |
| $t_r$ | Date d'arrivée de la première charge perturbatrice du flux perturbateur devant l'allée $a_1$, dans le cas particulier où cette charge passe effectivement devant cette allée (lien avec $\delta_p$) |
| $\delta_p$ | Distance entre la charge perturbatrice $p$ par rapport à la dernière allée $a_k$ à la date O |
| $start_p$ | Date à laquelle la charge perturbatrice $p$ est injectée « fictivement » devant l'allée $a_1$. (fictivement si $g_p > 1$ car dans ce cas, la charge p ne passera pas devant l'allée $a_1$) |

## 8.1 MODELISATION DU SYSTEME AVEC UN FLUX PERTURBATEUR SUBI

Les charges perturbatrices du flux perturbateur bloquent l'injection d'une charge utile sur le collecteur lorsqu'elles passent devant les allées d'injection. Il faut donc calculer les dates non valides pour une injection d'une charge utile pour chaque allée. Nous cherchons maintenant à calculer les nouvelles dates d'injection des charges utiles en tenant compte du flux perturbateur subi (sur lequel par définition nous supposons n'avoir aucun contrôle). Nous noterons qu'il peut y avoir désormais des espaces libres dans le flux de sortie, nous recherchons cependant la minimisation optimale de ces espaces inoccupés.

### 8.1.1 Création de la liste des dates non valides

Nous pouvons prendre en compte un flux perturbateur subi, comprenant des charges perturbatrices qui restent sur le collecteur, passant ainsi devant toutes les allées et faisant partie du flux final du collecteur (mélangé avec les charges utiles des flux d'injection). Nous pouvons également prendre un compte un flux perturbateur subi, comprenant des charges perturbatrices présentes sur le collecteur mais disparaissant entre les allées d'injection, créant ainsi des emplacements libres devant certaines allées mais pas toutes. Nous pouvons également prendre en compte le cas d'un mélange de ces types de flux perturbateurs subis, ainsi que des charges perturbatrices arrivant et repartant entre les allées. Tout est envisageable, nous pouvons même prendre en compte une obstruction quelconque sur un ou plusieurs pas du collecteur (une obstruction n'étant pas obligatoirement une charge perturbatrice mais pouvant également être un endroit du collecteur qui est abimé, réservé, etc.).

Dans tous les cas, l'idée est de prendre en compte les charges perturbatrices et/ou autres obstructions, pour calculer les dates non valides pour une injection d'une charge utile d'une allée. Les dates non valides sont obtenues en calculant les instants de passages de chaque obstruction (c'est-à-dire chaque charge perturbatrice du flux perturbateur ou autre obstruction) devant cette allée d'injection. Notons $U_i$ l'ensemble des dates non valides où l'allée $a_i$ ne peut pas injecter une charge utile à cause des charges perturbatrices et/ou obstructions quelconques de pas temporels du collecteur.

### 8.1.2 Idée de la solution pour des allées consécutivement bien réparties

Ce problème de planification Job Shop, avec une liste de dates non valides pour chaque machine, peut être résolu en suivant presque les mêmes étapes que celles du paragraphe 6.2.1.

Voici la démarche dans le cas particulier d'allées bien réparties par pas de convoyeur :

*Pour commencer, en supposant que la première charge de la séquence provienne de l'allée $a_i$, les opérations {$o_{1,i}$,*

$o_{1,\{i+1\}}, \ldots, o_{1,k}\}$ associées à ce job commencent aux dates $t$, $t + 1$, ... $t + k - i$ à partir d'une date $t$ qui permet d'avoir les dates $t$, $t + 1$, ..., $t + k - i$ respectivement sur chaque machine $\{M_i, M_{\{i+1\}}, \ldots, M_k\}$ libres (c'est-à-dire sans obstruction}.

Ensuite, les opérations du job correspondant à la prochaine charge de la séquence seront planifiées d'abord en exécutant l'opération à traiter sur la machine $M_k$. Cette opération $O_{u,k}$ sera planifiée juste après (sans temps mort) l'opération précédente programmée sur $M_k$. En supposant que cette opération commence à un nouvel instant $t$ (différent de l'instant $t$ défini plus haut pour les calculs liés à la première charge) l'opération sur la machine $M_{\{k-1\}}$ (si elle existe) est planifiée à l'instant $t - 1$, et ainsi de suite, jusqu'à ce que toutes les opérations soient programmées. Si une opération ne peut pas être opérée à ces dates indiquée à cause d'une obstruction, nous recommençons la planification du job (entier) en décalant l'instant $t$ d'exécution de l'opération à traiter sur la machine $M_k$ d'une unité de temps (c'est-à-dire d'un emplacement, pas ou créneau).

Cette procédure est appliquée de manière itérative sur chacun des jobs suivants de la séquence donnée.

Les dates réelles d'injection des charges utiles sur le collecteur sont déduites directement à partir du début de la première opération de chaque job. L'unité de temps utilisée est celle définie plus haut.

ATTENTION : cette méthode ne donne pas toujours un flux sans espaces vides. Le flux perturbateur et/ou les obstructions sont subis, donc nous maximisons le débit sans garantie de maximalité.

8.1.3 Idée de la solution avec un flux perturbateur subi dans le cas général

S'appuyant sur le paragraphe ci-dessus, voici la démarche suivie dans le cas général pour calculer les dates réelles d'injection lors de la fusion de plusieurs flux comprenant des flux entrants (flux d'injection) et (au moins) un flux perturbateur subi.

Considérons que nous pouvons commencer à planifier les jobs à partir de l'instant 0. N'oublions pas qu'il faut suivre un ordre particulier dans l'exécutions des opérations de la machine $M_k$ tout en minimisant les temps morts de cette machine.

Pour commencer, appelons $t_0 (\geq 0)$ la date au plus tôt à laquelle le job associé à la première charge de la séquence peut être affecté sur la machine $M_k$, s'il n'y avait pas de flux perturbateur. Planifions les charges dans l'ordre donné par la séquence souhaitée sans prendre en compte le flux perturbateur, et ensuite on modifie la date d'injection en suivant cet ordre. En effet, on note que la planification d'une charge $\sigma_c$ impacte uniquement les charges $\sigma_{c'}$ tel que $c' > c$.

Pour le job associé à une charge $u$, planifions d'abord son opération à traiter sur la machine $M_k$. Cette opération $O_{u,k}$ sera planifiée à $t_0$ si c'est la charge $\sigma_1$, sinon juste après (sans temps mort) l'opération précédente programmée sur $M_k$. En supposant que cette opération sur $M_k$ commence à l'instant $t$, l'opération sur la machine $M_{\{k-1\}}$ (si elle existe) est planifiée à l'instant $t - \triangle_{k-1}$. Puis l'opération sur la machine $M_{\{k-2\}}$ (si elle existe) est planifiée à l'instant $t - \triangle_{k-2}$, et ainsi de suite, jusqu'à ce que toutes les opérations soient programmées. Si une opération ne peut pas être opérée à ces dates indiquées à cause d'une obstruction, nous recommençons la planification du job (entier) en décalant l'instant $t$ d'exécution de l'opération à traiter sur la machine $M_k$ d'une unité de temps (c'est-à-dire d'un emplacement, pas ou créneau).

Cette procédure est appliquée de manière itérative sur chacun des jobs suivants de la séquence donnée.

Il faut décaler, si besoin, la date 0 et la date $t_0$ pour les faire correspondre à leur définition. Le décalage de la date 0, devant correspondre à la première injection possible de charge sur le collecteur, se répercute sur l'ensemble des planifications (dates d'injection) qui seront à décaler à leur tour.

Les dates réelles d'injection des charges utiles sur le collecteur sont déduites directement à partir du début de la première opération de chaque job. L'unité de temps utilisé est celle définie plus haut.

ATTENTION : la présence de flux perturbateur subi ne permet pas toujours un flux sans espace vide sur le collecteur. Avec cette méthode, nous maximisons le débit du collecteur, sans garantie de maximalité.

8.1.4 Algorithme dans le cas général

L'algorithme 3 ci-après calcule les dates d'injection des charges utiles en tenant compte du flux perturbateur matérialisé par des dates d'interdiction d'injection par allée.

La date 0 correspond à la première charge injectée sur le collecteur, au plus tôt. La date $t_0$ est toujours la date à laquelle la première charge de la séquence passe devant l'allée $a_k$. La formule générale pour $i = 1 \ldots k$ :
$t_0 = \max, \{\triangle_i + 1 - \sigma(u)\}$ reste valide s'il n'y pas de $u = a_i(j) \in L$, $j \leq h_i$ conflit avec le flux perturbateur lors de l'injection de la première charge de la séquence.

L'algorithme 3 donne la date d'injection de chaque charge en prenant en compte le flux perturbateur et en corrigeant la date $t_0$ si nécessaire. Le flux perturbateur est pris en compte par le calcul préalable des ensembles $U_i$, $i = 1 \ldots k$ donnant les dates de passage de chaque charge perturbatrice de ce flux perturbateur devant l'allée $a_i$. Ces dates sont donc des dates d'injection interdites (aussi appelées dates non valides pour une injection de charge utile).

Nous utilisons dans cet algorithme la notation simplifiée « $u = \sigma_c = a_i(j) \in L$ » pour définir une charge $u$

correspondant à la $c^{i\grave{e}me}$ charge de la séquence $\sigma$, définie également par sa position $j$ dans l'allée $a_j$.

*Algorithme 3 : Calcul des dates d'injection avec des flux perturbateurs subis*

$\boldsymbol{Require:}\sigma, \ \Delta_i, \ U_i, \ i \in \{1, \dots, k\}$ *// Donner les* $U_i$*, calcul à faire au cas par cas*

$$t_0 = \max_{u = a_i(j) \in L'} \{\Delta_i + 1 - \sigma(u)\} \quad // \text{ Calcul théorique de } t_0$$

$\boldsymbol{last} = t_0$ *// Date théorique du passage de* $\sigma_1$ *devant l'allée* $a_k$

$\boldsymbol{for} \ c = 1 \ \boldsymbol{to} \ n \ \boldsymbol{do}$

$\qquad \boldsymbol{set} \ u = a_i(j) = \sigma_c$

$\boldsymbol{do} \ \{$ *// Planification de la charge* $\sigma_c$ *en évitant toutes obstructions*

$\qquad \boldsymbol{check} = \boldsymbol{true}$

$\qquad \boldsymbol{for \ all} \ z = k \ à \ z = i, \ z - - \ \boldsymbol{do}$

$\qquad\qquad \boldsymbol{if} \ (last - \Delta_z \in U_z) \ \boldsymbol{then} \ check = false;$

$\qquad \boldsymbol{end \ for}$

$\qquad \boldsymbol{if} \ (check = false) \ \boldsymbol{then} \ \{$

$\qquad\qquad last = last + 1 \ ;$

$\qquad\qquad \boldsymbol{if} \ (c = 1) \ \boldsymbol{then} \ t_0 = t_0 + 1; \ // t_0 \ est \ modifié \ si \ perturbation$

$\qquad \} \ \boldsymbol{end \ if}$

$\} \ \boldsymbol{while} \ (check = false) \ ;$

$\qquad T(u) = last - \Delta_i$ *// Date finale d'injection pour la charge* $\sigma_c$

$\qquad last = last + 1$ *// Date théorique de passage de* $\sigma_{c+1}$ *devant l'allée* $a_k$

$\boldsymbol{end \ for}$

*// Décalage éventuel de la date 0*

set $t_{min}$ to $min\{ T(u), \ \forall u \in L \}$

$\boldsymbol{if} \ (t_{min} \ != 0) \ \boldsymbol{then}$

$t_0 = t_0 - t_{min}$

$\boldsymbol{for} \ u \in L \ \boldsymbol{do}$

$\qquad T(u) = T(u) - t_{min}$

$\boldsymbol{end \ for}$

$\boldsymbol{end}$

$\boldsymbol{return} \ t_0, \ T(u), \ \forall u \in L$

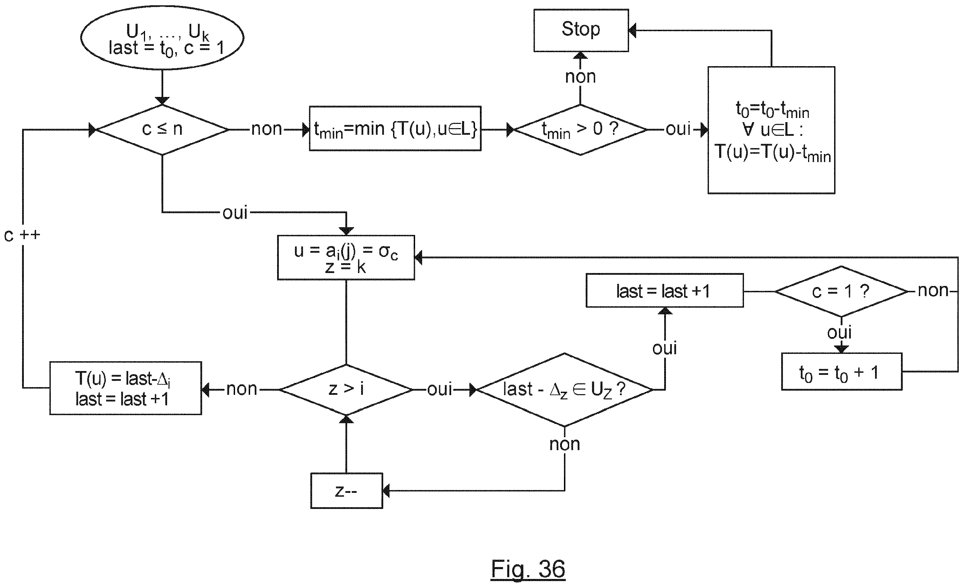

La **figure 36** est un diagramme de l'algorithme 3 ci-dessus.

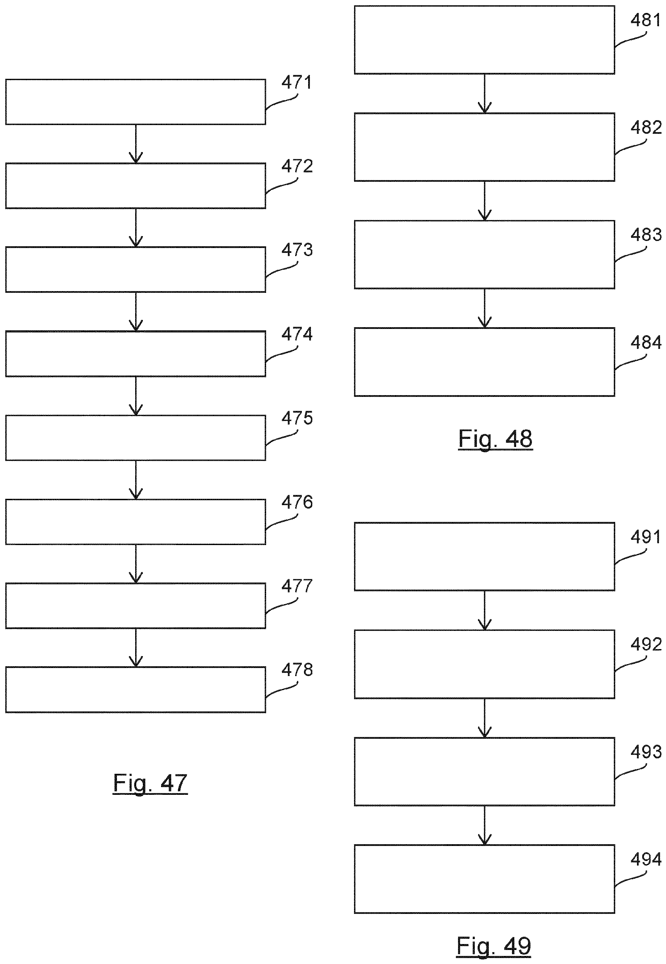

La **figure 47** présente un organigramme d'un procédé de fusion de k flux entrants en un flux sortant, selon un deuxième mode de réalisation particulier basé sur l'algorithme 3 (illustré sur la figure 36). Le procédé est exécuté au moins une fois par le système de pilotage. Une exécution donnée est effectuée à un instant Tb et comprend les étapes suivantes :

- obtention (étape 471) d'un ensemble L comprenant n charges utiles réparties à l'instant Tb sur les k allées et devant être injectées sur le collecteur pour former une séquence de sortie $\sigma$, chacune des n charges utiles étant identifiée par un unique numéro de séquence au sein de la séquence de sortie $\sigma$, chacune des k allées contenant un ensemble ordonné, selon un sens croissant du numéro de séquence, de $h_i$ charges utiles devant être injectées une à une sur le collecteur ;
- pour chaque allée $a_i$, $i \in \{1, ..., k\}$, obtention (étape 472) d'un ensemble $U_i$ de dates non valides pour une injection d'une des charges utiles de l'allée $a_i$ sur le collecteur à cause d'une charge perturbatrice non contrôlée ou d'une autre obstruction d'un pas temporel du collecteur ;
- en ne prenant pas en compte les ensembles $U_i$, $i \in \{1, ..., k\}$, calcul (étape 473) d'une date $t_0$ à laquelle la première charge utile $\sigma$1 de la séquence de sortie $\sigma$ passe devant l'allée $a_k$ ;
- pour la première charge utile $\sigma_1$ de la séquence de sortie $\sigma$, en supposant que la première charge utile $\sigma_1$ provienne de l'allée $a_i$ (étape 474) :

  a) initialisation de t avec $t_0$ ;
  b) si aucune des dates $t$, $t - \Delta_{k-1}$, $t - \Delta_{k-2}$,..., $t - \Delta_i$ n'appartient respectivement aux ensembles $U_k$, $U_{k-1}$, $U_{k-2}$,..., $U_i$, calcul d'une date d'injection de la première charge utile $\sigma_1$ sur le collecteur avec la formule suivante :

$$T(u) = t - \Delta_i \ ,$$

  avec $u = \sigma_1 = a_i(j)$ ;
  c) si une des dates $t$, $t - \Delta_{k-1}$, $t - \Delta_{k-2}$,..., $t - \Delta_i$ appartient respectivement à un des ensembles $U_k$, $U_{k-1}$, $U_{k-2}$,..., $U_i$, incrémentation de t d'une unité et réitération des étapes b) et c) avec la nouvelle valeur de t ;

- pour chaque charge utile suivante $\sigma_c$ de la séquence de sortie $\sigma$, $c \in \{2, ..., n\}$, en supposant que la charge utile suivante $\sigma_c$ provienne de l'allée $a_i$ (étape 475) :

  a') incrémentation de t d'une unité, avec t utilisé pour calculer la date d'injection de la charge utile précédente $\sigma_{c-1}$ ;
  b') si aucune des dates $t$, $t - \Delta_{k-1}$, $t - \Delta_{k-2}$,..., $t - \Delta_i$ n'appartient respectivement aux ensembles $U_k$, $U_{k-1}$, $U_{k-2}$,..., $U_i$, calcul d'une date d'injection de la charge utile suivante $\sigma_c$ sur le collecteur avec la formule suivante :

$$T(u) = t - \Delta_i \ ,$$

  avec $u = \sigma_c = a_i(j)$ ;
  c') si une des dates $t$, $t - \Delta_{k-1}$, $t - \Delta_{k-2}$,..., $t - \Delta_i$ appartient respectivement à un des ensembles $U_k$, $U_{k-1}$, $U_{k-2}$,..., $U_i$, incrémentation de t d'une unité et réitération des étapes b') et c') avec la nouvelle valeur de t ;

- calcul (476) de $t_{min}$ selon la formule suivante :

$$t_{min} = min\{ \ T(u), \ \forall \ u \in L \ \};$$

- si $t_{min} > 0$, modification (477) des n dates d'injection selon la formule suivante : $T(u) = T(u) - t_{min}, \ \forall \ u \in L$ ;
- commande (étape 478) du collecteur et des k allées, pour une injection des n charges utiles sur le collecteur conformément aux n dates d'injection $T(u), \ \forall \ u \in L$.

8.1.5 Description d'un mode de réalisation particulier

Parlons d'un flux perturbateur subi déjà présent sur le collecteur, non pris en compte par la séquence souhaitée au final car les charges perturbatrices vont toutes disparaitre avant la dernière allée d'injection. C'est le cas par exemple lorsque nous nous plaçons dans le contexte de la figure 50 (système automatisé GTP Intelis PTS) avec la gestion de l'injection sur le collecteur des charges utiles venant du système automatisé (PTS) mais aussi du retour des charges qui arrivent sur ce collecteur pour retourner dans le système automatisé P(TS) (voir le paragraphe 2.2 sur le contexte de cette application possible).

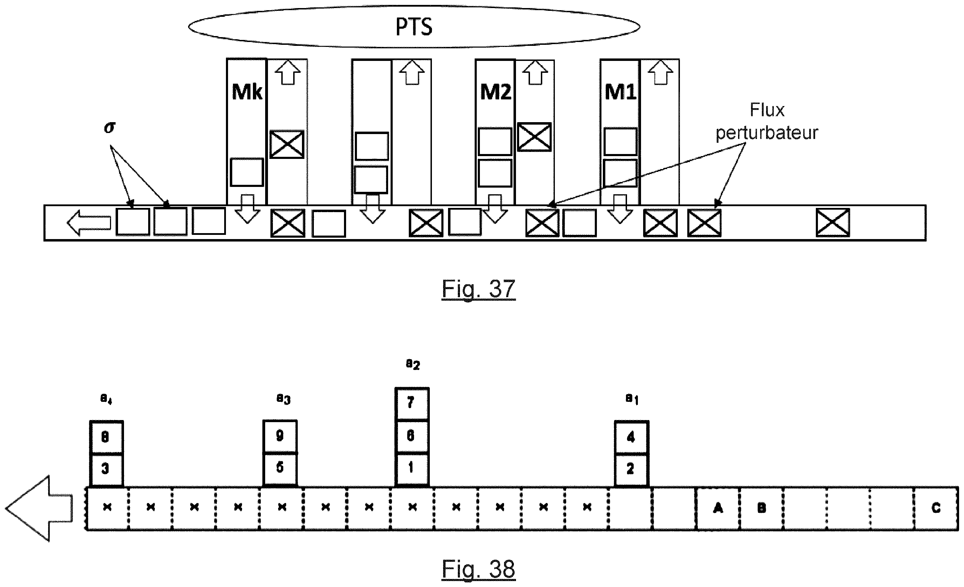

La **figure 37** illustre cette configuration, avec des charges perturbatrices (marquées d'une croix) du flux retour (constituant le flux perturbateur subi) qui retournent vers le système automatisé (PTS).

D'après cette configuration, nous faisons deux constats :

- aucune charge perturbatrice du flux retour (et donc du flux perturbateur) ne passera devant la dernière allée ; et
- les charges perturbatrices quittant le collecteur (vers le système automatisé (PTS)) avant l'allée $a_1$ ne posent aucun problème et seront donc pas étudiées. Toutes les charges restantes passeront forcément devant l'allée $a_1$.

8.1.5.1 Calcul des listes de dates non valides induites par le flux de charges perturbatrices

Soit un flux T de n' charges perturbatrices déjà présentes sur le collecteur et devant sortir du collecteur entre les allées d'injection. Ce flux perturbateur, appelé flux retour, correspond aux charges devant retourner en stock dans le système automatisé (PTS). Ces charges perturbatrices doivent en effet passer devant une à plusieurs allées d'injection. Pour chaque charge perturbatrice P de ce flux retour (flux perturbateur), on note $g_p$ (respectivement $l_p$) le numéro de la première (respectivement dernière) allée devant laquelle passe la charge perturbatrice $p$. Nous allons voir deux méthodes permettant de calculer les dates non valides d'injection ($U_i$), induites par le flux retour en fonction des données connues.

Dans ce mode de réalisation particulier, $g_p = 1$ et $l_p < k$, pour toute charge $p$ du flux retour spécifique au système automatisé (PTS). Nous donnerons cependant la solution générale avec la notation $g_p$ et $l_p$.

- Soit, dans le cas spécifique précité d'un flux retour, nous connaissons la date d'arrivée (noté $t_r$) de la première charge perturbatrice du flux retour (flux perturbateur) devant l'allée numéro $a_1$ (ou encore machine $M_1$). Nous connaissons aussi dans quel ordre les charges perturbatrices de ce flux retour sont réparties sur le collecteur (appelons cette séquence σ') et la durée qui sépare chaque charge perturbatrice d'une autre charge perturbatrice de ce flux perturbateur. Soit $\sigma'_p$ donne la $p^{\text{ième}}$ charge perturbatrice du flux retour et σ'(u, v) donne la durée qui sépare la charge perturbatrice u de la charge perturbatrice v dans le flux perturbateur en nombre de « pas ».

Alors, les instants $t_r$, $t_r + \sigma'(\sigma'_1, \sigma'_2)$, ..., $t_r + \sigma'(\sigma'_1, \sigma'_{n'})$ sont encombrés pour la machine $M_1$ et forment $U_1$.

- Pour la machine $M_i$, i = 2, ... , k, les dates encombrées sont les

$$U_i = \left\{\, t_r + \sigma'\!\left(\sigma'_1,\ \sigma'_j\right) + \Delta_{i,1} \text{ si } l\!\left(\sigma'_j\right) \geq i,\ \ \forall\, j = 1,\ ...\ ,\ n' \right\}.$$

- Une autre façon de voir les choses serait de copier les dates « encombrées » (ou non valides) $U_i$ de la machine $M_i$ des charges perturbatrices u qui ont $l(u) \geq 1 + 1$ et d'ajouter à tous ces instants $\Delta_{i, i+1}$ pour obtenir la liste des dates encombrées $U_{i+1}$ pour la machine $M_{i+1}$.

- Soit, dans un cadre plus général, nous connaissons la distance de chaque charge perturbatrice $p$ par rapport à la dernière allée $a_k$ à la date O que nous noterons $\delta_p$. Avec ces données-ci, nous calculons les $U_i$ comme suit :

$$For\ all\ i \in \{1,\ ...\ ,k\}\ do\ U_i = \varnothing\ ;$$
$$For\ all\ p \in F\ do$$
$$For\ all\ i \in \left\{g_p,\ ...\ ,l_p\right\}\ do$$
$$U_i = U_i \cup \left\{\delta_p - \Delta_i\right\};$$
$$end\ for$$
$$end\ for$$
$$return\ U_i,\ \ \forall\, i = 1 \ldots k$$

8.1.5.2 Exemples

Reprenons la configuration de l'exemple du paragraphe 6.2.2.

Soit $k$ = 4 allées comprenant deux ou trois charges utiles. Chaque charge utile est identifiée par un numéro de séquence unique en fonction de la séquence de sortie $\sigma$ = (1,2, 3,4, 5,6, 7,8, 9). C'est une séquence réalisable. Nous connaissons les distances de chaque allée par rapport à la dernière :

$$\Delta_1 = 12, \ \Delta_2 = 7, \ \Delta_3 = 4 \ et \ \Delta_4 = 0.$$

Comme illustré sur la **figure 38**, on suppose que cette fois il y a trois pas temporels du collecteur obstrués par des charges perturbatrices A, B et C. Nous savons que ces charges perturbatrices passent devant certaines allées et disparaissent du collecteur par la suite. Les charges A et B passent devant les allées $a_1$ et $a_2$. Enfin la charge C passe devant toutes les allées $a_1$, $a_2$ et $a_3$. Ainsi, nous avons $l_A$ = 2, $l_B$ = 2 et 1 $l_C$ = 3, ainsi que $g_A$ = $g_B$ = $g_C$ = 1.

Nous montrons un état du système à la date 0, lorsque la première charge utile du batch va être injectée sur la première place libre du collecteur. Sur le schéma, une position du collecteur non occupée est vide, les croix indiquent les positions prisent par les charges utiles du batch précédent et les lettres les charges perturbatrices du flux perturbateur. La position du flux perturbateur à la date 0 nous permet de déduire les informations suivantes : $\delta_A$ = 13, $\delta_B$ = 14 et $\delta_C$ = 18.

La charge perturbatrice B oblige la charge utile 4 à se décaler dans le temps d'une position et va laisser un espace vide dans le flux final du collecteur. Ensuite la charge perturbatrice C oblige la charge utile 7 à se décaler encore d'une position, laissant un espace vide plus tard dans le flux final du collecteur.

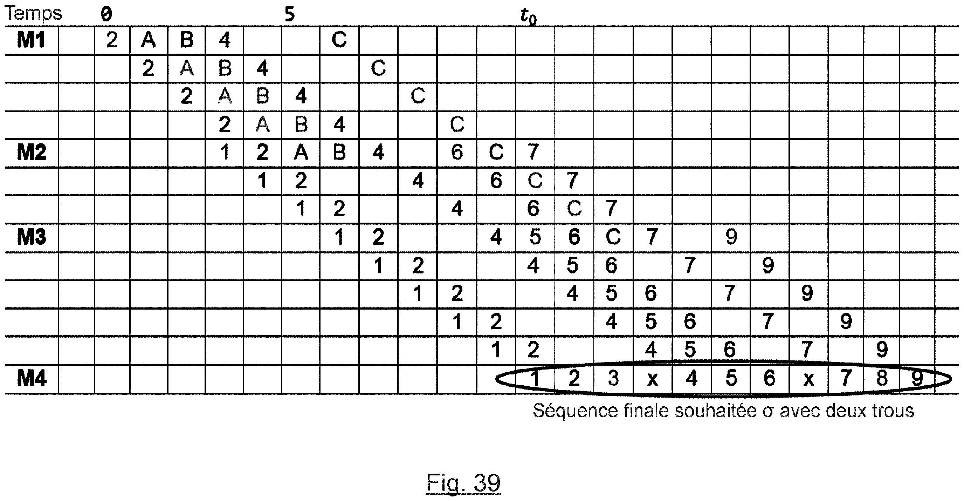

La **figure 39** est un diagramme de Gantt illustrant la solution proposée dans ce cas. Nous pouvons voir que si le flux perturbateur était contrôlé (et non pas subi), le premier espace vide pourrait être comblé par l'allée $a_3$ ou $a_4$ et le deuxième espace vide uniquement par l'allée $a_4$. Ainsi, on éviterait les espaces vides, et on augmenterait le débit du flux final (flux sortant) du collecteur.

## 8.2 MODELISATION DU SYSTEME AVEC UN FLUX PERTURBATEUR CONTROLE

Nous avons vu que lorsque le flux perturbateur était subi, il occasionnait des espaces vides dans le flux final du collecteur. Il y a donc un intérêt de contrôler le flux perturbateur pour éviter ces espaces vides. Nous pourrons ainsi prioriser les charges des flux d'injection sur les charges des flux perturbateurs et arriver à faire passer les charges perturbatrices dans les espaces libres laissés par l'injection des différentes allées.

### 8.2.1 Formulation du problème

Nous supposons maintenant que nous pouvons contrôler le flux perturbateur. Cela revient à maitriser l'injection des charges perturbatrices de ce flux perturbateur, et nous devons décider la date (notée s$tart_p$) à laquelle la charge perturbatrice $p$ est injectée devant l'allée $a_1$ de manière à ne pas perturber le flux de sortie (flux sortant formé par la fusion des flux d'injection), c'est-à-dire en ne créant pas d'espace vide dans le flux de sortie.

### 8.2.2 Idée de l'algorithme solution

Nous allons d'abord calculer les dates d'injection des charges utiles provenant des allées, comme s'il n'y avait pas de flux perturbateur (cf. Section 6). Ce sont ces dates d'injection qui nous donnerons les dates indisponibles ($U_i$) pour une charge perturbatrice passant devant une allée ($a_i$). Puis nous calculerons, en prenant en compte la liste des dates non valides, l'injection des charges du flux perturbateur. Pour ce faire, nous planifions dans l'ordre d'arrivée des charges perturbatrices, chacun de leur passage devant les allées au plus tôt, c'est-à-dire dès que toutes ces dates de passage dans les machines respectives tombent sur des dates libres.

### 8.2.3 Algorithme général

L'algorithme 4 détaillé ci-dessous donne les dates d'injection des charges utiles ainsi que le contrôle du flux perturbateur. Les charges à injecter constituent le flux final du collecteur. Leur injection est décidée sans prendre en compte le flux perturbateur. Ensuite, nous déterminons quand laisser passer les charges du flux perturbateur en considérant cette fois les charges utiles injectées comme jouant le même rôle que le flux subi dans l'algorithme 3 ci-dessus. Ainsi nous pouvons utiliser la même technique que précédemment, avec le calcul des ensembles $V_i$, $i$ = 1 ... $k$ donnant les dates de passage de chaque charge utile du flux injecté devant l'allée $a_i$. Ces dates sont donc des dates d'injection interdites pour les charges perturbatrices.

Rappelons que $\sigma'_{p, p'}$ donne la distance qui sépare les charges perturbatrices $p$ et $p'$ à la date 0 et $t_r$ donne

la date, sans attente, d'arrivée de la 1$^e$ charge du flux perturbateur devant l'allée numéro $a_1$.

Nous utilisons dans cet algorithme la notation simplifiée « $u = \sigma_c = a_i \, (j) \in L$ » pour définir une charge $u$ correspondant à la $C^{ième}$ charge de la séquence $\sigma$, définie également par sa position $j$ dans l'allée $a_i$.

*Algorithme 4 : Calcul des dates d'injection des charges des flux perturbateurs contrôlés*

$$\boldsymbol{Require : \sigma, \; \Delta_i, \Delta_{1i}, \; i \in \{1, \ldots, k\}}$$

$$t_0 = \max_{u = a_i(j) \in L'} \{\Delta_i + 1 - \sigma(u)\} \quad \textit{// Calcul théorique de } t_0$$

$$\boldsymbol{for \; all \; i \in \{1, \ldots, k\} \; do}$$

$$\boldsymbol{for \; all \; j \in \{1, \ldots, h_i\} \; do}$$

$$\boldsymbol{set \; u = a_i(j)}$$

$$T(u) = t_0 + \sigma(u) - 1 - \Delta_i$$

$$\boldsymbol{for \; all \; z \in \{i, \ldots, k\} \; do}$$

$$V_z = V_z \; \cup \; \{T(u) + \Delta_i - \Delta_z\}$$

$$\boldsymbol{end \; for}$$

$$\boldsymbol{end \; for}$$

$$\boldsymbol{end \; for}$$

$$\boldsymbol{set \; t = \; \delta_1 - \Delta_1} \; \textit{// Arrivée de la première charge perturbatrice devant } a_1$$

$$\boldsymbol{for \; all \; p = 1 \; to \; f \; do} \; \textit{// Charge identifiée par leur place dans } \sigma_f$$

$$\boldsymbol{do \; \{}$$

$$\boldsymbol{check = true}$$

$$\boldsymbol{for \; i = g_p \; to \; l_p \; do}$$

$$\boldsymbol{if \; (t + \Delta_1 - \Delta_i \in V_i) \; then \; check = false; t + +; break;}$$

$$\boldsymbol{end \; for}$$

$$\boldsymbol{\} while \; (check = false) \; ;}$$

$$\boldsymbol{start_p = t}$$

$$t = Max \; (t + 1, \; \delta_{p+1} - \Delta_1) \; \textit{// Attente possible de l'arrivée de p+1}$$

$$\boldsymbol{end \; for}$$

$$\boldsymbol{return \; T(u), \; start_p, \; \forall u \in L, \; \forall p \in F}$$

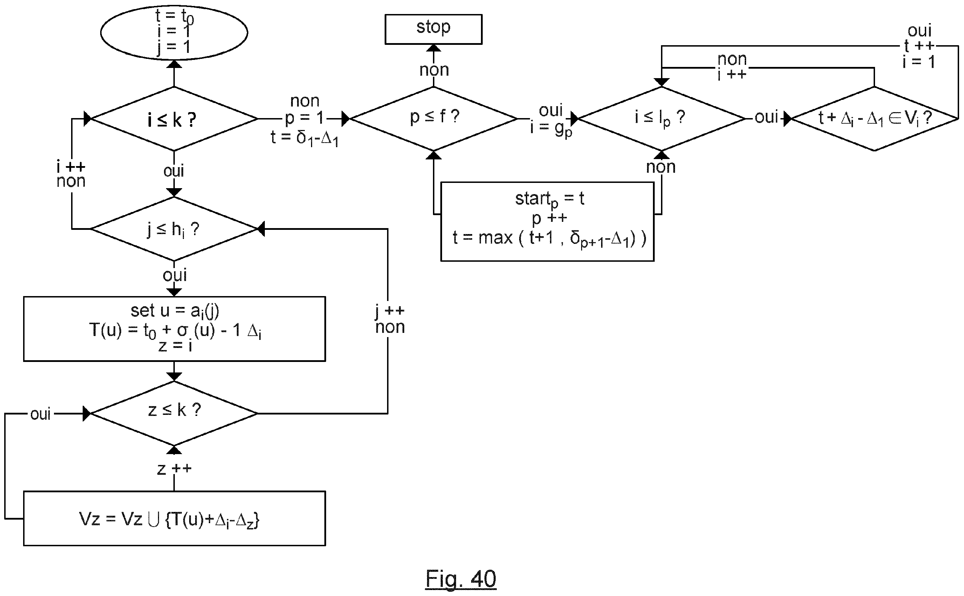

La **figure 40** est un diagramme de l'algorithme 4 ci-dessus.

La **figure 48** présente un organigramme d'un procédé de fusion de k flux entrants en un flux sortant, selon un troisième mode de réalisation particulier basé sur l'algorithme 4 (illustré sur la figure 40). Le procédé est exécuté au moins une fois par le système de pilotage. Une exécution donnée est effectuée à un instant Tb et comprend les étapes suivantes :

- pour chaque charge utile $u = a_i(j) \in L$ provenant d'une allée $a_i$, calcul (étape 481) des dates de passage de la charge utile devant les allées $a_i$ à $a_k$, connaissant la date d'injection $T(u)$ de la charge utile sur le collecteur ;
- pour chaque allée $a_i$, $i \in \{1, ..., k\}$, obtention (étape 482) d'un ensemble $V_i$ contenant chaque date de passage d'une des charges utiles devant l'allée $a_i$ ;

- pour chaque charge perturbatrice contrôlée $p$ d'un flux perturbateur contrôlé grâce à un moyen de contrôle situé le long du collecteur et avant une allée $a_{g(p)}$ dans le sens de déplacement du collecteur, avec $g(p) \in \{1, ..., k\}$, $a_{g(p)}$ étant également la première allée, dans le sens de déplacement du collecteur, devant laquelle passe la charge perturbatrice contrôlée (étape 483) :

a) initialisation de t avec la date $\delta_1 - \Delta_1$, avec $\delta_1$ représentant la date d'arrivée possible, en cas de non mise en attente, de la première charge perturbatrice contrôlée devant l'allée $a_k$ ;
b) calcul des dates $t + \Delta_{1,g(p)}$, $t + \Delta_{1,g(p)+1}$,..., $t + \Delta_{1,l(p)}$ de passage de la charge perturbatrice contrôlée devant les allées $a_{g(p)}$ à $a_{l(p)}$, avec $a_{l(p)}$ la dernière allée, dans le sens de déplacement du collecteur, devant laquelle passe la charge perturbatrice contrôlée ;
c) si aucune des dates $t + \Delta_{1,g(p)}$, $t + \Delta_{1,g(p)+1}$,..., $t + \Delta_{1,l(p)}$ n'appartient respectivement aux ensembles $V_{g(p)}$, $V_{g(p)+1}$,..., $V_{l(p)}$, calcul d'une date fictive de passage $start_p$ de la charge perturbatrice contrôlée $p$ devant l'allée $a_1$, avec la formule suivante : $start_p p = t$ ;
d) si une des dates $t + \Delta_{1, g(p)}$, $t + \Delta_{1, g(p)+1}$,..., $t + \Delta_{1, l(p)}$ appartient respectivement à un des ensembles $V_{g(p)}$, $V_{g(p)+1}$, ..., $V_{l(p)}$, incrémentation de t d'une unité et réitération des étapes b), c) et d) avec la nouvelle valeur de t ;

- commande (étape 484) du moyen de contrôle, pour une injection à la date $start_p + \Delta_{1, g(p)}$ de chaque charge perturbatrice contrôlée $p$ devant l'allée $a_{g(p)}$.

8.2.4 Description d'un mode de réalisation particulier

Prenons l'exemple commun à tous les cas précédents pour pouvoir comparer les solutions finales.

Soit k = 4 allées comprenant deux ou trois charges. Chaque charge est identifiée par un numéro de séquence unique en fonction de la séquence de sortie $\sigma = (1,2, 3,4, 5,6, 7,8, 9)$. C'est une séquence réalisable. Nous connaissons les distances de chaque allée par rapport à la dernière :

$\Delta_1 = 12$, $\Delta_2 = 7$, $\Delta_3 = 4$ et $\Delta_4 = 0$. Le flux perturbateur est composé des charges A, B, C telles que $l_A = 2$, $l_B = 2$,

$$l_C = 3, \quad g_A = g_B = g_C = 1, \delta_A = 13, \quad \delta_B = 14$$

et

$$\delta_C = 18.$$

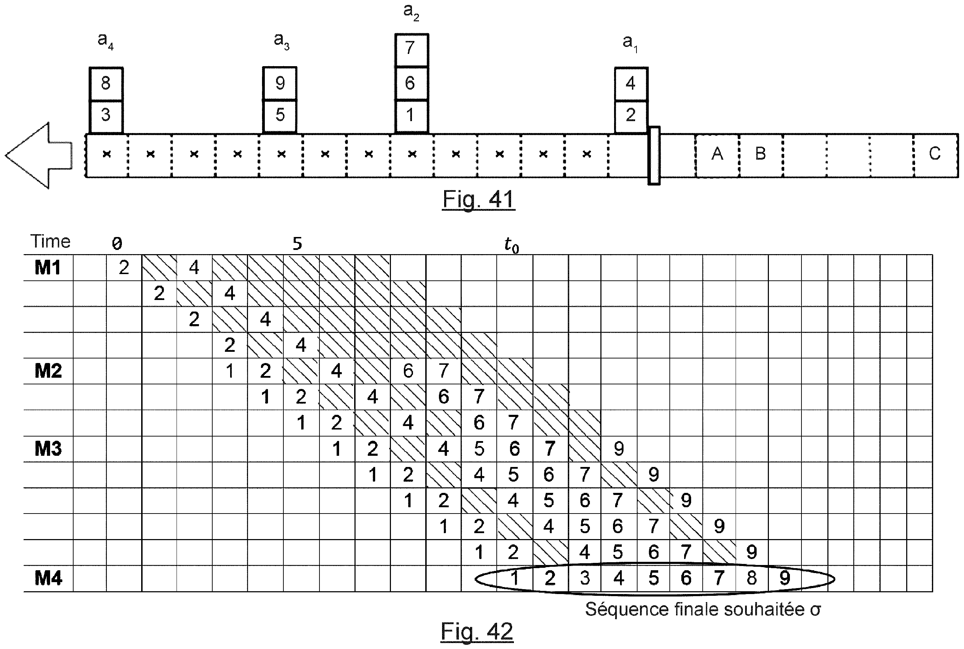

Cette fois, le flux perturbateur est contrôlable. Nous pouvons voir sur la **figure 41** le point de contrôle de ce flux perturbateur, matérialisé par un rectangle vertical juste avant l'allée $a_1$.

La **figure 42** illustre, sous la forme d'un diagramme de Gantt, la solution sans prendre en compte le flux perturbateur (« solution d'injection pure »).

La solution de l'algorithme prenant en compte le flux perturbateur, revient à glisser les charges perturbatrices dans les cases grisées, laissées vides par la solution d'injection pure. La charge A est laissée passée dès qu'elle arrive au point de contrôle du flux perturbateur alors que la charge B est retenue pendant une unité de temps. Cette attente permet de faire passer la charge perturbatrice B dans les espaces libres des injections, juste avant que la charge 5 ne soit injectée. Il en est de même avec la charge C et la charge 8 de la séquence.

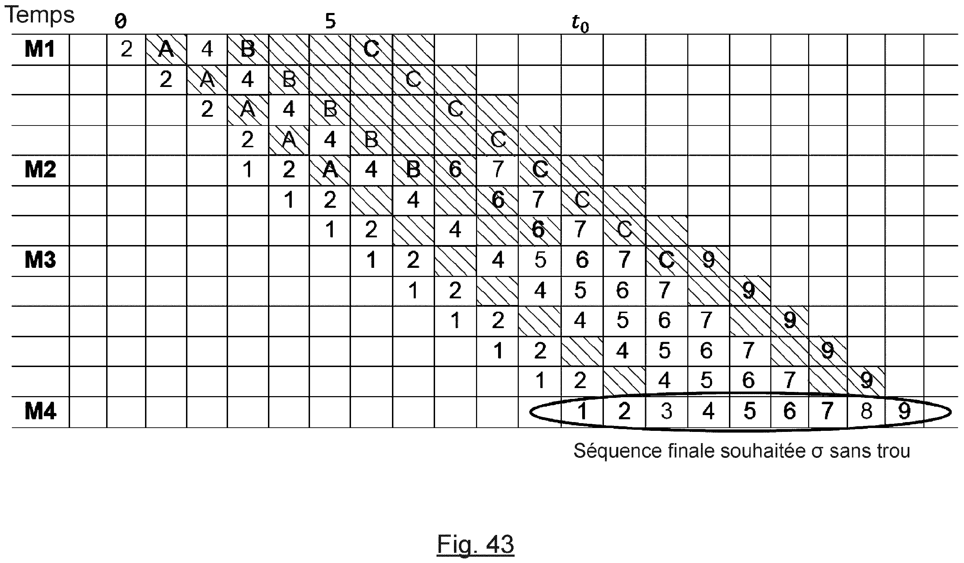

La **figure 43** illustre, sous la forme d'un diagramme de Gantt, la solution proposée pour contrôler le flux perturbateur (c'est-à-dire en choisissant le placement des charges perturbatrices). Les charges B et C ne forment plus d'espace vide dans le flux final du collecteur. Elles ont été intercalées à des endroits stratégiques afin que l'espace vide qu'elle laisse dans un premier temps soit ensuite comblé par une injection de charge temporellement compatible. Grâce au contrôle du flux perturbateur, nous avons montré que les espaces vides sur le collecteur étaient évitables.

8.3 MODELISATION DU SYSTEME AVEC UN FLUX PERTURBATEUR SUBI ET UN FLUX PERTURBATEUR CONTROLE

Dans le cas où il y a à la fois au moins un flux perturbateur subi et au moins un flux perturbateur contrôlé, nous procéderons ainsi.

Nous différencions les charges perturbatrices subies et celles contrôlées comme suit :

- Soit $S$ l'ensemble des $s$ charges perturbatrices subies à laisser obligatoirement passer sans contrôle dans la zone d'injection des allées du collecteur, chacune étant identifiée par un numéro de séquence unique correspondant à sa position dans l'ordre d'arrivée, (notée $\sigma'_s$).

Désignons par $\delta'_p$ la distance de chaque charge perturbatrice $p \in S$ par rapport à la dernière allée $a_k$ à la date T b et par $g'_p$ et $l'_p$ respectivement le numéro de la première et dernière allée devant laquelle la charge perturbatrice $p$ doit passer.

Enfin, les ensembles $U_{i}$, $i$ = 1 ... $k$, donnent les dates d'indisponibilités de passage devant l'allée $a_i$ pour les charges utiles.

- Soit $F$ l'ensemble des $f$ charges perturbatrices à laisser passer sous contrôle dans la zone d'injection des allées du collecteur, chacune étant identifiée par un numéro de séquence unique correspondant à sa position dans l'ordre d'arrivée (notée $\sigma_f$).

Désignons par $\delta_p$ la distance de chaque charge perturbatrice $p \in F$ par rapport à la dernière allée $a_k$ à la date $Tb$ et par $g_p$ et $l_p$ respectivement le numéro de la première et dernière allée devant laquelle la charge perturbatrice $p$ doit passer.

Enfin, les ensembles $V_{i,\ i}$ = 1 ... $k$, donnent les dates d'indisponibilités de passage devant l'allée $a_i$ pour ces charges perturbatrices contrôlées.

L'algorithme 5 détaillé ci-dessous donne les dates d'injection des charges utiles ainsi que le contrôle du flux perturbateur, en tenant compte du flux perturbateur subi.

$Algorithme\ 5: Calcul\ des\ dates\ d'injection\ des\ charges\ utiles\ et\ des\ charges$
$du\ flux\ perturbateur\ contrôlé,\ avec\ prise\ en\ compte\ du\ flux\ perturbateur\ subi$

$$Require: F, S, \sigma,\ \Delta_i, \Delta_{1i},\ a_i(j),\ \forall i \in \{1, \dots, k\}, \forall j \in \{1, \dots, h_i\}$$

$$t_0 = \max_{u\ =\ a_i(j)\ \in\ L'} \{\Delta_i + 1 - \sigma(u)\}\ //\ Calcul\ théorique\ de\ t_0$$

$$//Calcul\ des\ U_i:$$

$$for\ all\ p = 1\ to\ s\ do$$

$$for\ all\ i \in \left\{g'_p, \dots, l'_p\right\}\ do$$

$$U_i = U_i \cup \{ \delta'_p - \Delta_i \} // \textit{Charge } p \textit{ devant } a_i$$

$$\textbf{end for}$$

$$\textbf{end for}$$

*// Calcul des* $T(u)$

$last = t_0$ *// Date théorique du passage de* $\sigma_1$ *devant l'allée* $a_k$

$$\textbf{for } u = 1 \textbf{ to } n \textbf{ do}$$

$$set \ u = a_i(j)$$

$\textbf{do} \ \{ \ // \textit{Planification de la } u^e \textit{charge de } \sigma$

$$check = true$$

$$\textbf{for all } z = k \ \textit{à} \ z = i, \ z - - \ \textbf{do}$$

$$if \ (last - \Delta_z \in U_z) \ then \ check = false;$$

$$\textbf{end for}$$

$$if \ (check = false) \ then \ \{$$

$$last = last + 1 \ ;$$

$$if \ (u = 1) \ then \ t_0 = t_0 + 1;$$

$$\} \ \textbf{end if}$$

$$\} \ \textbf{while} \ (check = false) \ ;$$

$$T(u) = last - \Delta_i \ // \textit{Date finale d'injection pour la}$$

*charge* $u$

$$last = last + 1 \ // \textit{Place suivante devant } a_k$$

$$\textbf{end for}$$

*// Décalage éventuel de la date 0*

$set \ t_{min} \ to \ min\{ \ T(u), \ \forall u \in L \ \}$

$$if \ (t_{min} != 0) \ \textbf{then}$$

$$t_0 = t_0 - t_{min}$$

$$\textbf{for } u \in L \textbf{ do}$$

$$T(u) = T(u) \ - t_{min}$$

$$\textbf{end for}$$

$$\textbf{end } if$$

*// calcul des* $V_z$ :

$$\textbf{for } u = 1 \textbf{ to } n \textbf{ do}$$

$$set \ u = a_i(j)$$

$$\textbf{for all } z \in \{i, ..., k\} \textbf{ do}$$

$$V_z = V_z \cup \{T(u) + \Delta_i - \Delta_z\}$$

$$\textbf{end for}$$

$$\textbf{end for}$$

$$for\ all\ z \in \{1, ..., k\}\ do$$
$$V_z = V_z \cup U_z$$
$$end\ for$$
// *calcul des* $start_p$ :
$$set\ t =\ \delta_1 - \Delta_1\ //\ Arrivée\ de\ la\ première\ charge\ perturbatrice\ devant\ a_1$$
$$for\ all\ p = 1\ to\ f\ do\ //\ Charge\ identifiée\ par\ sa\ place\ dans\ \sigma_f$$
$$do\ \{$$
$$check = true$$
$$for\ i = g_p\ to\ l_p\ do$$
$$if\ (t + \Delta_1 - \Delta_i \in V_i)\ then\ check = false; t + +; break;$$
$$end\ for$$
$$\}\ while\ (check = false)\ ;$$
$$start_p = t$$
$$t = Max\ (t + 1,\ \delta_{p+1} - \Delta_1)\ //\ Attente\ possible\ de\ l'arrivée\ de\ p+1$$
$$end\ for$$
$$return\ t_0,\ T(u),\ \forall u \in L, start_p,\ \forall p \in F$$

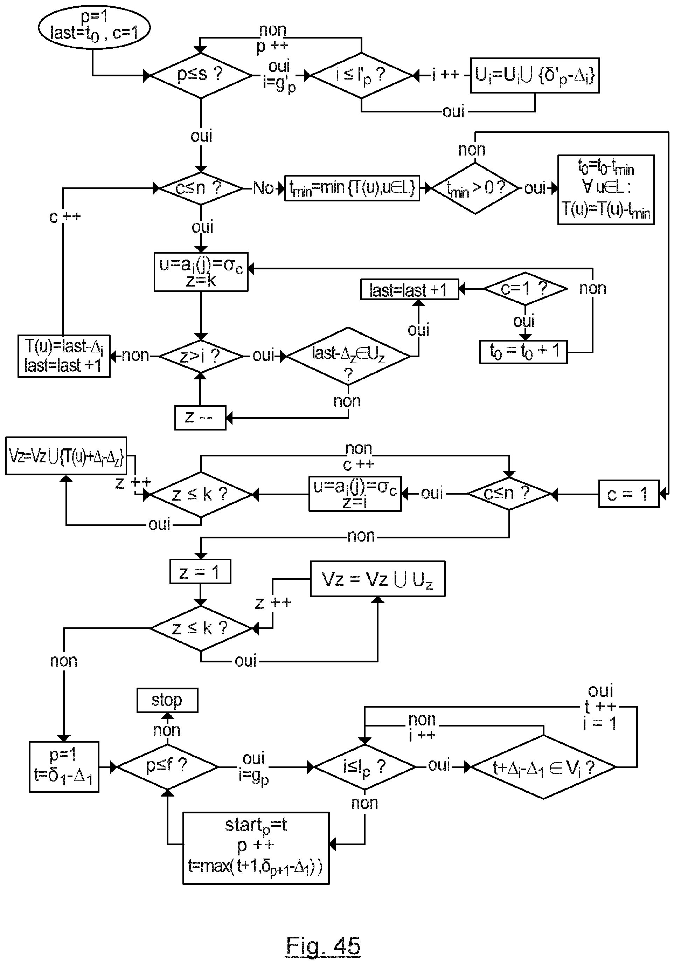

La **figure 45** est un diagramme de l'algorithme 5 ci-dessus.

La **figure 49** présente un organigramme d'un procédé de fusion de k flux entrants en un flux sortant, selon un quatrième mode de réalisation particulier basé sur l'algorithme 5 (illustré sur la figure 45). Le procédé est exécuté au moins une fois par le système de pilotage. Une exécution donnée est effectuée à un instant Tb et comprend les étapes suivantes :

- pour chaque charge utile $u = a_i(j) \in L$ provenant d'une allée $a_i$, calcul (étape 491) des dates de passage de la charge utile devant les allées $a_i$ à $a_k$, connaissant la date d'injection $T(u)$ de la charge utile sur le collecteur ;
- pour chaque allée $a_i$, $i \in \{1, ..., k\}$, obtention (étape 492) d'un ensemble $V_i$ contenant d'une part chaque date de passage d'une des charges utiles devant l'allée $a_i$ et d'autre part l'ensemble $U_i$ de dates non valides pour une injection d'une des charges utiles de l'allée $a_i$ sur le collecteur ;
- pour chaque charge perturbatrice contrôlée $p$ d'un flux perturbateur contrôlé grâce à un moyen de contrôle situé le long du collecteur et avant une allée $a_{g(p)}$ dans le sens de déplacement du collecteur, avec $g(p) \in \{1, ..., k\}$, $a_{g(p)}$ étant également la première allée, dans le sens de déplacement du collecteur, devant laquelle passe la charge perturbatrice contrôlée (étape 493) :

  a) initialisation de t avec la date $\delta_1 - \Delta_1$, avec $\delta_1$ représentant la date d'arrivée possible, en cas de non mise en attente, de la première charge perturbatrice contrôlée devant l'allée $a_k$ ;
  b) calcul des dates $t + \Delta_{1, g(p)}, t + \Delta_{1, g(p)+1}, ..., t + \Delta_{1, l(p)}$ de passage de la charge perturbatrice contrôlée devant les allées $a_{g(p)}$ à $a_{l(p)}$, avec $a_{l(p)}$ la dernière allée, dans le sens de déplacement du collecteur, devant laquelle passe la charge perturbatrice contrôlée ;
  c) si aucune des dates $t + \Delta_{1, g(p)}, t + \Delta_{1, g(p)+1}, ..., t + \Delta_{1, l(p)}$ n'appartient respectivement aux ensembles $V_{g(p)}, g(p)+1, ..., V_{l(p)}$, calcul d'une date fictive de passage $start_p$ de la charge perturbatrice contrôlée $p$ devant l'allée $a_1$, avec la formule suivante : $start_p = t$ ;
  d) si une des dates $t + \Delta_{1, g(p)}, t + \Delta_{1, g(p)+1}, ..., t + \Delta_{1, l(p)}$ appartient respectivement à un des ensembles $V_{g(p)}, V_{g(p)+1}, ..., V_{l(p)}$, incrémentation de t d'une unité et réitération des étapes b), c) et d) avec la nouvelle valeur de t ;

- commande (étape 494) du moyen de contrôle, pour une injection à la date $start_p + \Delta_{1, g(p)}$ de chaque charge perturbatrice contrôlée $p$ devant l'allée $a_{g(p)}$. **9. CONCLUSION**

La durée de trajet étant critique pour avoir un taux de production le plus élevé possible, savoir regrouper plusieurs flux entrants sur un collecteur est très important dans le domaine de la logistique. Utiliser l'ensemble des capacités mécaniques de chaque système et donc maximiser le débit d'un tel collecteur est crucial pour ne pas perdre de temps dans la préparation de commande par exemple.

Nous avons atteint le débit optimal en injectant les charges au plus tôt de façon synchronisée. Nous avons notamment atteint les capacités maximales du collecteur lorsqu'il est dédié aux flux d'injection. En plus de la modélisation et résolution mathématique, nous avons extrait une formule permettant de calculer directement les dates d'injection de chaque charge. Ces résultats sont donnés pour respecter une séquence finale de sortie des charges une fois que celles-ci sont toutes sur le collecteur, cela permet de combiner l'optimisation d'une vitesse et d'un tri.

Nous avons aussi traité la gestion de plusieurs types de flux sur le collecteur, en appelant flux perturbateur un flux différent des flux d'injection. Nous savons calculer les dates d'injection grâce à un algorithme prenant en compte ce flux perturbateur lorsqu'il est subi. Toutefois, le débit est optimal sans garantie de maximalité. En effet, un tel flux perturbateur subi ne permet pas de rattraper un espace laissé par une charge perturbatrice qui aurait quitté le collecteur entre les allées d'injection.

Nous avons également proposé une solution dans laquelle le flux perturbateur est contrôlé. Un autre algorithme a été donné pour faire passer le flux perturbateur contrôlé, de façon à prioriser le débit maximal du collecteur une fois toutes les allées d'injection passées. Le contrôle de ce flux perturbateur contrôlé permet un débit maximal des flux d'injection une fois sur le collecteur lorsque toutes les charges du flux perturbateur contrôlé disparaissent avant la dernière allée d'injection. Sinon, les charges perturbatrices restantes sont comprises dans le flux final du collecteur et insérées dans la séquence sans espace.

Un algorithme a également été donné pour gérer à la fois au moins un flux subi (obstructions qui ne sont pas obligatoirement des charges perturbatrices) et au moins un flux contrôlé (charges perturbatrices).

## 10. EXEMPLE DE SYSTEME DE PILOTAGE

La solution proposée est un procédé de fusion, au sein d'un entrepôt logistique, de k flux entrants de charges utiles, transportés respectivement par k convoyeurs appelés allées $a_i$ *avec i* $\in \{1, ..., k\}$, en un flux sortant de charges utiles, transporté par un autre convoyeur appelé collecteur.

Le procédé de fusion est exécuté par un système de pilotage. Il s'agit est par exemple d'un système informatique de gestion central (aussi appelé SGE, pour « Système de Gestion d'Entrepôt », ou WCS, pour « Warehouse Control System » en anglais).

La **figure 44** présente la structure du système de pilotage 90 selon un mode de réalisation particulier de l'invention. Ce système de pilotage comprend une mémoire vive 92 (par exemple une mémoire RAM), une unité de traitement 91, équipée par exemple d'un processeur, et pilotée par un programme d'ordinateur 930 stocké dans une mémoire morte 93 (par exemple une mémoire ROM ou un disque dur).

A l'initialisation, les instructions de code du programme d'ordinateur sont par exemple chargées dans la mémoire vive 92 avant d'être exécutées par le processeur de l'unité de traitement 91, pour mettre en oeuvre le procédé de fusion de l'invention (selon l'un quelconque des différents modes de réalisation décrits plus haut). L'unité de traitement 91 reçoit en entrée des informations 94 relatives aux flux entrants. Le processeur de l'unité de traitement 91 traite les informations 94 et génère en sortie des instructions ou commandes 95 permettant de piloter (commander) différents éléments compris dans le système, notamment les allées, le collecteur, les moyens de contrôle, etc.

Cette figure 44 illustre seulement une manière particulière, parmi plusieurs possibles, de réaliser la technique de l'invention, dans l'un quelconque de ses modes de réalisation. En effet, le système de pilotage se réalise indifféremment sur une machine de calcul reprogrammable (par exemple un ordinateur PC, un processeur DSP, un micro-contrôleur, etc.) exécutant un programme comprenant une séquence d'instructions, ou sur une machine de calcul dédiée (par exemple un ensemble de portes logiques comme un FPGA ou un ASIC, ou tout autre module matériel).

Dans le cas où le système de pilotage est réalisé avec une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de fusion, au sein d'un entrepôt logistique, de k flux entrants de charges utiles, transportés respectivement par k convoyeurs appelés allées $a_i$ *avec i* $\in \{1, ...,k\}$, en un flux sortant de charges utiles, transporté par un autre convoyeur appelé collecteur,

l'entrepôt logistique étant tel que :

- les k allées sont de type « premier entré premier sorti », réparties le long du collecteur et numérotées de $a_1$ à $a_k$ dans un sens de déplacement du collecteur, et
- $\Delta_i$ est une distance temporelle entre les allées $a_i$ et $a_k$ exprimée en unités temporelles correspondant chacune à un pas temporel du collecteur,

le procédé étant exécuté au moins une fois par un système de pilotage, une exécution donnée étant effectuée à un instant Tb et comprenant :

- obtention (461) d'un ensemble L comprenant n charges utiles réparties à l'instant Tb sur les k allées et devant être injectées sur le collecteur pour former une séquence de sortie $\sigma$, chacune des n charges utiles étant identifiée par un unique numéro de séquence au sein de la séquence de sortie $\sigma$, chacune des k allées contenant un ensemble ordonné, selon un sens croissant du numéro de séquence, de $h_i$ charges utiles devant être injectées une à une sur le collecteur ;

le procédé étant **caractérisé en ce qu'**il comprend les étapes suivantes :

- calcul (462) d'une date $t_0$ à laquelle la première charge utile $\sigma_1$ de la séquence de sortie $\sigma$ passe devant l'allée $a_k$;
- calcul (463) d'une date d'injection sur le collecteur pour chacune des n charges utiles de l'ensemble L, selon la formule suivante : $T(u) = t_0 + \sigma(u) - 1 - \Delta_i$, avec :

  * $u = a_i(j) \in L$, une charge utile de l'ensemble L et provenant de la $j^{\text{ème}}$ position dans l'allée $a_i$, $i \in \{1, ..., k\}$, $j \in \{1, ..., h_i\}$,
  * $\sigma(u)$ le numéro de séquence de la charge utile $u$ dans la séquence de sortie $\sigma$ ;

- commande (464) du collecteur et des k allées, pour une injection des n charges utiles sur le collecteur conformément aux n dates d'injection $T(u)$, $\forall u \in L$.

**2.** Procédé selon la revendication 1, dans lequel $\Delta_{i,i'}$ est une distance temporelle entre les allées $a_i$ et $a_{i'}$ exprimée en unités temporelles correspondant chacune à un pas temporel du collecteur, et comprenant en outre les étapes suivantes :

- pour chaque charge utile $u = a_i(j) \in L$ provenant d'une allée $a_i$, calcul (481) des dates de passage de la charge utile devant les allées $a_i$ à $a_k$, connaissant la date d'injection $T(u)$ de la charge utile sur le collecteur ;
- pour chaque allée $a_i$, $i \in \{1, ..., k\}$, obtention (482) d'un ensemble $V_i$ contenant chaque date de passage d'une des charges utiles devant l'allée $a_i$ ;
- pour chaque charge perturbatrice contrôlée $p$ d'un flux perturbateur contrôlé grâce à un moyen de contrôle situé le long du collecteur et avant une allée $a_{g(p)}$ dans le sens de déplacement du collecteur, avec $g(p) \in \{1, ..., k\}$, $a_{g(p)}$ étant également la première allée, dans le sens de déplacement du collecteur, devant laquelle passe la charge perturbatrice contrôlée (483) :

  a) initialisation de t avec la date $\delta_1 - \Delta_1$, avec $\delta_1$ représentant la date d'arrivée possible, en cas de non mise en attente, de la première charge perturbatrice contrôlée devant l'allée $a_k$;
  b) calcul des dates $t + \Delta_{1,g(p)}$, $t + \Delta_{1,g(p)+1}$,..., $t + \Delta_{1,l(p)}$ de passage de la charge perturbatrice contrôlée devant les allées $a_{g(p)}$ à $a_{l(p)}$, avec $a_{l(p)}$ la dernière allée, dans le sens de déplacement du collecteur, devant laquelle passe la charge perturbatrice contrôlée ;
  c) si aucune des dates $t + \Delta_{1,g(p)}$, $t + \Delta_{1,g(p)+1}$,..., $t + \Delta_{1,l(p)}$ n'appartient respectivement aux ensembles $V_{g(p)}$, $V_{g(p)+1}$,..., $V_{l(p)}$, calcul d'une date fictive de passage $start_p$ de la charge perturbatrice contrôlée $p$ devant l'allée $a_1$, avec la formule suivante :

$$start_p = t \ ;$$

  d) si une des dates $t + \Delta_{1,g(p)}$, $t + \Delta_{1,g(p)+1}$,..., $t + \Delta_{1,l(p)}$ appartient respectivement à un des ensembles $V_{g(p)}$, $V_{g(p)+1}$, ..., $V_{l(p)}$, incrémentation de t d'une unité et réitération des étapes b), c) et d) avec la nouvelle valeur de t ;

- commande (484) du moyen de contrôle, pour une injection à la date $start_p + \Delta_{1,g(p)}$ de chaque charge perturbatrice contrôlée $p$ devant l'allée $a_{g(p)}$.

3. Procédé de fusion, au sein d'un entrepôt logistique, de k flux entrants de charges utiles, transportés respectivement par k convoyeurs appelés allées $a_i$ *avec* $i \in \{1,...,k\}$, en un flux sortant de charges utiles, transporté par un autre convoyeur appelé collecteur,

    l'entrepôt logistique étant tel que :

        - les k allées sont de type « premier entré premier sorti », réparties le long du collecteur et numérotées de $a_1$ à $a_k$ dans un sens de déplacement du collecteur, et
        - $\Delta_i$ est une distance temporelle entre les allées $a_i$ et $a_k$ exprimée en unités temporelles correspondant chacune à un pas temporel du collecteur,

    le procédé étant exécuté au moins une fois par un système de pilotage, une exécution donnée étant effectuée à un instant Tb et comprenant :

        - obtention (471) d'un ensemble L comprenant n charges utiles réparties à l'instant Tb sur les k allées et devant être injectées sur le collecteur pour former une séquence de sortie $\sigma$, chacune des n charges utiles étant identifiée par un unique numéro de séquence au sein de la séquence de sortie $\sigma$, chacune des k allées contenant un ensemble ordonné, selon un sens croissant du numéro de séquence, de $h_i$ charges utiles devant être injectées une à une sur le collecteur ;

    le procédé étant **caractérisé en ce qu'**il comprend les étapes suivantes :

        - pour chaque allée $a_i$, $i \in \{1,...,k\}$, obtention (472) d'un ensemble $U_i$ de dates non valides pour une injection d'une des charges utiles de l'allée $a_i$ sur le collecteur à cause d'une charge perturbatrice non contrôlée ou d'une autre obstruction d'un pas temporel du collecteur ;
        - en ne prenant pas en compte les ensembles $U_i$, $i \in \{1,...,k\}$, calcul (473) d'une date $t_0$ à laquelle la première charge utile $\sigma_1$ de la séquence de sortie $\sigma$ passe devant l'allée $a_k$;
        - pour la première charge utile $\sigma_1$ de la séquence de sortie $\sigma$, en supposant que la première charge utile $\sigma_1$ provienne de l'allée $a_i$ (474) :

            a) initialisation de t avec $t_0$ ;
            b) si aucune des dates $t, t - \Delta_{k-1}, t - \Delta_{k-2},..., t - \Delta_i$ n'appartient respectivement aux ensembles $U_k, U_{k-1}, U_{k-2},..., U_i$, calcul d'une date d'injection de la première charge utile $\sigma_1$ sur le collecteur avec la formule suivante : $T(u) = t - \Delta_i$ , avec $u = \sigma_1 = a_i(j)$ ;
            c) si une des dates $t, t - \Delta_{k-1}, t - \Delta_{k-2},..., t - \Delta_i$ appartient respectivement à un des ensembles $U_k, U_{k-1}, U_{k-2},..., U_i$, incrémentation de t d'une unité et réitération des étapes b) et c) avec la nouvelle valeur de t ;

        - pour chaque charge utile suivante $\sigma_c$ de la séquence de sortie $\sigma$, $c \in \{2,...,n\}$, en supposant que la charge utile suivante $\sigma_c$ provienne de l'allée $a_i$ (475) :

            a') incrémentation de t d'une unité, avec t utilisé pour calculer la date d'injection de la charge utile précédente $\sigma_{c-1}$ ;
            b') si aucune des dates $t, t - \Delta_{k-1}, t - \Delta_{k-2},..., t - \Delta_i$ n'appartient respectivement aux ensembles $U_k, U_{k-1}, U_{k-2},..., U_i$, calcul d'une date d'injection de la charge utile suivante $\sigma_c$ sur le collecteur avec la formule suivante : $T(u) = t - \Delta_i$, avec $u = \sigma_c = a_i(j)$ ;
            c') si une des dates $t, t - \Delta_{k-1}, t - \Delta_{k-2},..., t - \Delta_i$ appartient respectivement à un des ensembles $U_k, U_{k-1}, U_{k-2},..., U_i$, incrémentation de t d'une unité et réitération des étapes b') et c') avec la nouvelle valeur de t ;

        - commande (478) du collecteur et des k allées, pour une injection des n charges utiles sur le collecteur conformément aux n dates d'injection $T(u)$, $\forall u \in L$.

4. Procédé selon la revendication 3, dans lequel l'étape de commande (478) du collecteur et des k allées, pour une injection des n charges utiles sur le collecteur conformément aux n dates d'injection $T(u)$, $\forall u \in L$, est précédée des étapes suivantes :

- calcul (476) de $t_{min}$ selon la formule suivante : $t_{min} = min\{ T(u), \forall u \in L\}$;
- si $t_{min} > 0$, modification (477) des n dates d'injection selon la formule suivante :

$$T(u) = T(u) - t_{min}, \forall u \in L.$$

5. Procédé selon la revendication 3 ou 4, dans lequel $\Delta_{i,i'}$ est une distance temporelle entre les allées $a_i$ et $a_{i'}$, exprimée en unités temporelles correspondant chacune à un pas temporel du collecteur, et comprenant en outre les étapes suivantes :

- pour chaque charge utile $u = a_i(j) \in L$ provenant d'une allée $a_i$, calcul (491) des dates de passage de la charge utile devant les allées $a_i$ à $a_k$, connaissant la date d'injection $T(u)$ de la charge utile sur le collecteur ;
- pour chaque allée $a_i$, $i \in \{1, ..., k\}$, obtention (492) d'un ensemble $V_i$ contenant d'une part chaque date de passage d'une des charges utiles devant l'allée $a_i$ et d'autre part l'ensemble $U_i$ de dates non valides pour une injection d'une des charges utiles de l'allée $a_i$ sur le collecteur ;
- pour chaque charge perturbatrice contrôlée $p$ d'un flux perturbateur contrôlé grâce à un moyen de contrôle situé le long du collecteur et avant une allée $a_{g(p)}$ dans le sens de déplacement du collecteur, avec $g(p) \in \{1,...,k\}$, $a_{g(p)}$ étant également la première allée, dans le sens de déplacement du collecteur, devant laquelle passe la charge perturbatrice contrôlée (493) :

a) initialisation de t avec la date $\delta_1 - \Delta_1$, avec $\delta_1$ représentant la date d'arrivée possible, en cas de non mise en attente, de la première charge perturbatrice contrôlée devant l'allée $a_k$;
b) calcul des dates $t + \Delta_{1,g(p)}$, $t + \Delta_{1,g(p)+1},..., t + \Delta_{1,l(p)}$ de passage de la charge perturbatrice contrôlée devant les allées $a_{g(p)}$ à $a_{l(p)}$, avec $a_{l(p)}$ la dernière allée, dans le sens de déplacement du collecteur, devant laquelle passe la charge perturbatrice contrôlée ;
c) si aucune des dates $t + \Delta_{1,g(p)}$, $t + \Delta_{1,g(p)+1},..., t + \Delta_{1,l(p)}$ n'appartient respectivement aux ensembles $V_{g(p)}$, $V_{g(p)+1},..., V_{l(p)}$, calcul d'une date fictive de passage $start_p$ de la charge perturbatrice contrôlée $p$ devant l'allée $a_1$, avec la formule suivante : $start_p = t$ ;
d) si une des dates $t + \Delta_{1,g(p)}$, $t + \Delta_{1,g(p)+1},..., t + \Delta_{1,l(p)}$ appartient respectivement à un des ensembles $V_{g(p)}$, $V_{g(p)+1}, ..., V_{l(p)}$, incrémentation de t d'une unité et réitération des étapes b), c) et d) avec la nouvelle valeur de t ;

- commande (494) du moyen de contrôle, pour une injection à la date $start_p + \Delta_{1,g(p)}$ de chaque charge perturbatrice contrôlée $p$ devant l'allée $a_{g(p)}$.

6. Procédé selon l'une quelconque des revendications 1 à 5, dans lequel la date $t_0$ est calculée avec la formule suivante :

$$t_0 = \max_{u=a_i(j)\in L'} \{\Delta_i + 1 - \sigma(u)\},$$

avec :

- $u = a_i(j) \in L'$, une charge utile d'un ensemble L' comprenant des charges utiles placées en première position des allées situées, en suivant le sens de déplacement du collecteur, depuis l'allée $a_1$ jusqu'à l'allée $a_{i_1}$ contenant la première charge utile $\sigma_1$ de la séquence de sortie $\sigma$.

7. Procédé selon l'une quelconque des revendications 1 à 6, **caractérisé en ce qu'**il est exécuté de manière itérative, chaque nouvelle exécution étant effectuée à un nouvel instant Tb calculé avec la formule suivante : $Tb = T(u_{last}) - \Delta_1 + \Delta_{ilast}$, avec $u_{last} = a_{ilast}(j^{last})$ une dernière charge utile, provenant de la $(j^{last})$ème position dans l'allée $a_{ilast}$, de la séquence de sortie $\sigma$ d'une exécution précédente à un instant Tb précédent.

8. Procédé selon l'une quelconque des revendications 1 à 6, **caractérisé en ce qu'**il est exécuté de manière itérative, chaque nouvelle exécution étant effectuée à un nouvel instant Tb défini comme un instant auquel aucune charge de la séquence de sortie $\sigma$ d'une exécution précédente à un instant Tb précédent ne se trouve dans une portion du collecteur allant de la première allée $a_1$ à l'allée $a_{i1}$ contenant la première charge de la séquence de sortie $\sigma$ de la nouvelle exécution au nouvel instant Tb.

9. Procédé selon l'une quelconque des revendications 1 à 6, **caractérisé en ce qu'**il est exécuté de manière itérative, chaque nouvelle exécution étant effectuée à un nouvel instant Tb calculé avec la formule suivante : *Tb = Max(Tb + 1,T(u$_{last}$) - $\Delta_1$ + $\Delta_{ilast}$), avec :*

- *u$_{last}$ = a$_{ilast}$(j$^{last}$)* une dernière charge utile, provenant de la (*j$^{last}$*)$^{ème}$ position dans l'allée *a$_{ilast}$,* de la séquence de sortie $\sigma$ d'une exécution précédente à un instant Tb précédent, et
- (*Tb* + 1) obtenu par une incrémentation d'une unité de l'instant Tb précédent.

**Patentansprüche**

1. Verfahren zum Zusammenführen von k Nutzlastzuflüssen, die jeweils von k Förderbändern, den sogenannten Gängen *a$_i$ mit i $\in$ {1, ... , k},* transportiert werden, in einen ausströmenden Nutzlastabfluss, der von einem anderen Förderband, dem sogenannten Sammler transportiert wird, innerhalb eines Logistklagers,

    wobei das Logistiklager derart ist, dass:

    - die k Gänge vom Typ "First In - First Out" entlang des Sammlers verteilt und von a$_1$ bis a$_k$ in einer Bewegungsrichtung des Sammlers angeordnet sind und
    - $\Delta_i$ ein Zeitabstand zwischen den Gängen a$_i$ und a$_k$ ist, der in Zeiteinheiten ausgedrückt wird, die jeweils einem Zeitschritt des Sammlers entsprechen,
    wobei das Verfahren mindestens einmal von einem Steuersystem ausgeführt wird,

    wobei eine bestimmte Ausführung zu einem Zeitpunkt Tb durchgeführt wird und aufweist:

    - Erhalten (461) eines Satzes L, der n Nutzlasten umfasst, die zum Zeitpunkt Tb über die k Gänge verteilt werden und auf den Sammler injiziert werden sollen, um eine Ausgabesequenz $\sigma$ zu bilden, wobei jede der n Nutzlasten durch eine eindeutige Sequenznummer innerhalb der Ausgabesequenz $\sigma$ identifiziert wird, wobei jeder der k Gänge einen in zunehmender Reihenfolge der Sequenznummer geordneten Satz von hi Nutzlasten enthält, die einzeln auf den Sammler injiziert werden sollen,

    wobei das Verfahren **dadurch gekennzeichnet ist, dass** es die folgenden Schritte aufweist:

    - Berechnen (462) eines Datums t$_0$, an dem die erste Nutzlast $\sigma_1$ der Ausgabesequenz $\sigma$ vor dem Gang a$_k$ vorbeiläuft,
    - Berechnung (463) eines Datums des Injizierens auf den Sammler für jede der n Nutzlasten der Menge L gemäß der folgenden Formel: T(u) = t$_0$ + $\sigma$(u)- 1- $\Delta_i$, wobei:

        * *u = a$_i$ (j) $\in$ L* eine Nutzlast des Satzes L ist und von der j-ten Position im Gang a$_i$ kommt, *i $\in$ {1, ..., k}, j $\in$ {1, .. ., h$_i$},*
        * $\sigma(u)$ die Sequenznummer der Nutzlast *u* in der Ausgabesequenz $\sigma$ ist,

    - Steuern (464) des Sammlers und der k Gänge für ein Injizieren der n Nutzlasten auf den Sammler nach den n Daten des Injizierens *T(u), $\forall u \in L$.*

2. Verfahren nach Anspruch 1, wobei $\Delta_{i,i'}$ ein Zeitabstand zwischen den Gängen a$_i$ und a$_{i,i'}$ ist, der in Zeiteinheiten ausgedrückt wird, die jeweils einem Zeitschritt des Sammlers entsprechen, und das ferner die folgenden Schritte aufweist:

    - für jede Nutzlast *u = a$_i$ (j) $\in$ L,* die von einem Gang a$_i$ kommt, Berechnen (481) der Daten des Vorbeilaufens der Nutzlast vor den Gängen a$_i$ bis a$_k$ unter Kenntnis des Datums des Injizierens *T(u)* der Nutzlast auf den Sammler,
    - für jeden Gang a$_i$, *i $\in$ {1, .. ., k}* Erhalten (482) eines Satzes V$_i$, der jedes Datum des Vorbeilaufens von einer der Nutzlasten vor dem Gang a$_i$ enthält,
    - für jede kontrollierte Störlast *p* eines Störflusses, der dank eines Steuermittels gesteuert wird, das entlang des Sammlers und vor einem Gang a$_{g(p)}$ in der Bewegungsrichtung des Sammlers angeordnet ist, wobei *g(p) $\in$ {1, ..., k},* wobei a$_{g(p)}$, auch der erste Gang in der Bewegungsrichtung des Sammlers ist, vor dem die kontrollierte Störlast vorbeiläuft (483):

a) Initialisieren von t mit dem Datum $\delta_1 - \Delta_1$, wobei $\delta_1$ das mögliche Ankunftsdatum der ersten kontrollierten Störlast vor dem Gang $a_k$ im Falle des nicht in die Warteschleife Stellens darstellt,

b) Berechnen der Daten $t + \Delta_{1,g(p)}$, $t + \Delta_{1,g(p)+1}$,..., $t + \Delta_{1,l(p)}$ des Vorbeilaufens der kontrollierten Störlast vor den Gängen $a_{g(p)}$ bis $a_{1(p)}$, wobei $_{1(p)}$ der letzte Gang in der Bewegungsrichtung des Sammlers ist, vor dem die kontrollierte Störlast vorbei läuft,

c) wenn keines der Daten $t + \Delta_{1,g(p)}$, $t + \Delta_{1,g(p)+1}$,..., $t + \Delta_{1,l(p)}$ jeweils zu den Sätzen $V_{g(p)}$, $V_{g(p)+1}$,..., $V_{l(p)}$ gehört, Berechnen eines fiktiven Datums des Vorbeilaufens $start_p$ der kontrollierten Störlast $p$ vor dem Gang $a_1$ mit der folgenden Formel:

$$start_p = t;$$

d) wenn eines der Daten $t + \Delta_{1,g(p)}$, $t + \Delta_{1,g(p)+1}$,..., $t + \Delta_{1,l(p)}$ jeweils zu einem der Sätze $V_{g(p)}$, $V_{g(p)+1}$, ..., $V_{l(p)}$ gehört, Erhöhen von t um eine Einheit und Wiederholen der Schritte b), c) und d) mit dem neuen Wert von t,

- Steuern (484) des Steuermittels für ein Injizieren am Datum $start_p + \Delta_{1,g(p)}$ der kontrollierten Störlast $p$ vor dem Gang $a_{g(p)}$.

3. Verfahren zum Zusammenführen von k Nutzlastzuflüssen, die jeweils von k Förderbändern, den sogenannten Gängen $a_i$ mit $i \in \{1, \ldots, k\}$ transportiert werden, in einen ausströmenden Nutzlastabfluss, der von einem anderen Förderband, dem sogenannten Sammler transportiert wird, innerhalb eines Logistklagers,

wobei das Logistiklager derart ist, dass:

- die k Gänge vom Typ "First In - First Out" entlang des Sammlers verteilt und von $a_1$ bis $a_k$ in einer Bewegungsrichtung des Sammlers angeordnet sind und
- $\Delta_i$ ein Zeitabstand zwischen den Gängen $a_i$ und $a_k$ ist, der in Zeiteinheiten ausgedrückt wird, die jeweils einem Zeitschritt des Sammlers entsprechen,

wobei das Verfahren mindestens einmal von einem Steuersystem ausgeführt wird,

wobei eine bestimmte Ausführung zu einem Zeitpunkt Tb durchgeführt wird und aufweist:

- Erhalten (471) eines Satzes L, der n Nutzlasten umfasst, die zum Zeitpunkt Tb über die k Gänge verteilt werden und auf den Sammler injiziert werden sollen, um eine Ausgabesequenz $\sigma$ zu bilden,

wobei jede der n Nutzlasten durch eine eindeutige Sequenznummer innerhalb der Ausgabesequenz $\sigma$ identifiziert wird, wobei jeder der k Gänge einen in zunehmender Reihenfolge der Sequenznummer geordneten Satz von $h_i$ Nutzlasten enthält, die einzeln auf den Sammler injiziert werden sollen,

wobei das Verfahren **dadurch gekennzeichnet ist, dass** es die folgenden Schritte aufweist:

- für jeden Gang $a_i$, $i \in \{1, ..., k\}$ Erhalten (472) eines Satzes $U_i$ von Daten, die für ein Injizieren von einer der Nutzlasten des Ganges $a_i$ auf den Sammler aufgrund einer unkontrollierten Störlast oder einer anderen Blockierung eines Zeitschritts des Sammlers nicht gültig sind,
- unter Berücksichtigung der Sätze $U_i$, $i \in \{1, \ldots, k\}$ Berechnen (473) eines Datums $t_0$, an dem die erste Nutzlast $\sigma_1$ der Ausgabesequenz $\sigma$ vor dem Gang $a_k$ vorbeiläuft,
- für die erste Nutzlast $\sigma_1$ der Ausgabesequenz $\sigma$, unter der Annahme, dass die erste Nutzlast $\sigma_1$ von dem Gang $a_i$ (474) kommt:

a) Initialisieren von t mit $t_0$,
b) wenn keines der Daten $t$ $t - \Delta_{k-1}$ $t - \Delta_{k-2}$,..., $t - \Delta_i$ jeweils zu den Sätzen $U_k$, $U_{k-1}$, $U_{k-2}$,..., $U_i$ gehört, Berechnen eines Datums des Injizierens der ersten Nutzlast $\sigma_1$ auf den Sammler mit der folgenden Formel: $T(u) = t - \Delta_i$, wobei $u = \sigma_1 = a_i(j)$,
c) wenn eines der Daten $t$ $t - \Delta_{k-1}$, $t - \Delta_{k-2}$,..., $t - \Delta_i$ jeweils zu einem der Sätze $U_k$, $U_{k-1}$, $U_{k-2}$,..., $U_i$ gehört, Erhöhen von t um eine Einheit und Wiederholen der Schritte b) und c) mit dem neuen Wert von t,
d) für jede folgende Nutzlast $\sigma_c$ der Ausgabesequenz $\sigma$, $c \in \{2,\ldots, n\}$, unter der Annahme, dass die folgende Nutzlast $\sigma_c$ von dem Gang $a_i$ kommt (475):

a') Erhöhen von t um eine Einheit, wobei t verwendet wird, um das Datum des Injizierens der vorhergehenden Nutzlast $\sigma_{c-1}$ zu berechnen,

b') wenn keines der Daten t $t - \Delta_{k-1}$, $t - \Delta_{k-2}$,...., $t - \Delta_i$ jeweils zu den Sätzen $U_k$, $U_{k-1}$, $U_{k-2}$,..., $U_i$ gehört, Berechnen eines Datums des Injizierens der folgenden Nutzlast $\sigma_c$ auf den Sammler mit der folgenden Formel: $T(u) = t - \Delta_i$, wobei $u = \sigma_c = a_i(j)$,

c') wenn eines der Daten t $t - \Delta_{k-1}$, $t - \Delta_{k-2}$,..., $t - \Delta_i$ jeweils zu einem der Sätze $U_k$, $U_{k-1}$, $U_k-2$,..., $U_i$ gehört, Erhöhen von t um eine Einheit und Wiederholen der Schritte b') und c') mit dem neuen Wert von t,

- Steuern (478) des Sammlers und der k Gänge für ein Injizieren der n Nutzlasten auf den Sammler nach den n Daten des Injizierens $T(u), \forall u \in L$.

4. Verfahren nach Anspruch 3, wobei dem Schritt des Steuerns (478) des Sammlers und der k Gänge für ein Injizieren der n Nutzlasten auf den Sammler nach den n Daten des Injizierens $T(u)$, $\forall u \in L$ folgende Schritte vorausgehen:

- Berechnen (476) von $t_{min}$ nach der folgenden Formel: $t_{min} = min\{T(u), \forall u \in L\}$,
- wenn $t_{min} > 0$, Ändern (477) der n Daten des Injizierens nach der folgenden Formel:

$$T(u) = T(u) - t_{min}, \forall u \in L$$

5. Verfahren nach Anspruch 3 oder 4, wobei $\Delta$ i,i' ein Zeitabstand zwischen den Gängen $a_i$ und $a_{i'}$ ist, der in Zeiteinheiten ausgedrückt wird, die jeweils einem Zeitschritt des Sammlers entsprechen, und das ferner die folgenden Schritte aufweist:

- für jede Nutzlast $u = a_i(j) \in L$, die von einem Gang $a_i$ kommt, Berechnen (491) der Daten des Vorbeilaufens der Nutzlast vor den Gängen $a_i$ bis $a_k$ unter Kenntnis des Datums des Injizierens $T(u)$ der Nutzlast auf den Sammler,
- für jeden Gang $a_i$, $i \in \{1, ... , k\}$, Erhalten (492) eines Satzes $V_i$, der einerseits jedes Datum des Vorbeilaufens einer der Nutztlasten vor dem Gang ai und andererseits den Satz $U_i$ von Daten enthält, die für ein Injizieren von einer der Nutzlasten des Ganges $a_i$ auf den Sammler nicht gültig sind,
- für jede kontrollierte Störlast $p$ eines Störflusses, der dank eines Steuermittels gesteuert wird, das entlang des Sammlers und vor einem Gang $a_{g(p)}$ in der Bewegungsrichtung des Sammlers angeordnet ist, wobei $g(p) \in \{1, ... , k\}$, wobei $a_{g(p)}$, auch der erste Gang in der Bewegungsrichtung des Sammlers ist, vor dem die kontrollierte Störlast vorbeiläuft (493):

a) Initialisieren von t mit dem Datum $\delta_1 - \Delta_1$, wobei $\delta_1$ das mögliche Ankunftsdatum der ersten kontrollierten Störlast vor dem Gang $a_k$ im Falle des nicht in die Warteschleife Stellens darstellt,

b) Berechnen der Daten $t + \Delta_{1,g(p)}$, $t + \Delta_{1,g(p)}+1$,..., $t + \Delta_{1,l(p)}$ des Vorbeilaufens der kontrollierten Störlast vor den Gängen $a_{g(p)}$ bis $a_{l(p)}$, wobei $a_{l(p)}$ der letzte Gang in der Bewegungsrichtung des Sammlers ist, vor dem die kontrollierte Störlast vorbei läuft,

c) wenn keines der Daten $t + \Delta_{1,g(p)}$, $t + \Delta_{1,g(p)+1}$,..., $t + \Delta_{1,l(p)}$ jeweils zu den Sätzen $V_{g(p)}$, $V_{g(p)+1}$,..., $V_{l(p)}$ gehört, Berechnen eines fiktiven Datums des Vorbeilaufens $start_p$ der kontrollierten Störlast $p$ vor dem Gang $a_1$ mit der folgenden Formel:

$$start_p = t,$$

d) wenn eines der Daten $t + \Delta_{1,g(p)}$, $t + \Delta_{1,g(p)+1}$,..., $t + \Delta_{1,l(p)}$ jeweils zu einem der Sätze $V_{g(p)}$, $V_{g(p)+1}$, ... , $V_{g(p)}$ gehört, Erhöhen von t um eine Einheit und Wiederholen der Schritte b), c) und d) mit dem neuen Wert von t,

- Steuern (494) des Steuermittels für ein Injizieren am Datum $start_p + \Delta_{1,g(p)}$ von jeder kontrollierten Störlast p vor dem Gang $a_{g(p)}$.

6. Verfahren nach einem der Ansprüche 1 bis 5, wobei das Datum $t_0$ mit der folgenden Formel berechnet wird:

$$t_0 = \max_{u=a_i(j)\in L'}\{\Delta_i + 1 - \sigma(u)\}$$

,

wobei:

- $u = a_i$(j) $\in$ $L$', wobei eine Nutzlast eines Satzes L' Nutzlasten umfasst, die in der ersten Position der Gänge, die nach der Bewegungsrichtung des Sammlers vom Gang $a_1$ bis zum Gang $a_{i1}$, der die erste Nutzlast $\sigma_1$ der Ausgabesequenz $\sigma$ enthält, angeordnet werden.

7. Verfahren nach einem der Ansprüche 1 bis 6, **dadurch gekennzeichnet, dass** es iterativ ausgeführt wird, wobei jede neue Ausführung zu einem neuen Zeitpunkt Tb ausgeführt wird, der mit der folgenden Formel berechnet wird: $Tb = T(u_{last}) - \Delta_1 + \Delta_{ilast}$, wobei $u_{last} = a_{ilast}(j^{last})$ eine letzte Nutzlast, die von $(j^{last})$ten Position im Gang $a_{ilast}$ kommt, der Ausgabesequenz $\sigma$ einer vorherigen Ausführung zu einem vorherigen Zeitpunkt Tb ist.

8. Verfahren nach einem der Ansprüche 1 bis 6, **dadurch gekennzeichnet, dass** es iterativ ausgeführt wird, wobei jede neue Ausführung zu einem neuen Zeitpunkt Tb ausgeführt wird, der als ein Zeitpunkt definiert wird, zu dem sich keine Ladung der Ausgabesequenz $\sigma$ von einer vorherigen Ausführung zu einem vorherigen Zeitpunkt Tb in einem Bereich des Sammlers befindet, der von dem ersten Gang $a_1$ zum Gang $a_i$, geht, der die erste Last der Ausgabesequenz $\sigma$ von der neuen Ausführung zu dem neuen Zeitpunkt Tb enthält.

9. Verfahren nach einem der Ansprüche 1 bis 6, **dadurch gekennzeichnet, dass** es iterativ ausgeführt wird, wobei jede neue Ausführung zu einem neuen Zeitpunkt Tb ausgeführt wird, der mit der folgenden Formel berechnet wird:

$$Tb = Max(Tb + 1, T(u_{last}) - \Delta_1 + \Delta_{ilast}),$$

wobei:

- $u_{last} = a_{ilast}(j^{last})$ eine letzte Nutzlast, die von der $(j^{last})$ten Position im Gang $a_ilast$ kommt, der Ausgabesequenz $\sigma$ einer vorhergehenden Ausführung zu einem vorhergehenden Zeitpunkt Tb ist, und
- $(Tb + 1)$ durch ein Erhöhen des vorhergehenden Zeitpunkts Tb um eine Einheit erhalten wird.

**Claims**

1. A method for merging, in a logistics warehouse, k incoming flows of payloads, transported respectively by k conveyors called aisles $a_i$ with $i \in \{1, ...,k\}$, in one outgoing flow of payloads, transported by another conveyor called collector,

the logistics warehouse being such that:

- the k aisles are of the "first-in first-out" type, distributed along the collector and numbered from $a_1$ to $a_k$ in a direction of displacement of the collector, and
- $\Delta_i$ is a time distance between the aisles $a_i$ and $a_k$ expressed in time units each corresponding to a time step of the collector,

the method being executed at least once by a drive system, a given execution being performed at a time Tb and comprising:

- obtaining (461) a set L comprising n payloads distributed at the time Tb over the k aisles and to be injected onto the collector to form an output sequence $\sigma$, each of the n payloads being identified by a unique sequence number within the output sequence $\sigma$, each of the k aisles containing an ordered set, according to an increasing sense of the sequence number, of $h_i$ payloads to be injected one by one onto the collector;

the method being **characterised in that** it comprises the following steps

- calculating (462) a date to on which the first payload $\sigma_1$, of the output sequence $\sigma$ passes in front of the

aisle $a_k$;
- calculating (463) a date of injection onto the collector for each of the n payloads of the set L, according to the following formula: $T(u) = t_0 + \sigma(u) - 1 - \Delta_i$, with:

* $u = a_i(j) \in L$, a payload of the set L and originating from the coming from the $j^{th}$ position in the aisle $a_i$, $i \in \{1, ..., k\}, j \in \{1, ..., h_i\}$,
* $\sigma(u)$ the sequence number of the payload $u$ in the output sequence $\sigma$;

- controlling (464) the collector of the k aisles, for an injection of the n payloads onto the collector in accordance with the n injection dates $T(u)$, $\forall u \in L$.

**2.** The method according to claim 1, wherein $\Delta_{i,i'}$ is a time distance between the aisles $a_i$ and $a_{i'}$ expressed in time units each corresponding to a time step of the collector, and further comprising the following steps:

- for each payload $u = a_i(j) \in L$ originating from an aisle $a_i$, calculating (481) the dates of passage of the payload in front of the aisles $a_i$ to $a_k$, knowing the date of injection $T(u)$ of the payload onto the collector;
- for each aisle $a_i$, $i \in \{1, ..., k\}$, obtaining (482) a set $V_i$ containing each date of passage of one of the payloads in front of aisle $a_i$,
- for each monitored disturbance load $p$ of a disturbing flow monitored thanks to monitoring means located along the collector and before an aisle $a_{g(p)}$ in the direction of displacement of the collector, with $g(p) \in \{1, ..., k\}$, $a_{g(p)}$ also being the first aisle, in the direction of displacement of the collector, in front of which the monitored disturbance load (483) passes:

a) initialising t with the date $\delta_1 - \Delta_1$, with $\delta_1$, representing the possible arrival date, in the case of non-queuing, of the first monitored disturbance load in front of the aisle $a_k$;
b) calculating the dates $t + \Delta_{1,g(p)}$, $t + \Delta_{1,g(p)+1}$, $t + \Delta_{1,l(p)}$ of passage of the controlled disturbance load in front of the aisles $a_{g(p)}$ to $a_{l(p)}$, with $a_{l(p)}$ the last aisle, in the direction of displacement of the collector, in front of which the monitored disturbance load passes;
c) if none of the dates $t + \Delta_{1,g(p)}$, $t + \Delta_{1,g(p)+1}$,...., $t + \Delta_{1,l(p)}$ belongs respectively to the sets $V_{g(p)}$, $V_{g(p)+1}$, ... , $V_{l(p)}$, calculating a fictitious date of passage $start_p$ of the controlled disturbance load $p$ in front of the aisle $a_1$, with the following formula: $start_p = t$;
d) if one of the dates $t + \Delta_{1,g(p)}$ $t + \Delta_{1,g(p)+1}$,...., $t + \Delta_{1,l(p)}$ belongs respectively to one of the sets $V_{g(p)}$, $\Delta_{1,g(p)+1}$, ..., $V_{l(p)}$, incrementing t by one unit and repeating steps b), c) and d) with the new value of t;

- controlling (484) the monitoring means, for an injection on the date $start_p + \Delta_{1,g(p)}$ of each monitored disturbance load $p$ in front of the aisle $a_{g(p)}$.

**3.** The method for merging, in a logistics warehouse, k incoming flows of payloads, transported respectively by k conveyors called aisles $a_i$ with $i \in \{1, ...,k\}$, in one outgoing flow of payloads, transported by another conveyor called collector,

the logistics warehouse being such that:

- the k aisles are of the "first-in first-out" type, distributed along the collector and numbered from $a_1$ to $a_k$ in a direction of displacement of the collector, and
- $\Delta_i$ is a time distance between the aisles $a_i$ and $a_k$ expressed in time units each corresponding to a time step of the collector,

the method being executed at least once by a drive system, a given execution being performed at a time Tb and comprising:

- obtaining (471) a set L comprising n payloads distributed at the time Tb over the k aisles and to be injected onto the collector to form an output sequence $\sigma$, each of the n payloads being identified by a unique sequence number within the output sequence $\sigma$, each of the k aisles containing an ordered set, according to an increasing sense of the sequence number, of $h_i$ payloads to be injected one by one onto the collector;

the method being **characterised in that** it comprises the following steps

- for each aisle $a_i$, $i \in \{1, ..., k\}$, obtaining (472) a set $U_i$, of invalid dates for an injection of one of the payloads of the aisle $a_i$ onto the collector due to an unmonitored disturbance load or another obstruction of a time step of the collector;
- by not taking into account the sets $U_i$, $t \in \{1, ..., k\}$, calculating (473) a date to on which the first payload $\sigma_1$ of the output sequence $\sigma$ passes in front of the aisle $a_k$;
- for the first payload $\sigma_1$, of the output sequence $\sigma$, assuming that the first payload $\sigma_1$ originates from the aisle $a_i$ (474):

> a) initialising t with $t_0$;
> b) if none of the dates $t, t - \Delta_{k-1}, t - \Delta_{k-2}, ... , t - \Delta_i$ belongs respectively to the sets $U_k$, $U_{k-1}$, $U_{k-2}$, ..., $U_i$, calculating a date of injection of the first payload $\sigma_1$ onto the collector with the following formula: $T(u) = t - \Delta_i$, with u = $\sigma_1 = a_i(j)$;
> c) if one of the dates $t, t - \Delta_{k-1}, t - \Delta_{k-2}, ... , t - \Delta_i$ belongs respectively to one of the sets $U_k$, $U_{k-1}$, $U_{k-2}$, ..., $U_i$, incrementing t by one unit and repeating steps b) and c) with the new value of t;

- for each next payload $\sigma_c$, of the output sequence $\sigma$, $c \in \{2, ...,n\}$, assuming that the next payload $\sigma_1$ originates from the aisle $a_i$ (475):

> a') incrementing t by one unit, with t used to calculate the date of injection of the preceding payload $\sigma_{c-1}$,
> b') if none of the dates $t, t - \Delta_{k-1}, t - \Delta_{k-2}, ... , t - \Delta_i$ belongs respectively to the sets $U_k$, $U_{k-1}$, $U_{k-2}$, ..., $U_i$, calculating a date of injection of the following payload $\sigma_c$ onto the collector with the following formula: $T(u) = t - \Delta_i$, with u = $\sigma_c = a_i(j)$;
> c') if one of the dates $t, t - \Delta_{k-1}, t - \Delta_{k-2}, ..., t - \Delta_i$ belongs respectively to one of the sets $U_k$, $U_{k-1}$, $U_{k-2}$, ..., $U_i$, incrementing t by one unit and repeating steps b') and c') with the new value of t;

> - controlling (478) the collector and the k aisles, for an injection of the n payloads onto the collector in accordance with the n injection dates $T(u)$, $\forall u \in L$.

4. The method according to claim 3, wherein the step of controlling (478) the collector and the k aisles, for an injection of the n payloads onto the collector in accordance with the n injection dates $T(u)$, $\forall u \in L$, is preceded by the following steps:

> - calculating (476) $t_{min}$ according to the following formula: $t_{min} = \min \{T(u), \forall u \in L\}$;
> - if $t_{min} > 0$, modifying (477) the n injection dates according to the following formula: $T(u) = T(u) - t_{min}$, $\forall u \in L$.

5. The method according to claim 3 or 4, wherein $\Delta_{i,i'}$ is a time distance between the aisles $a_i$ and $a_{i'}$ expressed in time units each corresponding to a time step of the collector, and further comprising the following steps:

> - for each payload $u = a_i(j) \in L$ originating from an aisle $a_i$, calculating (491) the dates of passage of the payload in front of the aisles $a_i$ to $a_k$, knowing the injection date $T(u)$ of the payload on the collector;
> - for each aisle $a_i$, $i \in \{1, ..., k\}$, obtaining (492) a set $V_i$, containing, on the one hand, each date of passage of one of the payloads in front of aisle $a_i$ and, on the other hand, the set $U_i$ of invalid dates for an injection of one of the payloads of the aisle $a_i$ onto the collector;
> - for each monitored disturbance load p of a disturbing flow monitored thanks to monitoring means located along the collector and before an aisle $a_{g(p)}$ in the direction of displacement of the collector, with $g(p) \in \{1, ..., k\}$, $a_{g(p)}$ also being the first aisle, in the direction of displacement of the collector, in front of which the monitored disturbance load (483) passes,

>> a) initialising t with the date $\delta_1 - \Delta_1$, with $\delta_1$, representing the possible arrival date, in the case of non-queuing, of the first monitored disturbance load in front of the aisle $a_k$;
>> b) calculating the dates $t + \Delta_{1,g(p)}, t + \Delta_{1,g(p)+1,...}, t + \Delta_{1,l(p)}$ of passage of the controlled disturbance load in front of the aisles $a_{g(p)}$ to $a_{l(p)}$, with $a_{l(p)}$ the last aisle, in the direction of displacement of the collector, in front of which the monitored disturbance load passes;
>> c) if none of the dates $t + \Delta_{1,g(p)}, t + \Delta_{1,g(p)+1},...., t + \Delta_{1,l(p)}$ belongs respectively to the sets $V_{g(p)}$, $\Delta_{1,g(p)+1}, ... , V_{l(p)}$, calculating a fictitious date of passage $start_p$ of the controlled disturbance load p in front of the aisle $a_1$, with the following formula: $start_p = t$;
>> d) if one of the dates $t + \Delta_{1,g(p)}, t + \Delta_{1,g(p)+1},...., t + \Delta_{1,l(p)}$ belongs respectively to one of the sets $V_{g(p)}$, $V_{g(p)+1}, ... , V_{l(p)}$, incrementing t by one unit and repeating steps b), c) and d) with the new value of t;

- controlling (494) the monitoring means, for an injection on the date $start_p + \Delta_{1,g(p)}$ of each monitored disturbance load $p$ in front of the aisle $a_{g(p)}$.

6. The method according to any one of claims 1 to 5, wherein the date $t_0$ is calculated with the following formula: $t_0 = \max\{\Delta_i + 1 - \sigma(u)\}$, with: $u = a_i(j) \in L'$

    - $u = a_i(j) \in L'$, a payload of a set $L'$ comprising payloads placed in the first position of the aisles located, following the direction of displacement of the collector, from the aisle $a_i$ to the aisle $a_{i_1}$ containing the first payload $\sigma_1$ of the output sequence $\sigma$.

7. The method according to any one of claims 1 to 6, **characterised in that** it is executed iteratively, each new execution being performed at a new time Tb calculated with the following formula: $Tb = T(u_{last}) - \Delta_1 + \Delta_{ilast}$, with $u_{last} = a_{ilast}(j^{last})$ a last payload, originating from the $(j^{last})^{th}$ position in the aisle $a_{ilast}$, of the output sequence $\sigma$ of a previous execution at a previous time Tb.

8. The method according to any one of claims 1 to 6, **characterised in that** it is executed iteratively, each new execution being performed at a new time Tb defined as a time at which no load of the output sequence $\sigma$ of a previous execution at a previous time Tb is in a portion of the collector ranging from the first aisle $a_1$ to the aisle $a_{i_1}$ containing the first load of the output sequence $\sigma$ of the new execution at the new time Tb.

9. The method according to any one of claims 1 to 6, **characterised in that** it is executed iteratively, each new execution being performed at a new time Tb calculated with the following formula: $Tb = Max(Tb + 1, T(U_{last}) - \Delta_1 + \Delta_{ilast})$, with:

    - $U_{last} = a_{ilast}(j^{last})$ a last payload, originating from the $(j^{last})^{th}$ position in the aisle $a_{ilast}$, of the output sequence $\sigma$ of a previous execution at a previous time Tb, and
    - $(Tb + 1)$ obtained by incrementing the previous time Tb by one unit.

ETAPE **0**

ETAPE **1**

Flux définitif du collecteur

ETAPE **2**

Fig. 1

Fig. 2

$2_2$

$1$

$6$

Fig. 3

$a_3$

| id34 |
| --- |
| id33 |
| id32 |
| id31 |

$a_2$

| id23 |
| --- |
| id22 |
| id21 |

$a_1$

| id12 |
| --- |
| id11 |

$2_1$

Collecteur

**1**

Fig. 4

$a_3$

| 8 |
| --- |
| 7 |
| 6 |
| 2 |

$a_2$

| 5 |
| --- |
| 3 |
| 1 |

$a_1$

| 9 |
| --- |
| 4 |

Fig. 5

Fig. 6

Fig. 7

Fig. 8

45

Fig. 9

Fig. 10

Fig. 11

$\Delta_2 = 2.5$

$\Delta_1 = 5.75$

Fig. 12

Fig. 13

Fig. 14

| Temps | | 0 | | $t_0$ | | | 5 | | | | | | |
|---|---|---|---|---|---|---|---|---|---|---|---|---|---|
| $M_1$ | | 2 | | 4 | | | | | | | | | |
| $M_2$ | | 1 | 2 | | 4 | | 6 | 7 | | | | | |
| $M_3$ | | | 1 | 2 | | 4 | 5 | 6 | 7 | | 9 | | |
| $M_4$ | | | | 1 | 2 | 3 | 4 | 5 | 6 | 7 | 8 | 9 | |

Séquence finale souhaitée σ

Fig. 15

Fig. 18

**a₄** → box: 8 / 3

**a₃** → box: 9 / 5

**a₂** → box: 7 / 6 / 1

**a₁** → box: 4 / 2

Fig. 16

Temps 0     5     $t_0$

| | | | | | | | | | | | | | | | | | | | | |
|---|---|---|---|---|---|---|---|---|---|---|---|---|---|---|---|---|---|---|---|---|
| **M1** | 2 | | 4 | | | | | | | | | | | | | | | | | |
| | | 2 | | 4 | | | | | | | | | | | | | | | | |
| | | | 2 | | 4 | | | | | | | | | | | | | | | |
| | | | | 2 | | 4 | | | | | | | | | | | | | | |
| **M2** | | | | | 1 | 2 | | 4 | | 6 | 7 | | | | | | | | | |
| | | | | | | 1 | 2 | | 4 | | 6 | 7 | | | | | | | | |
| | | | | | | | 1 | 2 | | 4 | | 6 | 7 | | | | | | | |
| **M3** | | | | | | | | 1 | 2 | | 4 | 5 | 6 | 7 | | 9 | | | | |
| | | | | | | | | 1 | 2 | | 4 | 5 | 6 | 7 | | 9 | | | | |
| | | | | | | | | | 1 | 2 | | 4 | 5 | 6 | 7 | | 9 | | | |
| | | | | | | | | | | 1 | 2 | | 4 | 5 | 6 | 7 | | 9 | | |
| | | | | | | | | | | | 1 | 2 | | 4 | 5 | 6 | 7 | | 9 | |
| **M4** | | | | | | | | | | | | 1 | 2 | 3 | 4 | 5 | 6 | 7 | 8 | 9 |

Séquence finale souhaitée σ

Fig. 17

$a_2$ $a_1$

| $a_2$ | $a_1$ |
|-------|-------|
| 10    | 3     |
| 2     | 9     |
| 5     | 1     |
| 4     | 6     |
| 8     | 7     |

Fig. 19

$a_2$ $a_1$

| $a_2$ | $a_1$ |
|-------|-------|
| 10    | 9     |
| 4     | 8     |
| 3     | 7     |
| 2     | 6     |
| 1     | 5     |

Fig. 20

Fig. 21

Fig. 22

Fig. 23

Fig. 24

Fig. 25

Fig. 26

Fig. 27

$a_i$

Fig. 28

$a_i$

Fig. 29

$a_i$

Fig. 30

Fig. 31

Fig. 32

EP 3 816 896 B1

a₃

| 8 | Temps 10 |
| 7 | Temps 9 |
| 6 | Temps 8 |
| 2 | Temps 4 |

a₁

a₂

| 5 | Temps 4 |
| 3 | Temps 2 |

| | |
| | |
| 9 | Temps 5 |

Pas de traitement du batch suivant

| x | x | x | 1 | 2 | 3 | 4 | 5 | 6 | 7 | 8 | 9 |

a₃

| | |
| 8 | Temps 10 |
| 7 | Temps 9 |
| 6 | Temps 8 |

a₂

| | |
| | |
| | |

a₁

| | |
| | |
| 9 | |

Pas de traitement du batch suivant

| 1 | 2 | 3 | 4 | 5 | 6 | 7 | 8 | 9 | | | | |

## Fig. 33

a₃

| 3 | |
| 8 | Temps 10 |
| 7 | Temps 9 |
| 6 | Temps 8 |

a₂

| 5 |
| 2 |
| 1 |

a₁

| 6 |
| 4 |
| 9 |

Traitement du batch suivant composé de 6 charges

| 2 | 3 | 4 | 5 | 6 | 7 | 8 | 9 | 1 | 2 | 3 | 4 | 5 | 6 | |

## Fig. 34

Fig. 35

Fig. 36

Fig. 37

Fig. 38

EP 3 816 896 B1

Temps    0                    5                              $t_0$

| M1 | M2 | M3 | M4 rows |
|----|----|----|----|

| Ligne | | | | | | | | | | | | | | | | | | | | |
|---|---|---|---|---|---|---|---|---|---|---|---|---|---|---|---|---|---|---|---|---|
| **M1** | 2 | A | B | 4 | | | C | | | | | | | | | | | | | |
| | | 2 | A | B | 4 | | | C | | | | | | | | | | | | |
| | | | 2 | A | B | 4 | | | C | | | | | | | | | | | |
| | | | | 2 | A | B | 4 | | | C | | | | | | | | | | |
| **M2** | | | | 1 | 2 | A | B | 4 | | 6 | C | 7 | | | | | | | | |
| | | | | | 1 | 2 | | | 4 | | 6 | C | 7 | | | | | | | |
| | | | | | | 1 | 2 | | | 4 | | 6 | C | 7 | | | | | | |
| **M3** | | | | | | | 1 | 2 | | | 4 | 5 | 6 | C | 7 | | 9 | | | |
| | | | | | | | 1 | 2 | | | | 4 | 5 | 6 | | 7 | | 9 | | |
| | | | | | | | | 1 | 2 | | | | 4 | 5 | 6 | | 7 | | 9 | |
| | | | | | | | | | 1 | 2 | | | | 4 | 5 | 6 | | 7 | | 9 |
| | | | | | | | | | | 1 | 2 | | | | 4 | 5 | 6 | | 7 | 9 |
| **M4** | | | | | | | | | | 1 | 2 | 3 | x | 4 | 5 | 6 | x | 7 | 8 | 9 |

Séquence finale souhaitée σ avec deux trous

<u>Fig. 39</u>

EP 3 816 896 B1

Fig. 40

EP 3 816 896 B1

Fig. 41

Séquence finale souhaitée σ

Fig. 42

EP 3 816 896 B1

Temps

| M1 | 0 | | | | | 5 | | | | | $t_0$ | | | | | | | | | | | |
|---|---|---|---|---|---|---|---|---|---|---|---|---|---|---|---|---|---|---|---|---|---|---|
| **M1** | 2 | A | 4 | B | | | C | | | | | | | | | | | | | | | |
| | | 2 | A | 4 | B | | | C | | | | | | | | | | | | | | |
| | | | 2 | A | 4 | B | | | C | | | | | | | | | | | | | |
| | | | | 2 | A | 4 | B | | | C | | | | | | | | | | | | |
| **M2** | | | | | 1 | 2 | A | 4 | B | 6 | 7 | C | | | | | | | | | | |
| | | | | | | 1 | 2 | | 4 | | | 6 | 7 | C | | | | | | | | |
| | | | | | | | 1 | 2 | | 4 | | | 6 | 7 | C | | | | | | | |
| **M3** | | | | | | | | 1 | 2 | | 4 | 5 | 6 | 7 | C | 9 | | | | | | |
| | | | | | | | | 1 | 2 | | 4 | 5 | 6 | 7 | | 9 | | | | | | |
| | | | | | | | | | 1 | 2 | | 4 | 5 | 6 | 7 | | 9 | | | | | |
| | | | | | | | | | | 1 | 2 | | 4 | 5 | 6 | 7 | | 9 | | | | |
| | | | | | | | | | | | 1 | 2 | | 4 | 5 | 6 | 7 | | 9 | | | |
| **M4** | | | | | | | | | | | | 1 | 2 | 3 | 4 | 5 | 6 | 7 | 8 | 9 | | |

Séquence finale souhaitée σ sans trou

EP 3 816 896 B1

Fig. 43

90    91

94    95

92    93    930

Fig. 44

461

462

463

464

Fig. 46

Fig. 45

471

472

473

474

475

476

477

478

Fig. 47

481

482

483

484

Fig. 48

491

492

493

494

Fig. 49

$5_2$

$2_2$

$4_3$

$4_2$

$4_1$

$5_1$

$2_1$

3

1

4

Fig. 50

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013150080 A

**Littérature non-brevet citée dans la description**

- **DE KOSTER, R. ; LE-DUC, T. ; ROODBERGEN, K.J.** Design and control of warehouse order picking: a literature review. *European Journal of Operational Research,* 2007, vol. 182 (2), 481-501
- A tutorial survey of Job Shop scheduling problems using genetic algorithls --- Partie I. **RUNWEY CHENG ; MITSUO GEN ; YASUHIRO TSUJIMURA.** Représentation. Ashikaga Institute of Technology
- **IMRAN ALI CHAUDHRY ; ABID ALI KHAN.** A research survey: review of flexible job shop scheduling techniques. *International transactions in opération research,* 2015